# EUROPEAN PATENT APPLICATION

(11) **EP 4 730 082 A1**
(43) Date of publication of application: **22.04.2026**
(21) Application number: 24864309.0
(22) Date of filing: 01.08.2024
(51) Int. Cl.: G06F 1/3234

(54) **LAYER COMPOSITION METHOD, TERMINAL DEVICE, AND STORAGE MEDIUM**

(30) Priority: 13.09.2023 CN 202311187697
(71) Applicant: Honor Device Co., Ltd., Shenzhen, Guangdong 518040 (CN)
(72) Inventor: DU, Hongyan, Shenzhen, Guangdong 518040 (CN); LI, Yujing, Shenzhen, Guangdong 518040 (CN)
(74) Representative: Henselmann, Alexander Gerhard
(86) International application number: PCT/CN2024/109149
(87) International publication number: WO 2025/055586

(57) **Abstract**

This application provides a layer composition method, a terminal device, and a storage medium, and relates to the field of terminal technologies. In this solution, in a process in which a user uses a large screen, the terminal device may recognize each to-be-composed layer, to determine whether the layer needs to be preprocessed by using a GPU, such as wallpaper layer rotation. If preprocessing needs to be performed by using the GPU, a preprocessed layer is rendered by using the GPU, and the preprocessed layer is stored into a buffer. When a same layer processing task exists subsequently, the preprocessed layer in the buffer can be directly sent to an HWC for hardware composition, without using GPU composition, thereby reducing overall power consumption and load of the terminal device and improving overall performance.

## Description

This application claims priority to Chinese Patent Application No. 202311187697.3, filed with the China National Intellectual Property Administration on September 13, 2023 and entitled "LAYER COMPOSITION METHOD, TERMINAL DEVICE, AND STORAGE MEDIUM", which is incorporated herein by reference in its entirety.

### TECHNICAL FIELD

This application relates to the field of terminal technologies, and in particular, to a layer composition method, a terminal device, and a storage medium.

### BACKGROUND

A large-screen device is increasingly widely used. In a process in which a user uses a large-screen device, a screen direction may be adjusted at any time. The large-screen device may rotate a wallpaper resource, so that wallpaper directions before and after the screen direction is adjusted are consistent when seen from a visual angle of the user.

Currently, most large-screen devices use a large-size high-definition wallpaper. When a height of the wallpaper resource exceeds a maximum rotation height supported by a hardware composer (hardware composer, HWC), graphics processing unit (graphics processing unit, GPU) composition may be used. The GPU first rotates the wallpaper resource by 90°, then sends a rotated wallpaper resource to the HWC for hardware composition, and then sends the wallpaper resource to the large screen for display, so that the user sees that the wallpaper directions before and after the screen direction is adjusted are consistent. However, composition by using the GPU has a disadvantage of high power consumption. When a plurality of frames of images are obtained through composition based on a same wallpaper resource, the GPU may need to perform a plurality of rotation operations on the same wallpaper resource, thereby causing overall high power consumption and poor performance of a large-screen device.

### SUMMARY

This application provides a layer composition method, a terminal device, and a storage medium, so as to resolve a technical problem that the terminal device has overall high power consumption and poor performance due to frequent rotation of a wallpaper layer by a GPU.

To achieve the foregoing objective, the following technical solutions are used in this application:
According to a first aspect, an embodiment of this application provides a layer composition method. The method may be applied to a terminal device. In an example in which the terminal device is a foldable-screen device, the foldable-screen device may include a GPU, an HWC, a large screen, and a small screen. The method may include:
when the foldable-screen device is at a first folding angle (that is, a folded state), if a first wallpaper layer is obtained, composing the first wallpaper layer, a first home screen layer, and a first status bar layer into a first image, and displaying the first image on the small screen; if an operation of adjusting the foldable-screen device from the first folding angle to a second folding angle (for example, switching from the folded state to an unfolded state) by a user is received, obtaining the first wallpaper layer in response to the operation, rotating the first wallpaper layer by using the GPU to obtain a first preprocessed layer, composing the first preprocessed layer, a second home screen layer, and a second status bar layer into a second image, storing the first preprocessed layer into a first buffer, and displaying the second image on the large screen; and in a process of maintaining the unfolded state, obtaining the first preprocessed layer from the first buffer, composing the first preprocessed layer, a third home screen layer, and a third status bar layer into a third image, and displaying the third image on the large screen.

The second folding angle is greater than the first folding angle. The first folding angle is less than or equal to a first preset angle, the first preset angle may be 30°, 45°, or the like, the second folding angle is greater than or equal to a second preset angle, and the second preset angle may be 90°, 120°, or the like.

In the foregoing solution, when the foldable-screen device is in the folded state, an installation direction of the small screen is consistent with a wallpaper direction, so that a wallpaper layer does not need to be rotated, and a composed image of the wallpaper layer and another layer is directly displayed on the small screen. When the foldable-screen device switches from the folded state to the unfolded state, an installation direction of the large screen is inconsistent with the wallpaper direction, and a height of the first wallpaper layer is greater than a maximum rotation height supported by the HWC. Therefore, the GPU needs to perform a rotation operation on the first wallpaper layer in advance to obtain a preprocessed layer, and store the preprocessed layer into a buffer. In this way, when a same layer processing task exists, the preprocessed layer in the buffer may be directly sent to the HWC for hardware composition, without using the GPU to perform a rotation operation on the wallpaper layer, thereby reducing overall power consumption and load of the foldable-screen device, and improving overall performance of the foldable-screen device.

It should be noted that the first home screen layer, the second home screen layer, and the third home screen layer may be a same layer, or may be different layers. The first status bar layer, the second status bar layer, and the third status bar layer may be a same layer, or may be different layers. In addition, an execution sequence of "composing the first preprocessed layer, the second home screen layer, and the second status bar layer into the second image" and "storing the first preprocessed layer into the first buffer" is not specifically limited in this application. Both may be performed simultaneously, or "composing the first preprocessed layer, the second home screen layer, and the second status bar layer into the second image" may be performed before "storing the first preprocessed layer into the first buffer", or "storing the first preprocessed layer into the first buffer" may be performed before "composing the first preprocessed layer, the second home screen layer, and the second status bar layer into the second image".

In a possible implementation, the foldable-screen device is an inward foldable-screen device. The inward foldable-screen device is disposed with an inner screen and an outer screen. A size of the inner screen is greater than a size of the outer screen. Therefore, the inner screen is also referred to as a large screen, and the outer screen is also referred to as a small screen. The large screen may be bent into two display regions. When the inward foldable-screen device is in the folded state, a folding angle between the two display regions of the large screen is less than or equal to the first preset angle, the small screen faces the user, and the large screen is in a hidden state. When the inward foldable-screen device is in the unfolded state, the folding angle between the two display regions of the large screen is greater than or equal to the second preset angle, the large screen faces the user, and the small screen faces away from the user. In the folded state, the small screen displays the wallpaper. After switching from the folded state to the unfolded state, the large screen displays the wallpaper. The large screen and the small screen may use a same wallpaper resource.

In a possible implementation, the foldable-screen device is an outward foldable-screen device. A screen is disposed on the outward foldable-screen device, and the screen may be bent into at least two display regions. A relatively large display region in the at least two display regions is referred to as a primary screen, and a relatively small display region is referred to as a back screen or a secondary screen. Generally, the primary screen is also referred to as a small screen, and the primary screen and the back screen are collectively referred to as a large screen. When the outward foldable-screen device is in the folded state, a folding angle between the primary screen and the back screen is less than or equal to the first preset angle, the primary screen faces the user, and the back screen faces away from the user. When the outward foldable-screen device is in the unfolded state, the folding angle between the primary screen and the back screen is greater than or equal to the second preset angle, and the primary screen and the back screen face the user. In the folded state, the small screen displays the wallpaper. After switching from the folded state to the unfolded state, the large screen displays the wallpaper. The large screen and the small screen may use a same wallpaper resource.

In a possible implementation, in a case in which the foldable-screen device switches from the folded state to the unfolded state, the obtaining a first wallpaper layer includes: obtaining a first Vsync-SF signal; and if a second buffer is obtained before the first Vsync-SF signal is obtained, obtaining the first wallpaper layer from the second buffer. The second buffer is configured to store the first wallpaper layer.

In the foregoing solution, when a wallpaper of a wallpaper application changes, a changed wallpaper layer may be stored into the second buffer. In this way, when the first Vsync-SF signal is obtained, the wallpaper layer may be directly read from the second buffer.

In a possible implementation, after the first Vsync-SF signal is obtained, a second Vsync-SF signal may be further obtained. Then, after the first Vsync-SF signal is obtained, and before the second Vsync-SF signal is obtained, a SurfaceFlinger determines whether another buffer different from the second buffer is obtained. The another buffer is a buffer into which another wallpaper layer is stored. In one case, if no other buffer is obtained before the second Vsync-SF signal is obtained, the first preprocessed layer is obtained from the first buffer. In another case, if a third buffer is obtained before the second Vsync-SF signal is obtained, a second wallpaper layer is obtained from the third buffer, the second wallpaper layer is rotated by using the GPU to obtain a second preprocessed layer (a height of the second wallpaper layer is greater than the maximum rotation height supported by the HWC), and the second preprocessed layer is stored into a fourth buffer; the second preprocessed layer, a fourth home screen layer, and a fourth status bar layer are composed into a fourth image; and the fourth image is displayed on the large screen. The second Vsync-SF signal is a signal generated after the first Vsync-SF signal. There are N Vsync-SF signal periods between the second Vsync-SF signal and the first Vsync-SF signal, and N is a positive integer.

In the foregoing solution, when the wallpaper resource is a video resource, during playback from a first frame of the video resource to a last frame of the video resource, the wallpaper is updated frequently, and after rotating each frame of wallpaper, the GPU may temporarily store the wallpaper into a buffer. After the first Vsync-SF signal is obtained, before the second Vsync-SF signal is obtained (that is, within m Vsync periods after playing to a specific frame), if a new wallpaper layer is not obtained, which indicates that the last frame of the video resource has been played to, the preprocessed layer in the buffer may be used.

In a possible implementation, a row scanning direction of the small screen is parallel to a first border, and a column scanning direction of the small screen is parallel to a second border; and a row scanning direction of the large screen is parallel to the second border, and a column scanning direction of the large screen is parallel to the first border; where the first border and the second border are two adjacent borders on a body of the foldable-screen device, and a length of the first border is less than a length of the second border.

In the foregoing solution, the installation directions of the small screen and the large screen are inconsistent, and the display directions of the small screen and the wallpaper resource are consistent. Therefore, the small screen does not need to rotate the wallpaper, and the large screen needs to rotate the wallpaper.

According to a second aspect, an embodiment of this application provides a layer composition method. The method may be applied to a terminal device. The terminal device may be a large-screen device, such as a foldable-screen device or a PAD. The large-screen device may include a GPU, an HWC, and a large screen. The method may include:
when the large-screen device is in a landscape state, if a first wallpaper layer is obtained, composing the first wallpaper layer, a first home screen layer, and a first status bar layer into a first image, and displaying the first image on the large screen; if an operation of adjusting the large-screen device from the landscape state to a portrait state by a user is obtained, obtaining the first wallpaper layer in response to the operation, rotating the first wallpaper layer by using the GPU to obtain a first preprocessed layer, composing the first preprocessed layer, a second home screen layer, and a second status bar layer into a second image, storing the first preprocessed layer into a first buffer, and displaying the second image on the large screen; and then, in a process of maintaining the portrait state, obtaining the first preprocessed layer from the first buffer, composing the first preprocessed layer, a third home screen layer, and a third status bar layer into a third image, and displaying the third image on the large screen.

In the foregoing solution, when the large-screen device is in the landscape state, a display direction of the large screen is consistent with a wallpaper direction, so that a wallpaper layer does not need to be rotated, and a composed image of the wallpaper layer and another layer is directly displayed on the large-screen. When the large-screen device is adjusted from the landscape state to the portrait state, the display direction of the large screen is inconsistent with the wallpaper direction, and the wallpaper layer needs to be rotated. The GPU may perform a rotation operation on the first wallpaper layer to obtain a preprocessed layer, and store the preprocessed layer into a buffer. Therefore, when a same layer processing task exists, the preprocessed layer in the buffer may be directly sent to the HWC for hardware composition, without using GPU composition, thereby reducing overall power consumption and load of the large-screen device, and improving overall performance of the large-screen device.

In a possible implementation, in a case in which the landscape state is adjusted to the portrait state, the obtaining a first wallpaper layer includes: obtaining a first Vsync-SF signal; and if a second buffer is obtained before the first Vsync-SF signal is obtained, obtaining the first wallpaper layer from the second buffer. The second buffer is configured to store the first wallpaper layer.

In a possible implementation, after the first Vsync-SF signal is obtained, a second Vsync-SF signal may be further obtained. Then, after the first Vsync-SF signal is obtained, and before the second Vsync-SF signal is obtained, a SurfaceFlinger determines whether another buffer different from the second buffer is obtained. The another buffer is a buffer into which another wallpaper layer is stored. In one case, if no other buffer is obtained before the second Vsync-SF signal is obtained, the first preprocessed layer is obtained from the first buffer. In another case, if a third buffer is obtained before the second Vsync-SF signal is obtained, a second wallpaper layer is obtained from the third buffer, the second wallpaper layer is rotated by using the GPU to obtain a second preprocessed layer (a height of the second wallpaper layer is greater than the maximum rotation height supported by the HWC), and the second preprocessed layer is stored into a fourth buffer; the second preprocessed layer, a fourth home screen layer, and a fourth status bar layer are composed into a fourth image; and the fourth image is displayed on the large screen. The second Vsync-SF signal is a signal generated after the first Vsync-SF signal. There are N Vsync-SF signal periods between the second Vsync-SF signal and the first Vsync-SF signal, and N is a positive integer.

In the foregoing solution, when the wallpaper resource is a video resource, during playback from a first frame of the video resource to a last frame of the video resource, the wallpaper is updated frequently, and after rotating each frame of wallpaper, the GPU may temporarily store the wallpaper into a buffer. After the first Vsync-SF signal is obtained, before the second Vsync-SF signal is obtained (that is, within m Vsync periods after playing to a specific frame), if a new wallpaper layer is not obtained, which indicates that the last frame of the video resource has been played to, the preprocessed layer in the buffer may be used.

In a possible implementation, a row scanning direction of the large screen is parallel to the second border, and a column scanning direction of the large screen is parallel to the first border; where the first border and the second border are two adjacent borders on a body of the large-screen device, and a length of the first border is less than a length of the second border.

According to a third aspect, an embodiment of this application provides a layer composition method. The method may be applied to a terminal device. In an example in which the terminal device is a foldable-screen device, the foldable-screen device may include a GPU, an HWC, a large screen, and a small screen. The method may include:
when the foldable-screen device is at a first folding angle (in an unfolded state), if a first wallpaper layer is obtained, rotating the first wallpaper layer by using the GPU to obtain a first preprocessed layer, composing the first preprocessed layer, a first home screen layer, and a first status bar layer into a first image, storing the first preprocessed layer into a first buffer, and displaying the first image on the large screen; in a process of maintaining the first folding angle, obtaining the first preprocessed layer from the first buffer, composing the first preprocessed layer, a second home screen layer, and a second status bar layer into a second image, and displaying the second image on the large screen;
if an operation of adjusting the foldable-screen device from the first folding angle to a second folding angle (the second folding angle is not equal to the first folding angle, and the foldable-screen device is still in the unfolded state) by a user is received, obtaining a second wallpaper layer in response to the operation, rotating the second wallpaper layer by using the GPU to obtain a second preprocessed layer, composing the second preprocessed layer, a third home screen layer, and a third status bar layer into a third image, storing the second preprocessed layer into a second buffer, and displaying the third image on the large screen; and in a process of maintaining the second folding angle, obtaining the second preprocessed layer from the second buffer, composing the second preprocessed layer, a fourth home screen layer, and a fourth status bar layer into a fourth image, and displaying the fourth image on the large screen.

In the foregoing solution, in a process in which the foldable-screen device is in the unfolded state, if a folding angle is increased or decreased, the wallpaper layer is updated, the GPU performs a rotation operation on a new wallpaper layer in advance to obtain a preprocessed layer, and stores the preprocessed layer into a buffer. Therefore, the preprocessed layer in the buffer may be directly sent to the HWC for hardware composition, without using GPU composition, thereby reducing overall power consumption and load of the foldable-screen device, and improving overall performance of the foldable-screen device.

In a possible implementation, when the foldable-screen device is at the first folding angle, the obtaining a first wallpaper layer includes: obtaining a first Vsync-SF signal; and if a buffer a is obtained before the first Vsync-SF signal is obtained, obtaining the first wallpaper layer from the buffer a. The buffer a is configured to store the first wallpaper layer.

Correspondingly, after the first Vsync-SF signal is obtained, a second Vsync-SF signal may be further obtained. Then, after the first Vsync-SF signal is obtained, and before the second Vsync-SF signal is obtained, a SurfaceFlinger determines whether another buffer different from the buffer a is obtained. The another buffer is a buffer into which another wallpaper layer is stored. If no other buffer is obtained before the second Vsync-SF signal is obtained, the first preprocessed layer is obtained from the first buffer.

In a possible implementation, the obtaining the second wallpaper layer when the foldable-screen device is at the second folding angle includes: obtaining a third Vsync-SF signal; and if a buffer b is obtained before the third Vsync-SF signal is obtained, obtaining the second wallpaper layer from the buffer b. The buffer b is configured to store the second wallpaper layer.

Correspondingly, after the third Vsync-SF signal is obtained, a fourth Vsync-SF signal may be further obtained. Then, after the third Vsync-SF signal is obtained, and before the fourth Vsync-SF signal is obtained, a SurfaceFlinger determines whether another buffer different from the buffer b is obtained. The another buffer is a buffer into which another wallpaper layer is stored. If no other buffer is obtained before the fourth Vsync-SF signal is obtained, the second preprocessed layer is obtained from the second buffer.

In a possible implementation, a row scanning direction of the small screen is parallel to a first border, and a column scanning direction of the small screen is parallel to a second border; and a row scanning direction of the large screen is parallel to the second border, and a column scanning direction of the large screen is parallel to the first border; where the first border and the second border are two adjacent borders on a body of the foldable-screen device, and a length of the first border is less than a length of the second border.

According to a fourth aspect, an embodiment of this application provides a layer composition method. The method may be applied to a terminal device. The terminal device is disposed with a GPU, an HWC, and a display screen. For example, the terminal device may be a foldable-screen device or a large-screen device. The method may include: obtaining a first wallpaper layer, where a height of the first wallpaper layer is greater than a maximum rotation height supported by the HWC; rotating the first wallpaper layer by using the GPU to obtain a first preprocessed layer; composing the first preprocessed layer, a first home screen layer, and a first status bar layer into a first image; storing the first preprocessed layer into a first buffer; displaying the first image on the display screen; obtaining the first preprocessed layer from the first buffer; composing the first preprocessed layer, a second home screen layer, and a second status bar layer into a second image; and displaying the second image on the display screen.

In the foregoing solution, when the terminal device obtains the first wallpaper layer for the first time, and the height of the first wallpaper layer is greater than the maximum rotation height supported by the HWC, the GPU may perform a rotation operation on the first wallpaper layer to obtain a preprocessed layer, and store the preprocessed layer into a buffer. The GPU performs a rotation operation on the first wallpaper layer in advance to obtain the preprocessed layer, and stores the preprocessed layer into the buffer. Therefore, when the terminal device obtains a composition task of the first wallpaper layer again, the preprocessed layer in the buffer may be directly sent to the HWC for hardware composition without using GPU composition, thereby reducing overall power consumption and load of the terminal device, and improving overall performance of the terminal device.

In a possible implementation, the obtaining a first wallpaper layer includes: obtaining a first Vsync-SF signal; and if a second buffer is obtained before the first Vsync-SF signal is obtained, obtaining the first wallpaper layer from the second buffer. Correspondingly, the obtaining the first preprocessed layer from the first buffer includes: obtaining a second Vsync-SF signal; and if no other buffer is obtained before the second Vsync-SF signal is obtained, obtaining the first preprocessed layer from the first buffer.

In a possible implementation, after the second Vsync-SF signal is obtained, the method further includes: if a third buffer is obtained before the second Vsync-SF signal is obtained, obtaining a second wallpaper layer from the third buffer; rotating the second wallpaper layer by using the GPU to obtain a second preprocessed layer, where a height of the second wallpaper layer is greater than the maximum rotation height supported by the HWC; storing the second preprocessed layer into a fourth buffer; composing the second preprocessed layer, a third home screen layer, and a third status bar layer into a third image; and displaying the third image on the display screen.

In a possible implementation, the screen of the terminal device may use a horizontal installation manner. For example, a row scanning direction of the display screen is parallel to a second border, and a column scanning direction of the display screen is parallel to a first border. The first border and the second border are two adjacent borders on a body of the terminal device, and a length of the first border is less than a length of the second border.

In the foregoing solution, because a direction of a wallpaper resource is consistent with the landscape state, the wallpaper resource needs to be rotated first in the portrait state, and then a rotated wallpaper is sent to the screen for display, so that a direction of the wallpaper displayed on a small screen and a direction of the wallpaper displayed on a large screen are consistent from a visual angle of the user, thereby improving user experience.

In a possible implementation, the obtaining the first wallpaper layer from the second buffer includes: obtaining the first wallpaper layer and layer information of the first wallpaper layer from the second buffer, where the layer information of the first wallpaper layer includes a first status bit and a rotation parameter, the first status bit is used to indicate that a rotation operation has not been performed on the first wallpaper layer, and the rotation parameter is used to indicate a rotation direction and a rotation angle. Correspondingly, the rotating the first wallpaper layer by using the GPU to obtain a first preprocessed layer includes: rotating the first wallpaper layer by using the GPU based on the first status bit and the rotation parameter, to obtain the first preprocessed layer.

In a possible implementation, before the first wallpaper layer is obtained, the method further includes: determining a rotation parameter when a preset condition is met; sending a rotation parameter to a wallpaper application of the terminal device; and generating a first status bit by using the wallpaper application, and storing the first status bit, the rotation parameter, and the first wallpaper layer into the second buffer. The first status bit is used to indicate that a rotation operation has not been performed on a resource of the first wallpaper layer. For example, a status bar layer and a home screen layer are layers that are drawn by an application and have been rotated, and the status bit is identified by using "rotated". For another example, the wallpaper layer and a video layer are layers that are read by using a video codec and that are not rotated, and the status bits are identified by using "not rotated". The rotation parameter is used to indicate the rotation direction and the rotation angle, for example, rotating by 90° counterclockwise or rotating by 90° clockwise. The preset condition includes any one of the following: the display screen switches from the landscape state to the portrait state; and the terminal device is a foldable-screen device, and the foldable-screen device switches from a folded state to an unfolded state.

In the foregoing solution, the wallpaper application writes the first status bit and the rotation parameter into the buffer, so that the SurfaceFlinger determines, according to the first status bit and the rotation parameter, whether to rotate the wallpaper layer, how to rotate the wallpaper layer, and the like.

In a possible implementation, the method may further include: enabling a landscape/portrait function in response to a user operation; where the landscape/portrait function allows display in a first direction when the terminal device is in the landscape state, and display in a second direction when the terminal device is in the portrait state; and a difference between the first direction and the second direction is 90° or 270° clockwise.

In a possible implementation, when the terminal device is in the landscape state, an included angle between a first border of a body of the terminal device and a ground plane is greater than an included angle between a second border of the body of the terminal device and the ground plane; and when the terminal device is in the portrait state, the included angle between the first border and the ground plane is less than or equal to the included angle between the second border and the ground plane; where a length of the first border is less than a length of the second border.

In a possible implementation, the layer information of the wallpaper layer may further include a layer stacking order of the first wallpaper layer; the composing the first preprocessed layer, a first home screen layer, and a first status bar layer into a first image includes: stacking the first preprocessed layer, the first home screen layer, and the first status bar layer into the first image according to the layer stacking order of the first wallpaper layer, a layer stacking order of the first home screen layer, and a layer stacking order of the first status bar layer; and the composing the first preprocessed layer, a second home screen layer, and a second status bar layer into a second image includes: stacking the first preprocessed layer, the second home screen layer, and the second status bar layer into the second image according to the layer stacking order of the first wallpaper layer, a layer stacking order of the second home screen layer, and a layer stacking order of the second status bar layer.

In the foregoing solution, each application writes a layer stacking order into a buffer corresponding to the application, so that the SurfaceFlinger can determine a composition manner according to the layer stacking order of each layer.

In a possible implementation, before the first wallpaper layer is rotated by using the GPU, the method may further include: determining that the first wallpaper layer is an initial frame or a changed frame of a wallpaper resource. The initial frame means that another wallpaper layer of the wallpaper resource has not been obtained before the first wallpaper layer is obtained. The changed frame means that another wallpaper layer of the wallpaper resource has been obtained before the first wallpaper layer is obtained, and the another wallpaper layer is different from the first wallpaper layer. That the first wallpaper layer is a layer 1 is used as an example. The initial frame means that before the SurfaceFlinger receives a composition task of the layer 1, another wallpaper layer is not stored in a buffer corresponding to the wallpaper application, that is, the layer 1 is an initial composition task of the wallpaper application received by the SurfaceFlinger. The changed frame means that before receiving the composition task of the layer 1, the SurfaceFlinger has received a composition task of another layer of the wallpaper application, and the another layer and the layer 1 are stored into different buffers.

In the foregoing solution, whether a wallpaper layer needs to be preprocessed may be determined by determining whether the wallpaper layer is an initial frame or a changed frame of a wallpaper resource. It should be understood that when a wallpaper layer is an initial frame or a changed frame of a wallpaper resource, a subsequent wallpaper layer and the wallpaper layer may be a same layer. Therefore, the wallpaper layer may be preprocessed, so that a preprocessed layer is directly used when a composition task of a same wallpaper layer exists.

In a possible implementation, before the first wallpaper layer is obtained at a second time, the method may further include: determining a rotation parameter when a preset condition is met; sending the rotation parameter to a wallpaper application, a home screen application, and a system user interface application; generating a first status bit by using the wallpaper application, and storing the first status bit, the rotation parameter, and a resource of the first wallpaper layer into the second buffer; generating a second status bit by using the home screen application, and storing the second status bit, the rotation parameter, and a resource of the second home screen layer into the third buffer, where the second status bit is used to indicate that a rotation operation has been performed on the resource of the second home screen layer; and generating a third status bit by using the system user interface application, and storing the third status bit, the rotation parameter, and a resource of the second status bar layer into the fourth buffer, where the third status bit is used to indicate that a rotation operation has been performed on the resource of the second status bar layer. The preset condition includes any one of the following: the screen of the terminal device switches from the landscape state to the portrait state; and the terminal device is a foldable-screen device, and the foldable-screen device switches from a folded state to an unfolded state.

In the foregoing solution, when the screen of the terminal device switches from the landscape state to the portrait state, or switches from the folded state to the unfolded state, a sensor of the terminal device may collect data such as a folding angle and an acceleration in real time, and send the data to a hardware configuration module. A screen management service may obtain information such as a screen direction, a window direction, and a folding status from the hardware configuration module. Further, a WMS may calculate a rotation parameter according to a screen installation direction and the landscape/portrait state of the current screen, and send the rotation parameter to each application. Each application may generate, according to a generation manner of a layer of the application, a status bit indicating whether a rotation operation has been performed on the layer. In this way, the SurfaceFlinger may determine, by using the status bit, whether each layer needs to be rotated.

According to a fifth aspect, this application provides an apparatus. The apparatus includes a unit configured to perform the method in the first aspect. The apparatus may correspondingly perform the layer composition method described in the first aspect. For related description of the unit in the apparatus, refer to the description in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a sixth aspect, this application provides a terminal device. For example, the terminal device may be a foldable-screen device or a large-screen device. The terminal device includes a memory and one or more processors. The memory is configured to store computer program code. The computer program code includes computer instructions. When the computer instructions are invoked by the processor, the terminal device is enabled to perform the layer composition method according to any one of the implementations of the first aspect.

According to a seventh aspect, this application provides a computer-readable storage medium. The computer-readable storage medium includes computer instructions. When the computer instructions run on a foldable-screen device, the foldable-screen device is enabled to perform the layer composition method according to the first aspect and any possible implementation of the first aspect.

According to an eighth aspect, this application provides a computer program product. When the computer program product runs on a computer, the computer is enabled to perform the layer composition method according to the first aspect and any possible implementation of the first aspect.

According to a ninth aspect, this application provides a chip system. The chip system includes one or more interface circuits and one or more processors. The interface circuit and the processor are connected through a line. The chip system may be applied to a foldable-screen device that includes a communication module and a memory. The interface circuit is configured to: receive a signal from the memory of the foldable-screen device, and send the received signal to the processor, where the signal includes computer instructions stored in the memory. When the processor invokes the computer instructions, the foldable-screen device may perform the layer composition method according to any implementation of the first aspect.

It may be understood that, for beneficial effects that can be achieved by the apparatus according to the fifth aspect, the terminal device according to the sixth aspect, the computer-readable storage medium according to the seventh aspect, the computer program product according to the eighth aspect, and the chip system according to the ninth aspect provided above, reference may be made to the beneficial effects in the first aspect and any one of the possible implementations of the first aspect. Details are not described herein again.

### BRIEF DESCRIPTION OF DRAWINGS

FIG. 1 is a schematic diagram of composing a plurality of layers into one frame of image according to an embodiment of this application;
FIG. 2A-FIG. 2C are schematic diagrams of an inward foldable-screen mobile phone according to an embodiment of this application;
FIG. 3A-FIG. 3C are schematic diagrams of an outward foldable-screen mobile phone according to an embodiment of this application;
FIG. 4A-FIG. 4G are schematic diagrams of a small screen, a large screen, a wallpaper, GPU composition, and HWC composition according to an embodiment of this application;
FIG. 5A(1) to FIG. 5B(3) are schematic diagrams of composing a plurality of layers into one frame of image and sending the image to a large screen for display according to an embodiment of this application;
FIG. 6A and FIG. 6B are a schematic diagram of sending a plurality of frames of images to a large screen for display according to an embodiment of this application;
FIG. 7 is a schematic diagram of an architecture of a foldable-screen device according to an embodiment of this application;
FIG. 8 is a schematic flowchart of a layer composition method based on intelligent scene recognition according to an embodiment of this application;
FIG. 9 is a schematic diagram of rendering a preprocessed layer by using a GPU according to an embodiment of this application;
FIG. 10A to FIG. 10D are a schematic diagram of composing a plurality of layers into one frame of images based on a preprocessed layer according to an embodiment of this application;
FIG. 11A(1) and FIG. 11A(2) are a schematic diagram of composing a video layer and a wallpaper layer into a plurality of frames of images based on a preprocessed layer according to an embodiment of this application;
FIG. 11B is a schematic diagram of composing a status bar layer and a wallpaper layer into a plurality of frames of images based on a preprocessed layer according to an embodiment of this application;
FIG. 12A to FIG. 12F are a schematic diagram of composing an Nth frame of image and an (N+1)th frame of image according to an embodiment of this application;
FIG. 13A to FIG. 13C are a schematic flowchart of another layer composition method based on intelligent scene recognition according to an embodiment of this application;
FIG. 14A(1) to FIG. 14A(3) are a schematic diagram of a scene of applying a preprocessed layer according to an embodiment of this application;
FIG. 14B(1) to FIG. 14B(3) are a schematic diagram of another scene of applying a preprocessed layer according to an embodiment of this application;
FIG. 14C(1) to FIG. 14C(4) are a schematic diagram of another scene of applying a preprocessed layer according to an embodiment of this application;
FIG. 14D is a schematic diagram of another scene of applying a preprocessed layer according to an embodiment of this application;
FIG. 15A and FIG. 15B are a schematic flowchart of another layer composition method based on intelligent scene recognition according to an embodiment of this application;
FIG. 16 is a schematic flowchart of another layer composition method based on intelligent scene recognition according to an embodiment of this application;
FIG. 17 is a schematic diagram of another scene of applying a preprocessed layer according to an embodiment of this application; and
FIG. 18 is a schematic diagram of a hardware structure of a foldable-screen device according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application.

In the descriptions of this application, unless otherwise specified, "/" means "or". For example, A/B may represent A or B. In the descriptions of this application, the term "and/or" is merely used to describe an association relationship between associated objects, and represents that three relationships may exist. For example, A and/or B may represent the following three cases: Only A exists, both A and B exist, and only B exists.

In the specification and the claims of this application, the terms "first", "second", and the like are intended to distinguish between different objects or distinguish between different processing on a same object, and are not used to describe a specific sequence of the objects. For example, a first frame and a first frame are used to distinguish between different video frames, but are not intended to indicate a particular order of the video frames. In embodiments of this application, "a plurality of" means two or more.

The following describes some terms in embodiments of this application.

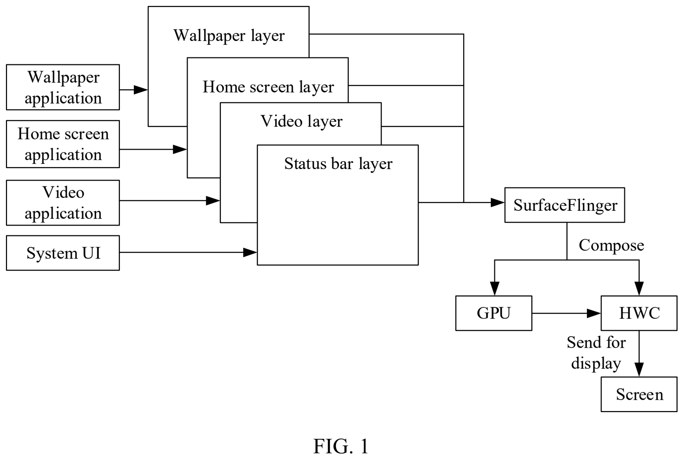

A picture displayed on a screen by a terminal device is generally composed by using a plurality of layers. For example, FIG. 1 shows a schematic diagram of composing a wallpaper layer, a home screen layer, a video layer, and a status bar (status bar) layer into one frame of image. Generally, the terminal device manages a rendering and composition process of a layer by using a system service called a surface manager (SurfaceFlinger). When each application needs to display a window, each application sends related information of the window to the SurfaceFlinger. After receiving the related information from a plurality of applications, the SurfaceFlinger completes operations such as rendering and composition by using a GPU and/or an HWC, finally obtains a to-be-displayed image, and sends this frame of image to the screen for display.

The foregoing GPU composition and HWC composition are two different image composition technologies.

The following provides an example for describing advantages and disadvantages of the two image composition technologies.

### 1) HWC composition

HWC composition is a hardware acceleration composition technology, and a hardware-level image composition function is used to improve performance and efficiency. In HWC composition, a task of image composition is executed by a hardware module, and may involve a small quantity of central processing unit (central processing unit, CPU) composition operations, without requiring a GPU to perform a software-level composition operation.

HWC composition has the following advantages: 1. Because of hardware acceleration, HWC composition can provide a higher frame rate and a smoother animation effect, that is, high performance. 2. By directly composing by using a hardware resource, HWC composition can reduce power consumption of the CPU and the GPU, that is, low power consumption. 3. HWC composition can quickly display graphic content of an application on a screen, and provide a faster user interface response time, that is, a real-time response.

However, the HWC hardware module is a hardware module in a system-on-a-chip (system-on-a-chip, SOC). HWC hardware modules provided by different manufacturers have different HWC composition specifications. Currently, the HWC hardware module has a condition limitation on an image. For example, some HWC hardware modules have a height limitation on an image when rotating the image. Some HWC hardware modules do not support output of a corner. Some HWC hardware modules have a limitation on a quantity of layers, a conversion format, a layer size, and a zoom ratio during composition. Some HWC hardware modules do not support window blur. When a layer composition requirement exceeds a capability range of the HWC hardware module, HWC composition cannot be used any more.

### 2) GPU composition

GPU composition is a software-based image composition technology. Therefore, GPU composition is also referred to as software composition. GPU composition uses a GPU to perform a graphics composition operation. In GPU composition, a graphics operation of an application is sent by a CPU to a GPU, then the GPU performs a composition operation on a software layer, and then transmits composed image data to an HWC for hardware composition, and the HWC sends the data to the screen for display.

GPU composition is flexible. Due to software-based implementations, GPU composition can support more complex graphics composition operations such as rotation, special effects, filters, transform, and corner clipping. When a layer composition requirement does not exceed the capability range of the HWC hardware module, HWC composition can be used. When the layer composition requirement exceeds the capability range of the HWC hardware module, GPU composition may be used. However, GPU composition has a disadvantage of high power consumption, and performance of GPU composition is lower than that of HWC composition.

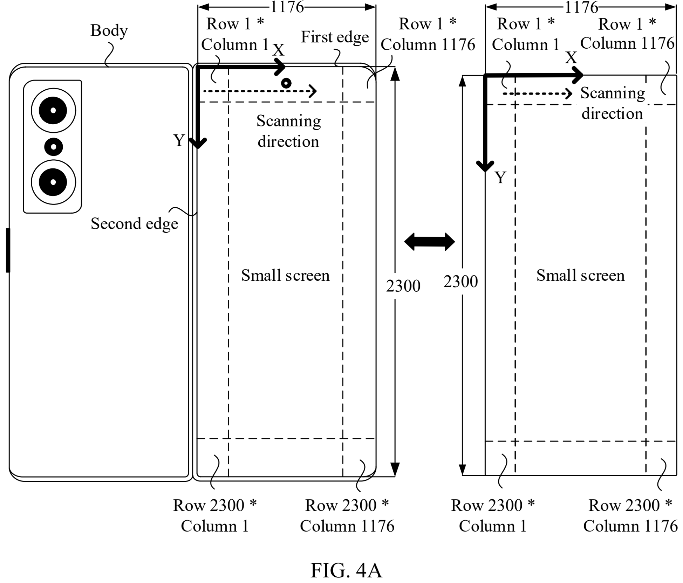

Currently, a high-definition dynamic wallpaper is set in most terminal devices. A resolution of the high-definition dynamic wallpaper is relatively large. If a horizontal installation manner is used on the screen, the high-definition dynamic wallpaper needs to be rotated when the screen is in a portrait state. When a height of the high-definition dynamic wallpaper before rotation exceeds a maximum rotation height supported by the HWC hardware module (for example, 2176 pixels), GPU composition may be selected. For the horizontal installation manner, refer to related descriptions of FIG. 4A-FIG. 4G in the following embodiments.

The following uses an example in which the terminal device is a foldable-screen device to describe principles of rotating a wallpaper by using the two synthetic technologies.

The foldable-screen device may be an inward foldable-screen device, or may be an outward foldable-screen device.

Both the inward foldable-screen device and the outward foldable-screen device may be folded into three folding forms: a folded state, a hovering state, and an unfolded state. Specifically, when the foldable-screen device is in the folded state, a folding angle between a primary screen and a back screen is less than or equal to α, and a small screen faces a user. When the foldable-screen device is in the unfolded state, the folding angle between the primary screen and the back screen is greater than or equal to β, and a large screen faces the user. When the foldable-screen device is in the hovering state, the folding angle between the primary screen and the back screen is greater than α and less than β. For example, α is equal to or close to a folding angle of 0°, and β is equal to or close to a folding angle of 180°.

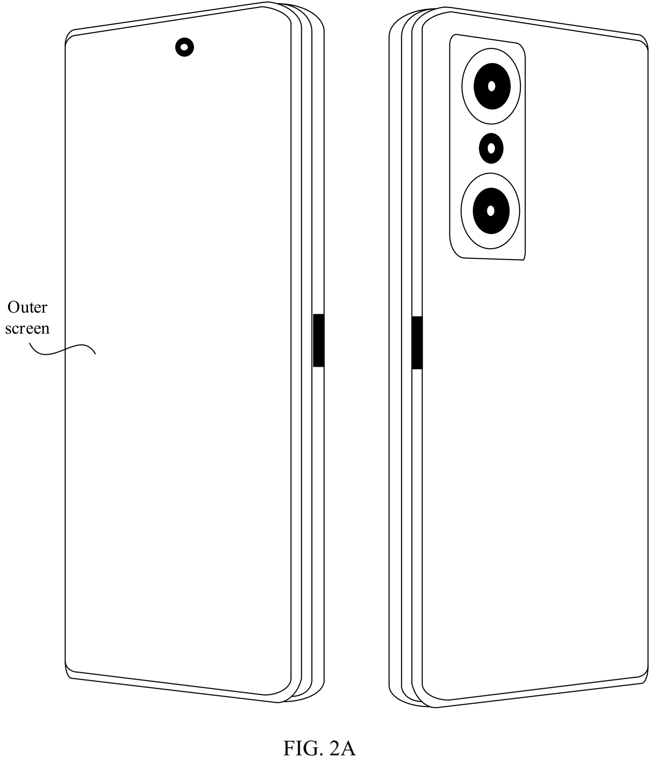

For example, FIG. 2A-FIG. 2C show schematic diagrams of an inward foldable-screen mobile phone.

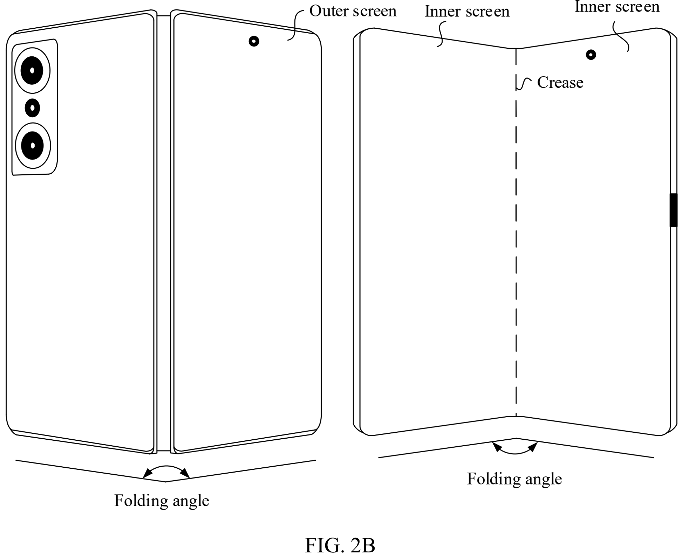

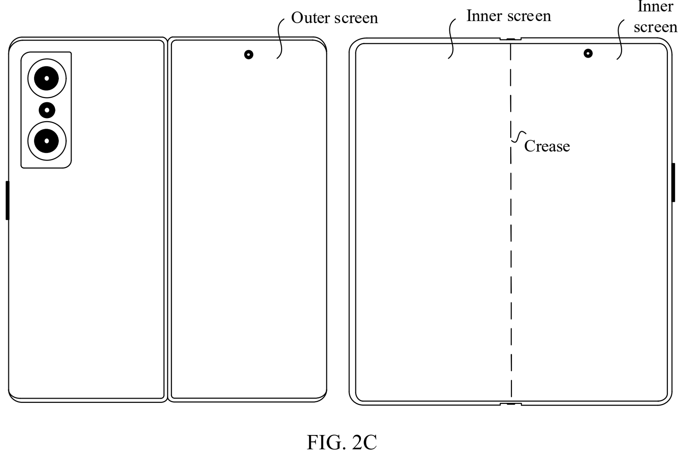

An inner screen (also referred to as a large screen) and an outer screen (also referred to as a small screen) are disposed in the inward foldable-screen mobile phone, and the inner screen may be bent into at least two display regions. As shown in FIG. 2A, when the inward foldable-screen mobile phone is in a folded state, inner surfaces of two folding bodies are opposite, and the inner screen is in a hidden state. As shown in FIG. 2B, when the inward foldable-screen mobile phone is in a hovering state, a folding angle between the two display regions of the inner screen is greater than 0° and less than 180°. As shown in FIG. 2C, when the inward foldable-screen mobile phone is in an unfolded state, the folding angle between the two display regions of the inner screen is equal to or close to 180°, so that the two display regions of the inner screen are located on a same surface. Generally, when the inward foldable-screen mobile phone is in the folded state, the outer screen displays a wallpaper. After the inward foldable-screen mobile phone switches from the folded state to the unfolded state, the inner screen displays the wallpaper.

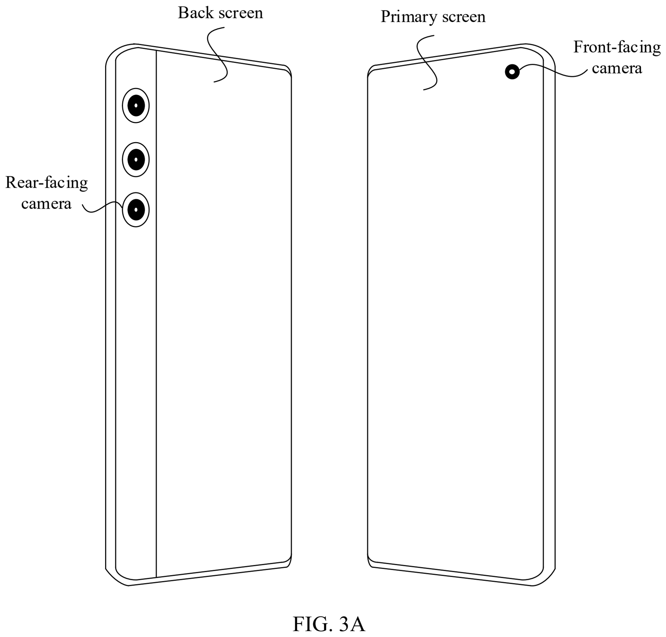

For example, FIG. 3A to FIG. 3C show schematic diagrams of an outward foldable-screen mobile phone.

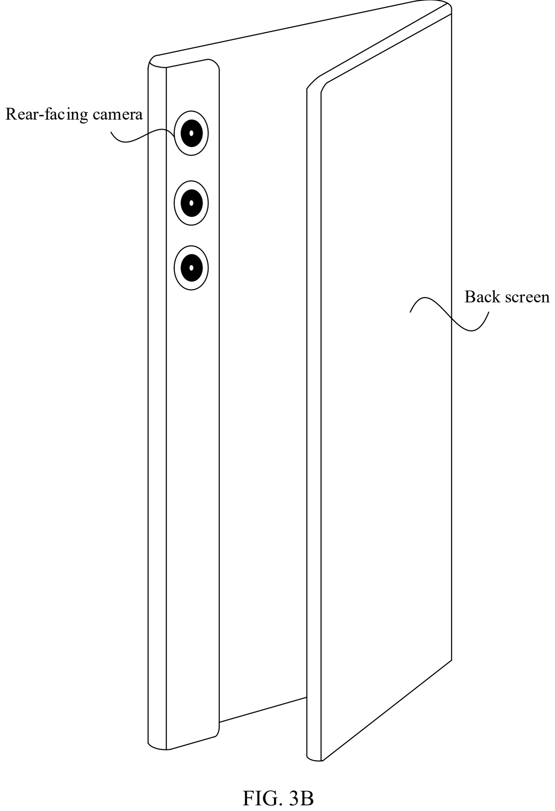

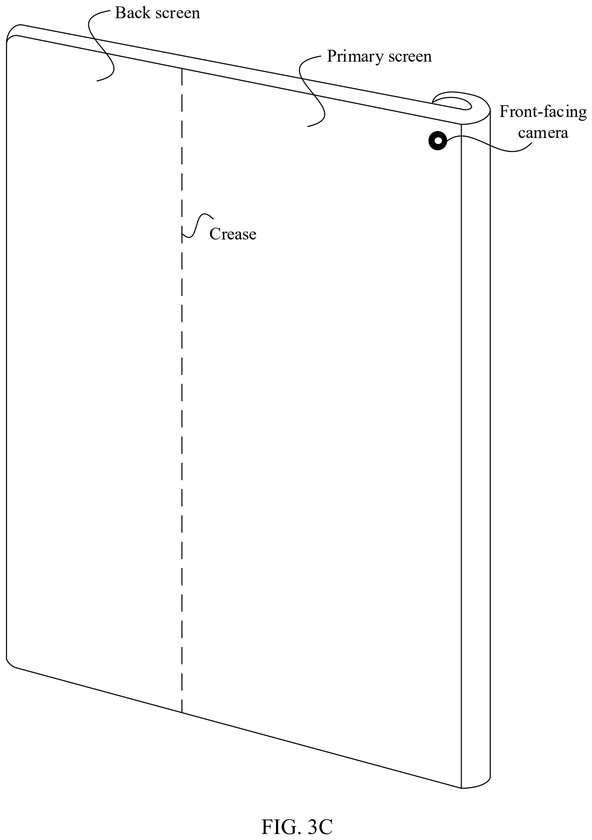

A screen is disposed on the outward foldable-screen mobile phone, and the screen may be bent into at least two display regions. A relatively large display region in the at least two display regions is referred to as a primary screen, and a relatively small display region is referred to as a back screen. Generally, the primary screen is also referred to as a small screen, and the primary screen and the back screen are collectively referred to as a large screen. As shown in FIG. 3A, the back screen is flipped to be flush with a surface on which a rear-facing camera is located, the primary screen faces a user, and the back screen faces away from the user. As shown in FIG. 3B, when the outward foldable-screen mobile phone is in the hovering state, a folding angle between the primary screen and the back screen is greater than 0° and less than 180°. As shown in FIG. 3C, when the outward foldable-screen mobile phone is in the unfolded state, a folding angle between two display regions of the inner screen is equal to or close to 180°. Generally, when the outward foldable-screen mobile phone is in the folded state, the primary screen displays a wallpaper. After the outward foldable-screen mobile phone switches from the folded state to the unfolded state, the primary screen and the back screen are used to display the wallpaper at the same time.

According to the descriptions in the foregoing embodiments, although physical forms of the inward foldable-screen mobile phone and the outward foldable-screen mobile phone are different, both have the following common features: When in the folded state, the small screen is used to display a wallpaper of a relatively small size; and when in the unfolded state, the large screen is used to display a wallpaper of a relatively large size.

Generally, resolutions and installation directions of the small screen and the large screen may be different. For example, the resolution of the small screen is 2300*1176 pixels, and the resolution of the large screen is 2300*2100 pixels. The small screen uses a vertical installation manner, and the large screen uses a horizontal installation manner, that is, an installation direction of the small screen is different from an installation direction of the large screen by 90° or 270°. When the small screen and the large screen use a video resource of a same dynamic wallpaper, to make the wallpaper displayed on the small screen in the portrait state and the wallpaper displayed on the large screen in the portrait state consistent from a visual direction of the user, a wallpaper application notifies, according to a folding form, a SurfaceFlinger to determine whether to rotate the wallpaper. For example, if a currently turned-on screen is the small screen in the portrait state, the wallpaper does not need to be rotated, and HWC composition with low power consumption is selected. If the currently turned-on screen is the large screen in the portrait state, the wallpaper needs to be rotated, and a height of the wallpaper before rotation (for example, 2300 pixels) exceeds a maximum rotation height (for example, 2176 pixels) supported by an HWC hardware module, GPU composition that supports a more complex composition operation is selected. After an operation such as rotation, zooming, or cropping is performed on a wallpaper layer based on GPU composition and/or HWC composition, an HWC composes the wallpaper layer and another layer into one frame of image in a hardware composition manner, and sends the image to the small screen or the large screen for display.

It should be noted that, if the small screen is turned on, the small screen may be divided into two states: The small screen is in the portrait state, and an included angle between a long border of the small screen and a ground plane is greater than or equal to an included angle between a short border of the small screen and the ground plane. Alternatively, the small screen is in the landscape state, and the included angle between the long border of the small screen and the ground plane is less than the included angle between the short border of the small screen and the ground plane.

If the large screen is turned on, the large screen may be divided into two states: The large screen is in the portrait state, and an included angle between a long border (parallel to a crease direction) of the large screen and the ground plane is greater than or equal to an included angle between a short border (perpendicular to the crease direction) of the large screen and the ground plane. In this case, the large screen performs display in a first direction. Alternatively, the large screen is in the landscape state, and the included angle between the long border (parallel to the crease direction) of the large screen and the ground plane is less than the included angle between the short border (perpendicular to the crease direction) of the large screen and the ground plane. In this case, the large screen performs display in a second direction. A difference between the first direction and the second direction is 90°. In this way, regardless of whether the large screen is in the portrait state or in the landscape state, from a viewing angle of the user, the screen always keeps forward display, and no rotation occurs.

The following uses the inward foldable-screen mobile phone shown in FIG. 2A to FIG. 2C as an example to describe a relationship among a small screen, a large screen, a wallpaper, GPU composition, and HWC composition with reference to FIG. 4A to FIG. 4G.

For example, a type of the small screen and a type of the large screen of the inward foldable-screen mobile phone are organic light-emitting diodes (organic light-emitting diode, OLED). Regardless of whether the small screen or the large screen, a most basic element that composes an image is a pixel (pixel). The resolution of the screen is usually represented by "row pixel value * column pixel value". For example, a resolution of a screen is m (height) * n (width), which indicates that the screen has m rows and n columns. It may be understood that each column has m pixels, and each row has n pixels.

As shown in FIG. 4A, the resolution of the small screen is 2300 (height) * 1176 (width) pixels, which indicates that the small screen has 2300 rows and 1176 columns. A two-dimensional coordinate system XY is established by using row 1 * column 1 as an origin. When the small screen is installed on a mobile phone body according to the vertical installation manner shown in FIG. 4A, an X-axis forward direction of the two-dimensional coordinate system is directed to the right along a first edge of the mobile phone body, and a Y-axis forward direction of the two-dimensional coordinate system is directed to the bottom along a second edge of the mobile phone body, where the first edge is perpendicular to the second edge. The small screen transmits pixel data of one frame of image to each pixel in the following scanning manner: by using row 1 * column 1 as a start point, sequentially scanning pixels of the first row along the X-axis forward direction until row 1 * column 1176; after the first row of pixel data is completely transmitted, by using row 2 * column 1 as a start point, sequentially scanning pixels of the second row along the X-axis forward direction until row 2 * column 1176; ...; by analogy, by using row 2300 * column 1 as a start point, sequentially scanning pixels of row 2300 along the X-axis forward direction until row 2300 * column 1176. It may be understood that when the installation direction of the small screen on the mobile phone body is changed (for example, the small screen rotates by 180° relative to the mobile phone body), a scanning start point and a scanning direction of the small screen are changed by using the mobile phone body as a reference.

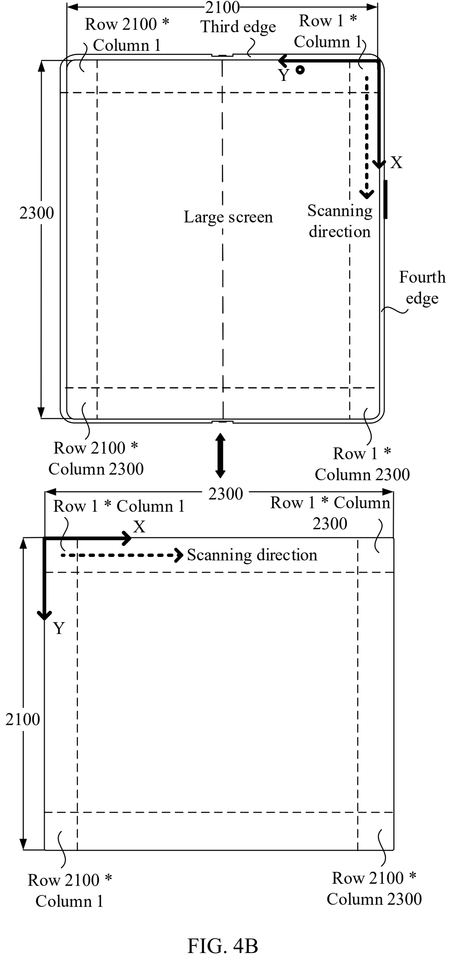

As shown in FIG. 4B, the resolution of the large screen is 2100 (height) * 2300 (width) pixels, which indicates that the large screen has 2100 rows and 2300 columns. A two-dimensional coordinate system XY is established by using row 1 * column 1 as an origin. When the large screen is installed on the mobile phone body according to the horizontal installation manner shown in FIG. 4B, an X-axis forward direction of the two-dimensional coordinate system is directed to the bottom along a third edge (that is, the first edge) of the mobile phone body, and a Y-axis forward direction of the two-dimensional coordinate system is directed to the left along a fourth edge (the fourth edge is parallel to the second edge) of the mobile phone body, where the third edge is perpendicular to the fourth edge. The large screen transmits pixel data of one frame of image to each pixel in the following scanning manner: by using row 1 * column 1 as a start point, sequentially scanning pixels of the first row along the X-axis forward direction until row 1 * column 2300; after the first row of pixel data is completely transmitted, by using row 2 * column 1 as a start point, sequentially scanning pixels of the second row along the X-axis forward direction until row 2 * column 2300; ...; by analogy, by using row 2100 * column 1 as a start point, sequentially scanning pixels of row 2100 along the X-axis forward direction until row 2100 * column 2300. It may be understood that when the installation direction of the large screen on the mobile phone body is changed, a scanning start point and a scanning direction of the large screen are changed by using the mobile phone body as a reference.

It may be learned from the foregoing two paragraphs of content that, if the mobile phone body is used as a reference object, the coordinate system of the large screen shown in FIG. 4B rotates by 90° clockwise relative to the coordinate system of the small screen shown in FIG. 4A, that is, the installation direction of the small screen and the installation direction of the large screen are different by 90°.

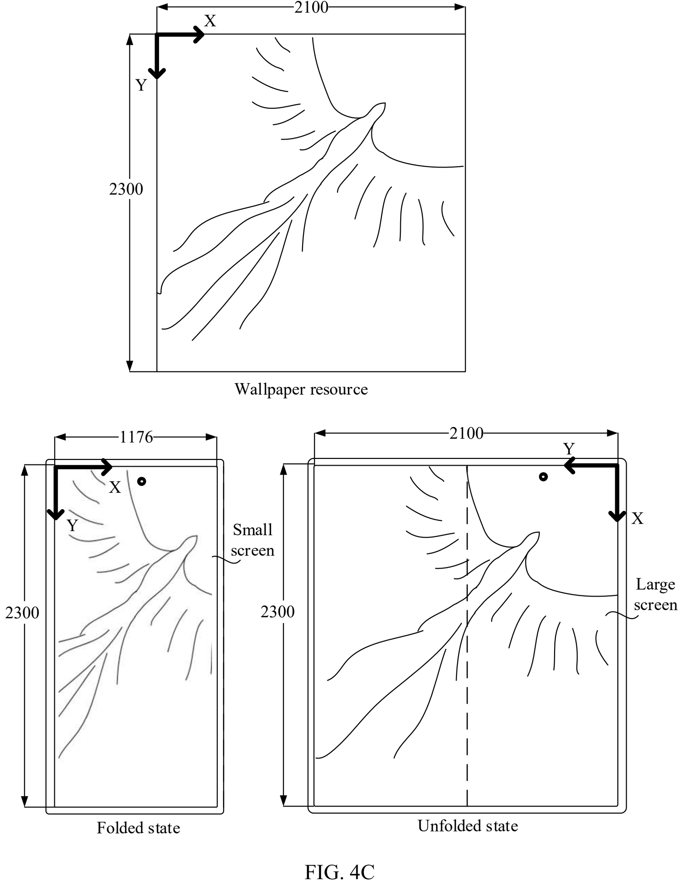

A direction of a wallpaper resource stored in the mobile phone is fixed. Generally, the direction of the wallpaper resource is consistent with the installation direction of the small screen on the mobile phone body, and is different from the installation direction of the large screen on the mobile phone body by 90° or 270° clockwise. As an example, if the small screen is installed on the mobile phone body according to the vertical installation manner shown in FIG. 4A, and the large screen is installed on the mobile phone body according to the horizontal installation manner shown in FIG. 4B, as shown in FIG. 4C, the direction of the wallpaper resource is consistent with the installation direction of the small screen on the mobile phone body, and the direction of the wallpaper resource is different from the installation direction of the large screen on the mobile phone body by 90° clockwise.

When the user holds the mobile phone with both hands, the folding form of the mobile phone may be changed by changing a folding angle, for example, switching from the folded state to the unfolded state, or switching from the unfolded state to the folded state. If the mobile phone is switched from the folded state to the unfolded state, the wallpaper is first displayed on the small screen, and then the wallpaper is displayed on the large screen. If the mobile phone is switched from the unfolded state to the folded state, the wallpaper is first displayed on the large screen, and then the wallpaper is displayed on the small screen. It should be understood that in a process of switching between the two folding forms, the user may prefer to see that the wallpaper directions of the two screens are consistent. As shown in FIG. 4C, when the small screen and the large screen are in the portrait state, both the phoenix displayed on the small screen and the phoenix displayed on the large screen fly toward the upper right. With reference to the description in the foregoing embodiment, because the direction of the wallpaper resource is consistent with the installation direction of the small screen on the mobile phone body, and is inconsistent with the installation direction of the large screen on the mobile phone body, the wallpaper resource needs to be rotated first, and then a rotated wallpaper is sent to the large screen for display, so that the direction of the wallpaper displayed on the small screen and the direction of the wallpaper displayed on the large screen are consistent from a visual angle of the user, thereby improving user experience.

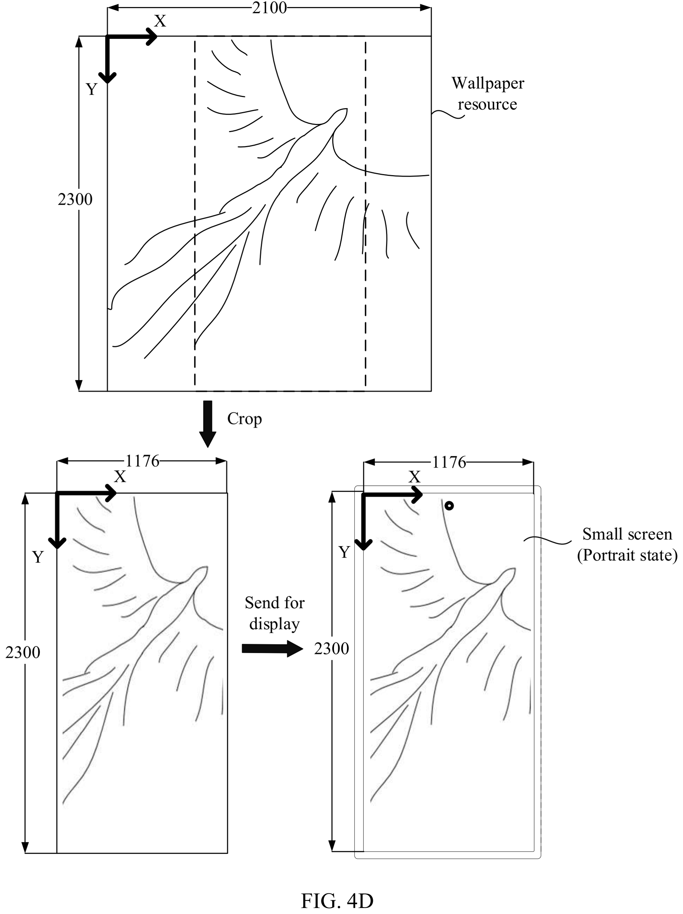

As an example, based on FIG. 4C, FIG. 4D shows a schematic diagram of sending to the small screen for display when the mobile phone is in the folded state and the small screen is in the portrait state. The direction of the wallpaper resource is consistent with the installation direction of the small screen on the mobile phone body. The wallpaper does not need to be rotated, and HWC composition can be used. The resolution of the wallpaper resource is 2300 (height) * 2100 (width) pixels, and the resolution of the small screen is 2300 (height) * 1176 (width) pixels. The HWC may crop a partial image of 2300 (height) * 1176 (width) from the wallpaper resource according to a dashed-line box shown in FIG. 4D, and send the partial image to the small screen for display.

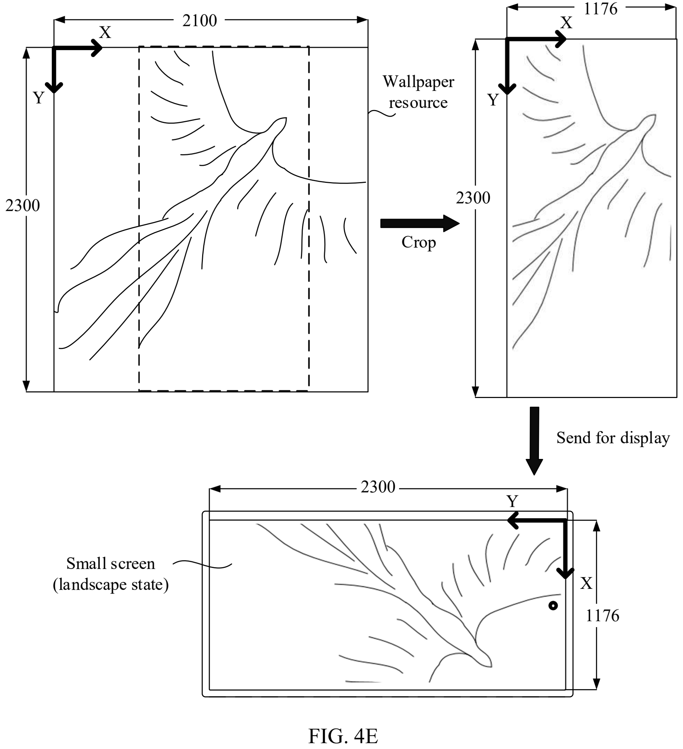

As another example, based on FIG. 4C, FIG. 4E shows a schematic diagram of sending to the small screen for display when the mobile phone is in the folded state and the small screen is in the landscape state. The direction of the wallpaper resource is consistent with the installation direction of the small screen on the mobile phone body. The wallpaper does not need to be rotated, and HWC composition can be used. The resolution of the wallpaper resource is 2300 (height) * 2100 (width) pixels, and the resolution of the small screen is 2300 (height) * 1176 (width) pixels. The HWC may crop a partial image of 2300 (height) * 1176 (width) from the wallpaper resource according to a dashed-line box shown in FIG. 4E, and send the partial image to the small screen for display. It should be understood that regardless of whether the small screen is in the portrait state or the landscape state, the wallpaper is not rotated.

It should be noted that FIG. 4D and FIG. 4E are described by using an example in which a crop operation is performed on the wallpaper resource, and this application is not limited thereto. In actual implementation, a zoom operation may be performed on the wallpaper resource based on a specific zoom ratio according to the resolution of the wallpaper and the resolution of the small screen, or a crop operation and a zoom operation may be performed at the same time, so as to obtain a wallpaper that adapts to the resolution of the small screen.

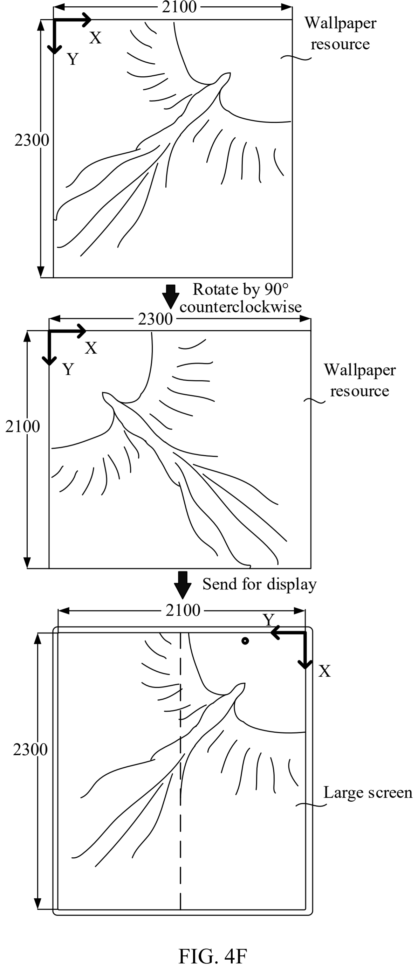

As still another example, based on FIG. 4C, FIG. 4F shows a schematic diagram of sending to the large screen for display when the mobile phone is in the unfolded state and the large screen is in the portrait state. The direction of the wallpaper resource is different from the installation direction of the large screen on the mobile phone body by 90° clockwise. The wallpaper needs to be rotated, and GPU composition can be used. The resolution of the wallpaper resource is 2300 (height) * 2100 (width) pixels, and the resolution of the large screen is 2100 (height) * 2300 (width) pixels. Because the height of the wallpaper resource is 2300 pixels, which exceeds the maximum rotation height (such as 2176 pixels) supported by the HWC hardware module, the GPU may rotate the wallpaper resource by 90° counterclockwise, and then send a rotated wallpaper resource to the large screen for display.

It should be noted that in this embodiment of this application, "the resolution of the large screen is 2100 (height) * 2300 (width) pixels" is described by using a scanning direction of the large screen as a reference, and this application is not limited thereto. As shown in FIG. 4B, after the large screen is installed on the mobile phone body, a relative location relationship between the large screen and the mobile phone body is fixed. If the mobile phone body is used as a reference object, 2300 pixels may be used as the height of the large screen, and 2100 pixels are used as the width of the small screen.

In the foregoing embodiment, because the resolution of the rotated wallpaper is 2100 (height) * 2300 (width) pixels, and the resolution of the large screen is 2100 (height) * 2300 (width) pixels, that is, the resolution of the rotated wallpaper is the same as the resolution of the large screen, there is no need to crop and/or zoom the wallpaper. It should be understood that, when the resolution of the rotated wallpaper is different from the resolution of the large screen, a crop operation, a zoom operation, and/or the like may be further performed according to a usage requirement.

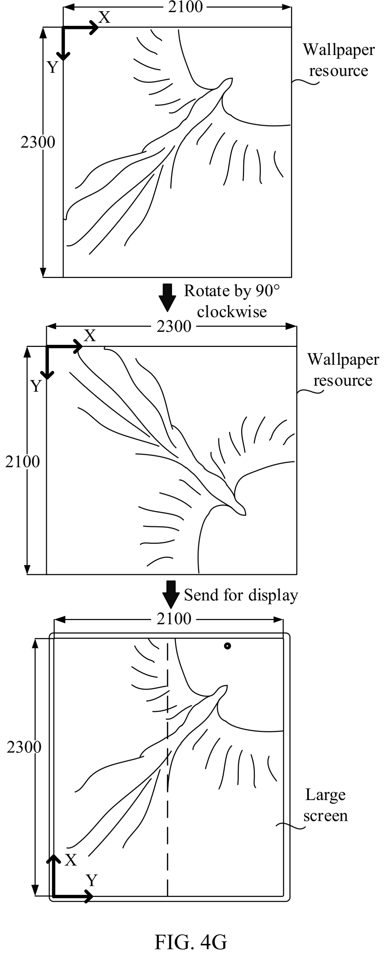

In addition, FIG. 4B, FIG. 4C, and FIG. 4F are described by using an example in which the direction of the wallpaper resource is different from the installation direction of the large screen on the mobile phone body by 90° clockwise, and this application is not limited thereto. As another example, as shown in FIG. 4G, the direction of the wallpaper resource is different from the installation direction of the large screen on the mobile phone body by 270° clockwise (that is, 90° counterclockwise), and the height of the wallpaper before rotation (for example, 2300 pixels) exceeds the maximum rotation height (for example, 2176 pixels) supported by the HWC hardware module. The GPU may rotate the wallpaper resource by 90° clockwise, and then send a rotated wallpaper resource to the large screen for display. It should be noted that the following embodiments are all described by using the installation direction of the large screen shown in FIG. 4B, FIG. 4C, and FIG. 4F as an example. In actual implementation, the installation direction of the large screen shown in FIG. 4G may alternatively be used.

With reference to FIG. 4A to FIG. 4G, the foregoing embodiments exemplify a relationship among the small screen, the large screen, the wallpaper, GPU composition, and HWC composition. In actual implementation, the mobile phone screen displays not only the wallpaper layer, but also another layer. For example, the mobile phone screen successively stacks a home screen layer, a video layer, a status bar layer, and the like on the wallpaper layer, and composes a plurality of layers into one frame of image. It should be understood that, in addition to the four types of layers, there may be another type of layer. A quantity and types of layers may be adjusted according to a usage requirement, which is not specifically limited in this embodiment of this application.

The following uses an example to describe a manner of composing a plurality of layers into one frame of image in the unfolded state.

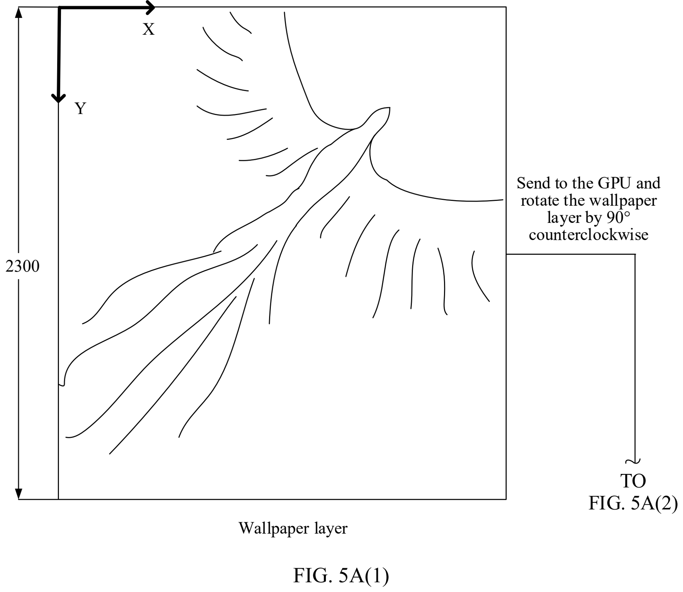

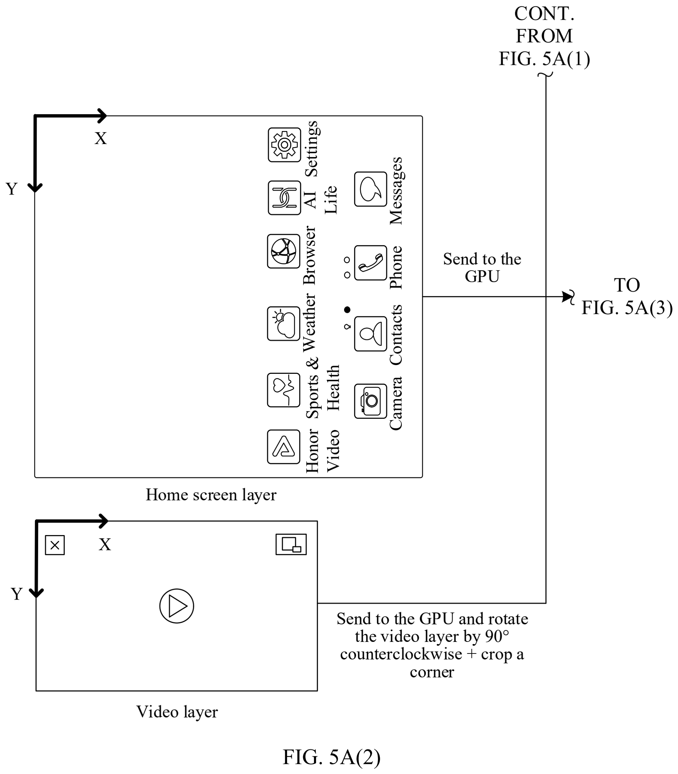

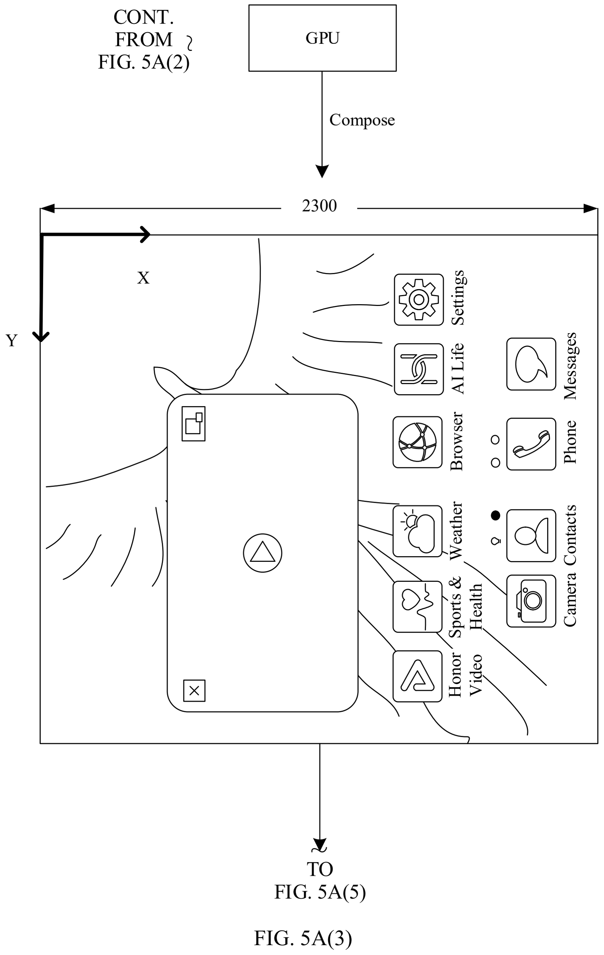

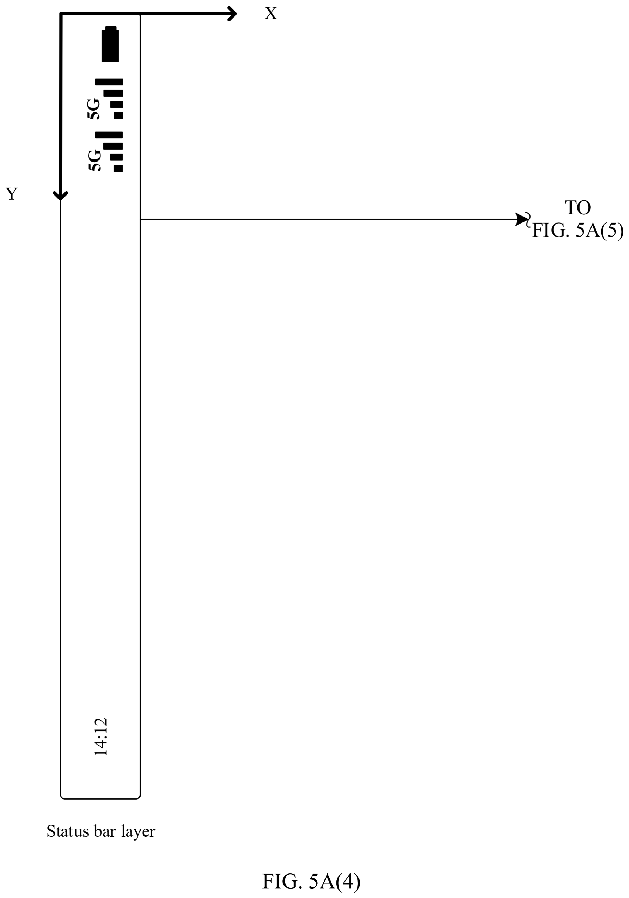

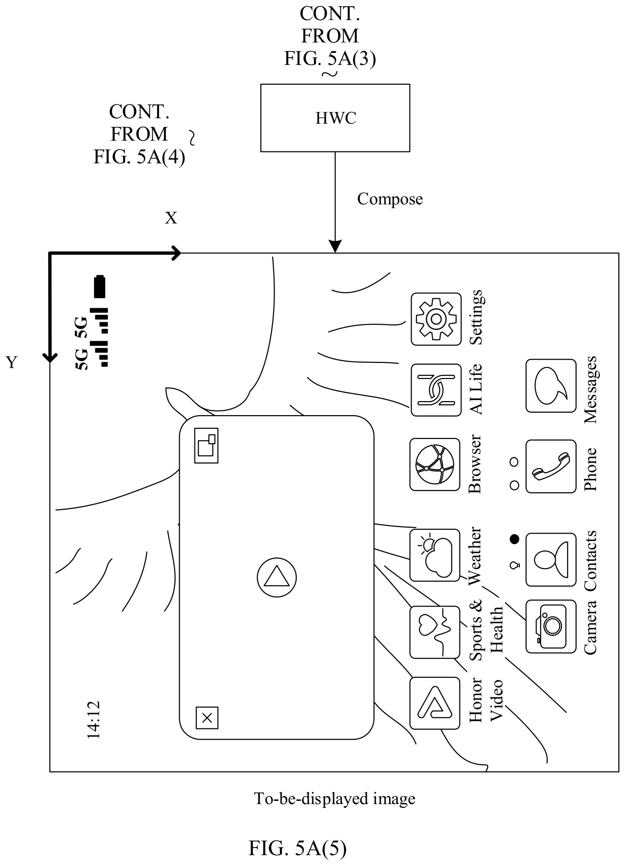

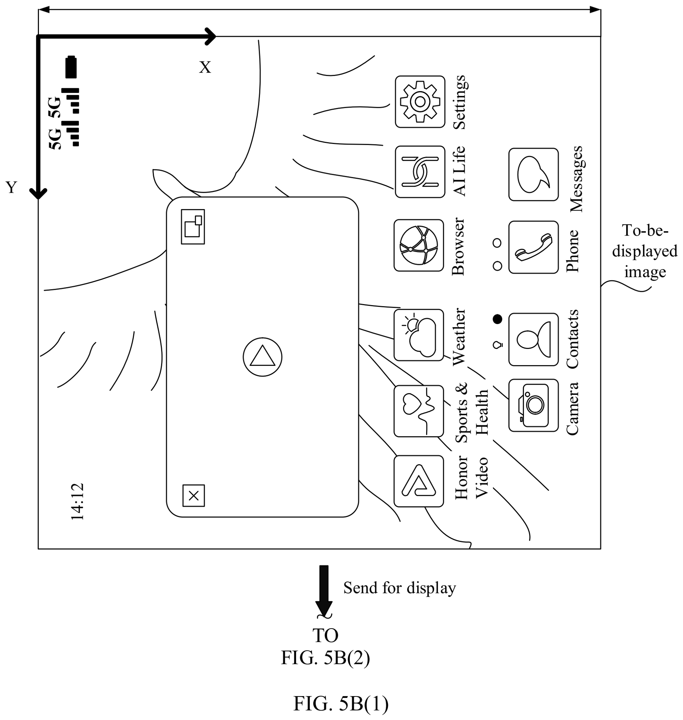

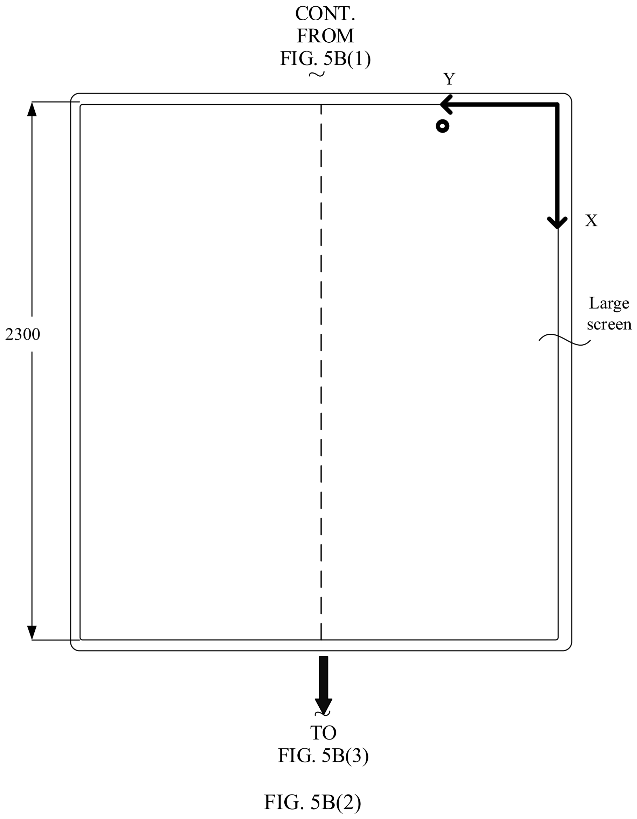

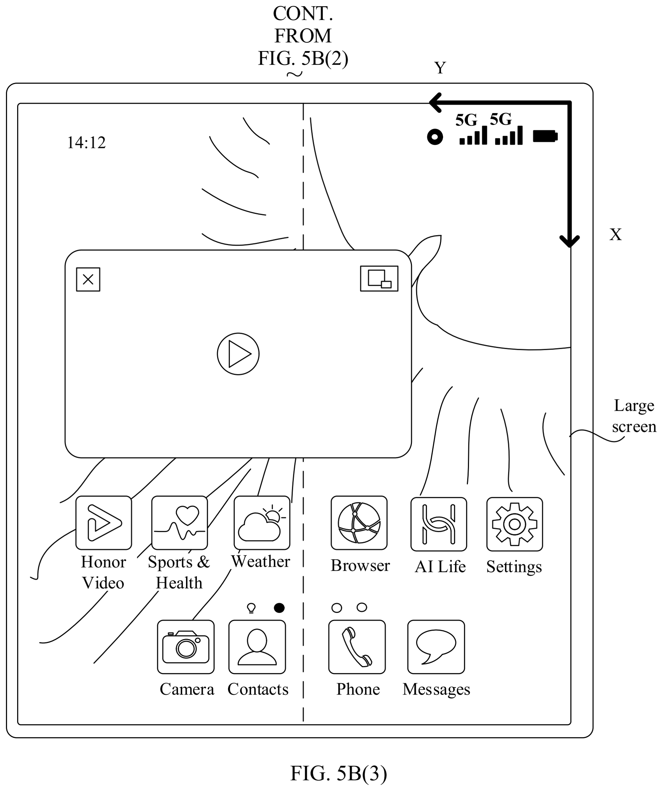

FIG. 5A(1) to FIG. 5B(3) show schematic diagrams of composing a plurality of layers into one frame of image and sending the image to a large screen for display.

As shown in FIG. 5A(1) to FIG. 5A(5), when the mobile phone is in the unfolded state, the SurfaceFlinger successively receives composition tasks of a wallpaper layer, a home screen layer, a video layer, and a status bar layer. The composition task of the wallpaper layer specifies a stacking order 1, and the stacking order 1 indicates being located on a bottom layer. The composition task of the home screen layer specifies a stacking order 2, and the stacking order 2 indicates being located on a first layer above the bottom layer. The composition task of the video layer specifies a stacking order 3, and the stacking order 3 indicates being located on a second layer above the bottom layer. The composition task of the status bar layer specifies a stacking order 4, and the stacking order 4 indicates being located on a top layer. That is, stacking orders of layers from bottom to top are successively: the wallpaper layer, the home screen layer, the video layer, and the status bar layer.

The home screen layer is a layer drawn by a home screen application, and the status bar layer is a layer drawn by a system (system) user interface (user interface, UI). During a drawing process, the home screen application and the system UI have rotated the home screen layer and the status bar layer by 90° counterclockwise, and no further rotation is needed. In principle, the SurfaceFlinger may preferentially allocate the composition tasks of the home screen layer and the status bar layer to the HWC. However, because the wallpaper layer and the video layer are obtained by decoding a wallpaper resource and a video resource by using a video codec, and the video codec does not have a rotation capability, the wallpaper layer and the video layer are layers that have not been rotated. In addition, the video layer requires corner clipping, and HWC composition does not support corner clipping, so that the SurfaceFlinger may allocate the composition tasks of the wallpaper layer and the video layer to the GPU. In addition, when at least one layer is located between a layer a and a layer b, and the layer a and the layer b can use only GPU composition, the SurfaceFlinger allocates composition tasks of the at least one layer, the layer a, and the layer b to the GPU, regardless of whether the at least one layer is suitable for adopting HWC composition. Because the home screen layer is located between the wallpaper layer and the video layer, the SurfaceFlinger finally allocates the composed task of the home screen layer to the GPU instead of the HWC. The wallpaper resource may be a video resource (that is, a dynamic wallpaper) including a plurality of pictures, or may be one picture (that is, a static wallpaper).

The GPU rotates the wallpaper layer by 90° counterclockwise, rotates the video layer by 90° counterclockwise, and clips a corner for the video layer. The GPU successively stacks the home screen layer and the rotated video layer on the rotated wallpaper layer to obtain a composed layer. Then, the GPU sends the composed layer to the HWC. The HWC may stack the status bar layer on the composed layer to generate a frame of to-be-displayed image, and send the to-be-displayed image to the large screen for display. When the large screen is in the portrait state, the phoenix in the wallpaper displayed on the large screen flies towards the upper right (as shown in FIG. 5B(1) to FIG. 5B(3)), which is consistent with the flying direction of the phoenix in the wallpaper displayed on the small screen (as shown in FIG. 4D). In this way, although the installation directions of the large screen and the small screen are inconsistent, the wallpaper directions of the large screen and the small screen that the user finally sees are consistent, which is more consistent with use habits of the user.

With reference to FIG. 5A(1) to FIG. 5B(3), the foregoing embodiment provides an example for describing the manner of composing a plurality of layers into one frame of image when the foldable-screen device is in the unfolded state. In actual implementation, a periodical tearing effect (tearing effect, TE) signal is used by the large screen to continuously refresh an interface, and the TE signal may represent a refresh frequency of the large screen. After the large screen is powered on and initialized, the large screen starts to periodically send a TE signal to the SurfaceFlinger. A sending frequency of the TE signal determines the refresh frequency of the large screen. For example, when the refresh frame rate of the large screen is 120 Hz, a sending period of the TE signal is 8.33 milliseconds. For another example, when the refresh frame rate of the large screen is 30 Hz, the sending period of the TE signal is 33.33 milliseconds. After the large screen sends the TE signal each time, the SurfaceFlinger performs a refresh action in response to the TE signal. Based on the TE signal, the SurfaceFlinger also maintains a Vsync-SF (vertical synchronization (vertical synchronization, Vsync)-SurfaceFlinger) signal. Each time one Vsync-SF signal is obtained, one layer composition process is performed. An example in which one Vsync-SF signal is obtained is used. When one Vsync-SF signal is obtained, the SurfaceFlinger performs layer composition and rendering by using the GPU or the HWC to generate one new to-be-displayed image, and then sends the image to the large screen for display.

It should be noted that this application relates to two types of Vsync signals: a Vsync-SF signal and a Vsync-APP signal. The Vsync-SF signal is used to control a composition speed of a layer, and the Vsync-APP signal is used to control a speed of drawing a layer by an APP. An APP may request a Vsync-APP signal from the SurfaceFlinger according to a requirement.

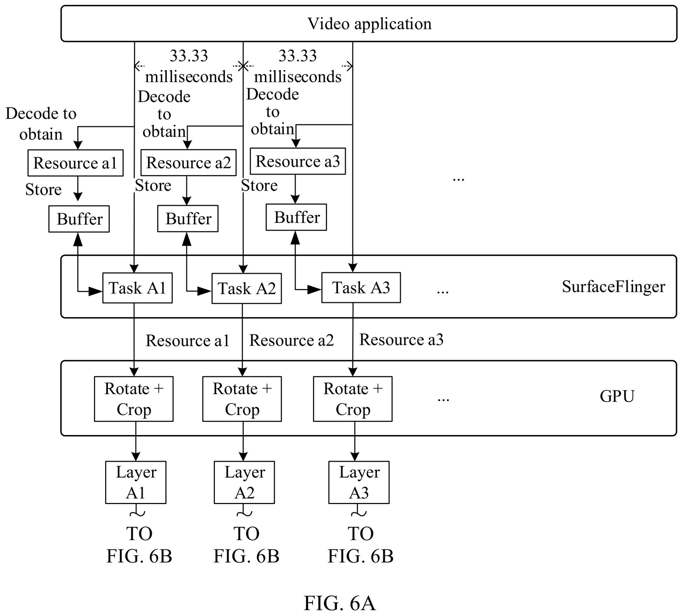

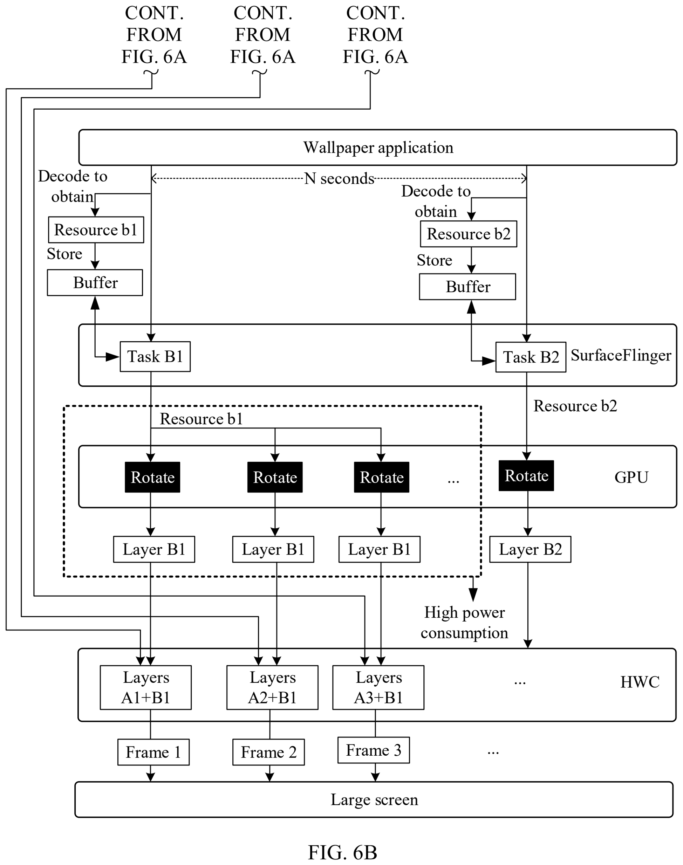

The following uses an example in which the large screen is in the portrait state shown in FIG. 4F, and the SurfaceFlinger receives at least the composition tasks of the wallpaper layer and the video layer. With reference to FIG. 6A and FIG. 6B, a manner of continuously refreshing an interface by the large screen is described by using an example. It should be understood that, in actual implementation, in addition to the wallpaper layer and the video layer, a home screen layer, a status bar layer, and/or a web page layer may be further included, which is not limited in this embodiment of this application.

For example, FIG. 6A and FIG. 6B show a schematic diagram of composing a wallpaper layer and a video layer into a plurality of frames of images and sending the images to a large screen for display.

A frequency of updating a window by each application may be different, so that an image sending period of each application is also different. For example, the wallpaper application may not refresh the wallpaper in dozens of seconds, several minutes, or even several hours, a video application window may refresh 40~60 frames in one second, a news window may refresh 120 frames in one second, and a game window may refresh 160 frames in one second. When the image sending period of each application is different, the SurfaceFlinger calculates a refresh rate, that is, a period of the Vsync-SF signal, according to a minimum image sending period, to avoid a frame loss problem caused by using a relatively large image sending period.

For example, the video application may deliver one task to the SurfaceFlinger at an interval of 33.33 milliseconds. Task A1 is used as an example. The video application may indicate the video codec to decode the video resource. The video resource stores a decoded resource a1 into a buffer, and sends the buffer to the SurfaceFlinger. The SurfaceFlinger obtains the resource a1 from the buffer. Although a height of the resource a1 does not exceed the maximum rotation height (for example, 2176 pixels) supported by the HWC hardware module, because the HWC hardware module does not support corner clipping, the SurfaceFlinger sends the task A1 to the GPU, the GPU rotates the resource a1 and performs corner clipping to obtain a layer A1, and then sends the layer A1 to the HWC.

The wallpaper application may deliver one new composition task to the SurfaceFlinger each time the wallpaper is updated. For example, wallpaper update is triggered when the user changes a folding angle of a foldable screen, or wallpaper update is triggered when the user reselects a wallpaper by using a setting application. It can be seen that wallpaper update is closely related to a user operation. If the wallpaper is not updated in several seconds, several minutes, or even several hours, the wallpaper application will not deliver any new task during this period. Tasks B1 and B2 are used as examples. The wallpaper application may indicate the video codec to decode the wallpaper resource. The video resource stores the decoded resource b1 into the buffer, and sends the buffer to the SurfaceFlinger. The SurfaceFlinger obtains the resource b1 from the buffer. Because a height of the resource b1 exceeds the maximum rotation height (for example, 2176 pixels) supported by the HWC hardware module, the SurfaceFlinger sends the task B1 to the GPU, and the GPU rotates the resource b1 to obtain a layer B1. Before the next task B2 of the task B1 arrives, to keep a same refresh frequency between the wallpaper layer and the video layer, the GPU continuously rotates the resource b1 to obtain the layer B1, and sends the layer B1 obtained after each rotation to the HWC.

The HWC stacks the layer A1 on the first layer B1 to form a frame 1, stacks the layer A2 on the second layer B1 to form a frame 2, and stacks the layer A3 on the third layer B1 to form a frame 3 .... In response to a received TE signal, and the HWC sequentially sends these images to the large screen for display.

With reference to the description in the foregoing embodiment, when the large screen is in the portrait state, if a plurality of frames of images are composed based on a same wallpaper resource, the GPU may need to perform a plurality of rotation operations on the same wallpaper resource. However, GPU composition has a disadvantage of high power consumption, and frequently rotating the wallpaper layer causes overall high power consumption, high load, poor performance, and severe heating of the device.

In view of the foregoing problems, an embodiment of this application provides a layer composition method based on intelligent scene recognition. The method may be applied to a terminal device on which at least one large screen is disposed, and the large screen uses a horizontal installation manner. In this method, when the large screen is turned on in a portrait state, each to-be-composed layer is recognized, so as to determine whether the layer needs to be preprocessed by using a GPU, such as wallpaper layer rotation. If preprocessing needs to be performed by using the GPU, a preprocessed layer is rendered by using the GPU, and the preprocessed layer is placed into a buffer. In this way, when a same layer processing task exists subsequently, the preprocessed layer may be directly obtained from the buffer, and the preprocessed layer is sent to an HWC for hardware composition, thereby reducing overall power consumption and load of the terminal device, and improving overall performance of the terminal device.

The terminal device is not limited to a foldable-screen device, or may be a large-screen device such as a tablet computer (PAD).

To better understand the layer composition method based on intelligent scene recognition provided in this embodiment of this application, the following uses a foldable-screen device as an example to describe an architecture of the foldable-screen device.

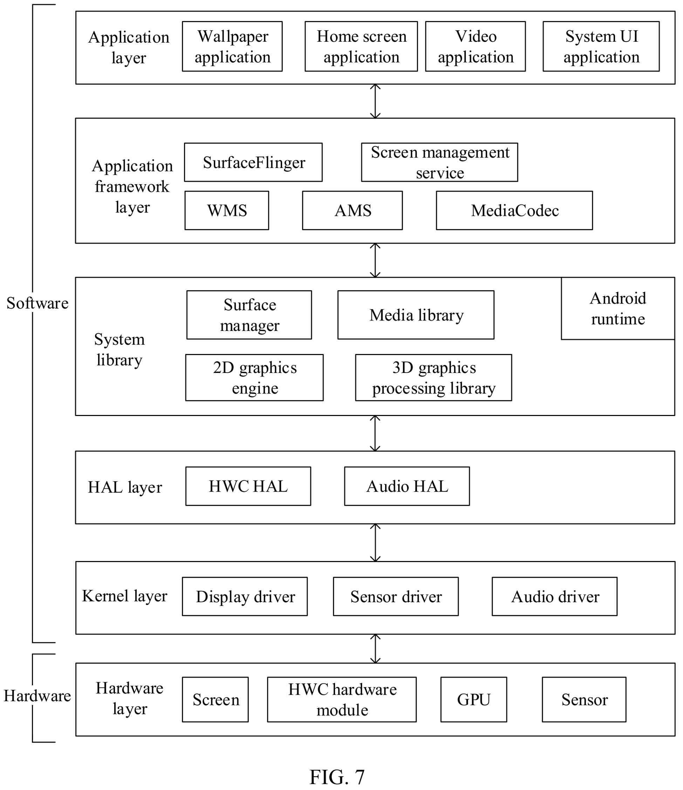

For example, FIG. 7 shows a schematic diagram of an architecture of a foldable-screen device according to an embodiment of this application.

As shown in FIG. 7, the foldable-screen device may use a layered architecture in which software is divided into several layers and each layer has a clear role and task. Layers communicate with each other through a software interface. In some embodiments, a software structure is sequentially divided into software layers from top to bottom into an application (application, APP) layer, an application framework (framework, FW) layer, a system library (FWK LIB), a hardware abstraction layer (HAL layer), and a kernel (kernel) layer. The software architecture runs on a hardware layer, and the hardware layer may include a screen, an HWC hardware module, a GPU, a sensor, and the like.

The application layer, also referred to as an application layer, may include a series of application packages, such as a wallpaper application, a home screen application, a system UI, a video application, and a browser. The system UI is a native application of an Android system. When these application packages are run, an application programming interface (application programming interface, API) may be used to access various service modules provided at the application framework layer and execute corresponding intelligent services.

The application framework layer provides the API and a programming framework for the application. The application framework layer includes some predefined functions. As shown in FIG. 7, the application framework layer may include an activity manager service (activity manager service, AMS), a window manager service (window manager service, WMS), a SurfaceFlinger, a screen management service, a video codec (such as MediaCodec), and the like. The AMS manages a lifecycle of each application. The WMS manages all windows in the system. The screen management service is responsible for calculating a folding angle of the foldable-screen device, a landscape/portrait state of the foldable-screen device, and the like by using a preset algorithm according to data collected by a sensor. The SurfaceFlinger is responsible for composition and display of layer data. For example, the SurfaceFlinger may provide layer information to a hardware composer (hardware composer, HWC) HAL, and the HWC HAL may determine, according to hardware performance, whether to use HWC underlying hardware or to use GPU composition. MediaCodec is an audio/video codec tool provided in the Android system, and mainly encapsulates an upper-layer interface and provides the interface for developers. The codec function is actually implemented in a local layer service.

The system library may include a plurality of function modules such as, a surface manager (surface manager), a media library (media libraries), a two-dimensional (2D) graphics engine (for example, SGL), and a three-dimensional (3D) graphics processing library (for example, OpenGL ES). The surface manager is configured to manage a display subsystem and provide fusion of 2D and 3D layers for a plurality of applications. The media library supports playing and recording in a plurality of common audio and video formats, a still image file, and the like. The media library may support a plurality of audio and video coding formats, for example, MPEG4, H.264, MP3, AAC, AMR, JPG, and PNG. The 2D graphics engine is a drawing engine for 2D graphics drawing. The three-dimensional graphics processing library is configured to implement three-dimensional graphics drawing, image rendering and composition, layer processing, and the like.

The Android runtime (Android Runtime) in the system library includes a kernel library and a virtual machine. The Android Runtime is responsible for scheduling and management of the Android system. The kernel library includes two parts: One part is a functional function that needs to be invoked by a java language, and the other part is a kernel library of Android. The application layer and the application framework layer run in the virtual machine. The virtual machine executes java files at the application layer and the application framework layer as binary files. The virtual machine is configured to perform functions such as object lifecycle management, stack management, thread management, security and exception management, and garbage collection.

The hardware abstraction layer has a standard interface implemented by a hardware vendor. For example, the hardware abstraction layer may include an HWC HAL, an audio HAL, and the like. The HWC HAL is responsible for determining whether a composition requirement of a to-be-composed layer exceeds a capability range of the HWC hardware module. It should be understood that HWC hardware modules manufactured by different manufacturers may have different capability ranges.

The kernel layer is a layer between hardware and software, and is a bottom part of the Android system. The kernel layer may include various driver (drivers) interfaces, such as a display driver, an audio driver, and a sensor driver.

It should be noted that although the Android system is used as an example for description in this embodiment of this application, a basic principle thereof is also applicable to a foldable-screen device based on an operating system such as iOS or Windows.

Based on the system architecture of the foldable-screen device shown in FIG. 7, the following specifically describes a specific interaction process between functional structures of the foldable-screen device in a process of implementing a layer composition method in this application with reference to a schematic diagram of an interaction procedure.

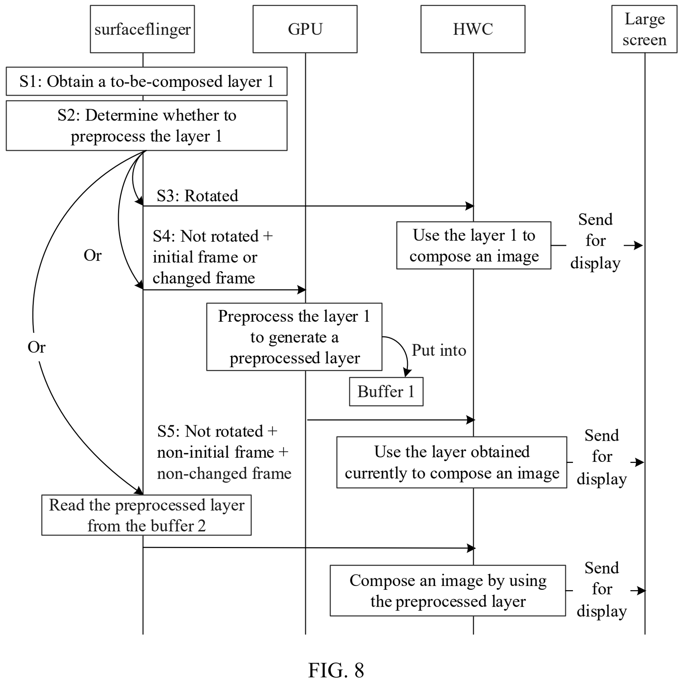

FIG. 8 is a schematic flowchart of a layer composition method based on intelligent scene recognition according to an embodiment of this application. The method may be applied to a terminal device on which at least one large screen is disposed, and the large screen uses a horizontal installation manner. When the large screen is in a portrait state, as shown in FIG. 8, the method includes the following S1 to S5.

S1: A SurfaceFlinger obtains a to-be-composed layer 1.

The layer 1 is a layer corresponding to a window of any application, for example, a wallpaper layer, a home screen layer, a status bar layer, or a video layer.

In some embodiments, metadata/a resource of the layer 1 may be stored into a buffer. Metadata/resources of different layers are stored into different buffers. For example, a home screen application may draw the home screen layer by using a render thread, and store the home screen layer into a buffer. A system UI may draw the status bar layer by using the render thread, and store the status bar layer into another buffer. In this embodiment of this application, the buffer used to store the metadata/the resource of the layer may be an anonymous shared memory (anonymous shared memory).

In one case, the layer 1 is a home screen layer or a status bar layer, and composition tasks of these layers are delivered by using a Vsync-APP signal to the SurfaceFlinger.

The home screen layer is used as an example. The home screen application may notify the SurfaceFlinger by using a WMS to create a home screen window, and the window is used to display a home screen. When the home screen changes, for example, a location of an icon changes, or a user clicks an icon, the home screen application may perform a set view setView() method to add a view (view). In a process of performing setView() by the home screen application, a relayout requestLayout() method is first performed, and then an add window addWindow() method is performed. The requestLayout() method is used to trigger redrawing of the view, and the addWindow() method is used to add a window to the view. When the requestLayout() method is performed, the home screen application interacts with the SurfaceFlinger to request to register. After the registration succeeds, the SurfaceFlinger returns a Vsync-APP signal to the home screen application. Then, the home screen application draws the home screen layer by using the render thread, stores the home screen layer into a buffer, and notifies the SurfaceFlinger of the buffer by invoking a function. The buffer includes the layer information of the layer 1.

In another case, the layer 1 is a wallpaper layer or a video layer, and composition tasks of these layers are not delivered to the SurfaceFlinger based on the Vsync-APP signal.

The video layer is used as an example. A video application may indicate a video codec to decode a video resource. The video resource stores a decoded resource into a buffer, and invokes a function to send the buffer to the SurfaceFlinger. The buffer includes the layer information of the layer 1.

For example, the layer information may include a layer name, a status bit, a layer stacking order, and/or a rotation parameter.

The layer name may be used to indicate a name of the layer 1, such as a status bar layer, a home screen layer, a video layer, a browser layer, and a wallpaper layer.

The status bit is used to indicate whether a rotation operation has been performed on the layer 1. For example, the status bar layer and the home screen layer are rotated layers drawn by an application, and status bits are identified by using "rotated". For another example, the wallpaper layer and the video layer are layers that are read by using a video codec and that are not rotated, and the status bits are identified by using "not rotated".

The layer stacking order is used to indicate a stacking order of the layer 1 in a plurality of layers. For example, the wallpaper layer is located at a bottom of the plurality of layers, and the status bar layer is located at a top of the plurality of layers.

The rotation parameter is used to indicate a rotation direction and a rotation angle of the layer 1, for example, rotating by 90° counterclockwise or rotating by 90° clockwise.

S2: The SurfaceFlinger determines whether to preprocess the layer 1.

As an example, the SurfaceFlinger may include a layer recognition module. The layer recognition module may determine, according to the status bit and the buffer of the layer 1, whether the layer 1 needs to be preprocessed. The status bit is used to indicate whether an application 1 has performed a rotation operation on the layer 1. The buffer is used to store the metadata/the resource of the layer 1.

Different frames are stored into different buffers. Therefore, when the application sends a new buffer to the SurfaceFlinger, the layer recognition module may determine receiving of a new frame (that is, an initial frame or a changed frame), and determine, with reference to a status bit, whether to perform preprocessing. In some other cases, when the application does not send a new buffer to the SurfaceFlinger, to keep synchronous refresh of the plurality of layers, a previously received frame may continue to be sent to the layer recognition module, and the layer recognition module may determine that the initial frame and the changed frame are not received in this round, and determine, with reference to the status bit, whether to perform preprocessing.

The initial frame means that another layer of the application 1 is not stored into the buffer corresponding to the application 1 before the SurfaceFlinger receives the composition task of the layer 1, that is, the layer 1 is an initial composition task of the application 1 received by the SurfaceFlinger. The changed frame means that before receiving the composition task of the layer 1, the SurfaceFlinger has received a composition task of another layer of the application 1, and the another layer and the layer 1 are stored into different buffers.

Table 1 shows a correspondence among layer information, whether to preprocess, and whether to use a preprocessed layer.

**Table 1**

| Layer name | Status bit | Initial frame or changed frame | Whether to preprocess | Whether to use preprocessed layer |
|---|---|---|---|---|
| Status bar layer | Rotated | No | No | No |
| Status bar layer | Rotated | Yes | No | No |
| Home screen layer | Rotated | No | No | No |
| Home screen layer | Rotated | Yes | No | No |
| Wallpaper layer | Not rotated | Yes | Yes | - |
| Wallpaper layer | Not rotated | No | No | Yes |
| Video layer | Not rotated | Yes | Yes | - |
| Video layer | Not rotated | No | No | Yes |

S3: If the status bit of the layer information is "rotated", the SurfaceFlinger notifies the HWC to use the layer 1 to compose an image.

When the foldable-screen device is in an unfolded state and the large screen is in the portrait state, if the status bit of the layer 1 (for example, the status bar layer and the home screen layer shown in Table 1) is "rotated", regardless of whether the frame is the initial frame or the changed frame, in this case, no layer rotation needs to be performed, and there is no problem that a height of a to-be-rotated layer exceeds the maximum rotation height (for example, 2176 pixels) supported by the HWC hardware module, and HWC composition may be used. In this case, the SurfaceFlinger may send a composition request to the HWC. The HWC composes the layer 1 and another layer to generate one frame of image, and sends the image to the large screen for display.

S4: If the status bit is "not rotated", and the layer 1 belongs to the initial frame or the changed frame, the SurfaceFlinger instructs the GPU to preprocess the layer 1 to generate a preprocessed layer, and store the preprocessed layer into a buffer.

When the foldable-screen device is in an unfolded state and the large screen is in the portrait state, if the status bit of the layer 1 (for example, the wallpaper layer shown in Table 1) is "not rotated", and the layer 1 belongs to the initial frame or the changed frame, it indicates that a preprocessed layer of the layer 1 is not previously stored, and layer rotation needs to be performed on the layer 1. The height of the layer 1 (for example, 2300 pixels) exceeds the maximum rotation height supported by the HWC hardware module (for example, 2176 pixels), and GPU composition may be used. In this case, the SurfaceFlinger sends a composition request to the GPU. The GPU rotates the layer 1 to generate a preprocessed layer, and stores the preprocessed layer into a buffer (such as a buffer 1), so as to be used for layer composition of a next frame. In addition, in this frame composition, the GPU may send the rotated preprocessed layer to the HWC, and the HWC composes the rotated preprocessed layer and another layer to generate one frame of image and send the image to the large screen for display.

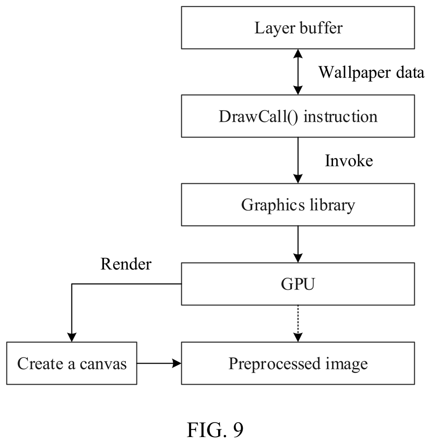

For example, FIG. 9 shows a process of rendering a preprocessed layer by using a GPU.

As shown in FIG. 9, the application 1 first creates a canvas/drawing surface (surface). Each activity (activity) in an Android system has a separate canvas (called a layer on the SurfaceFlinger side). Regardless of how complex a view (view) structure is arranged for an activity, the view is finally rendered on a canvas of the activity to which the belongs. For example, a surface creation process of an application is as follows: The WMS creates a connection to the SurfaceFlinger for the application. The application performs the relayoutWindow() method to trigger the WMS to create a SurfaceControl object. The WMS obtains a surface through the SurfaceControl object.

After the surface is created, a preprocessed layer may be rendered at the surface. A specific process of rendering the preprocessed layer in the surface is as follows: After the video codec decodes the wallpaper resource, the decoded wallpaper resource is stored into a layer buffer (layer buffer). The WMS sets a rotation parameter, such as a rotation direction and a rotation angle, for the wallpaper layer. The SurfaceFlinger may read the metadata/the resource (referred to as wallpaper data) of the wallpaper layer from the buffer, and then execute a DrawCall() instruction to invoke an image programming interface, such as an OpenGL interface or a Vulkan interface, to command the GPU to perform a rendering operation. The DrawCall() instruction carries the rotation parameter. Then, the GPU may render the rotated wallpaper layer according to the rotation parameter.

S5: If the status bit is "not rotated", and the layer 1 does not belong to the initial frame or the changed frame, the SurfaceFlinger notifies the HWC to compose an image by using a previously stored preprocessed layer.

When the foldable-screen device is in the unfolded state and the large screen is in the portrait state, if the status bit of the layer 1 (for example, the wallpaper layer shown in Table 1) is "not rotated", and the layer 1 does not belong to the initial frame or the changed frame, it indicates that the preprocessed layer of the layer 1 has been previously stored, and the preprocessed layer may be directly used. In this case, the SurfaceFlinger reads the preprocessed layer from the buffer (for example, a buffer 2), and then sends the preprocessed layer to the HWC. The HWC composes the preprocessed layer and another layer to generate one frame of image, and sends the image to the large screen for display.

The buffer 1 in S4 and the buffer 2 in S5 may be a same buffer.

In the foregoing layer composition method, when the large screen is turned on in the portrait state, a to-be-composed layer is recognized, so as to determine whether the layer needs to be preprocessed by using the GPU, such as wallpaper layer rotation. If preprocessing needs to be performed by using the GPU, the preprocessed layer is rendered by using the GPU. In this way, when a same layer processing task exists subsequently, the preprocessed layer may be directly sent to the HWC for hardware composition, thereby reducing overall power consumption and improving overall performance.

It should be noted that the preprocessing operation in the foregoing layer composition method is described by using layer rotation as an example, and this application is not limited thereto. In actual implementation, when the HWC hardware module has limited capabilities in such as corner clipping, a quantity of layers, a conversion format, a layer size, a zoom ratio, and window blur, and a composition requirement of a layer exceeds a capability range of the HWC hardware module, it may be determined, by referring to the foregoing layer composition method, whether the GPU needs to be used to preprocess the layer. If the GPU needs to be used to perform preprocessing, the GPU is used to render a preprocessed layer. Therefore, when a same layer processing task subsequently exists, the preprocessed layer may be sent to the HWC for hardware composition. References may be made to the descriptions of the foregoing embodiments. Details are not described herein again.

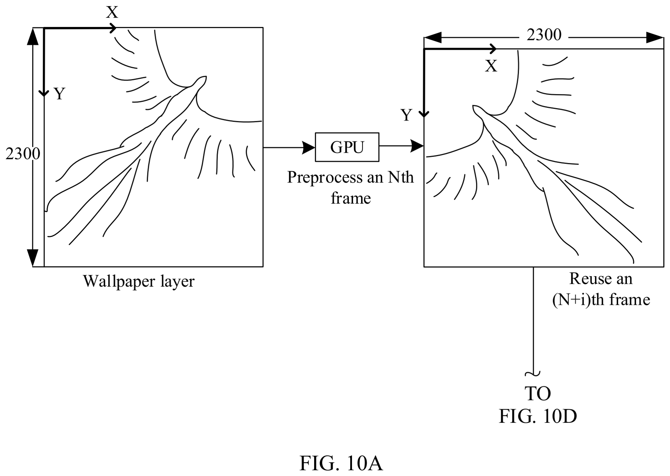

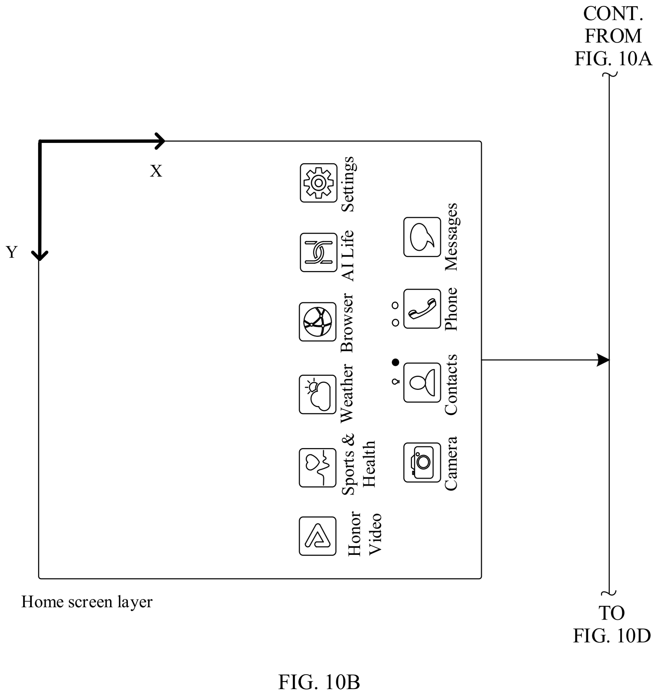

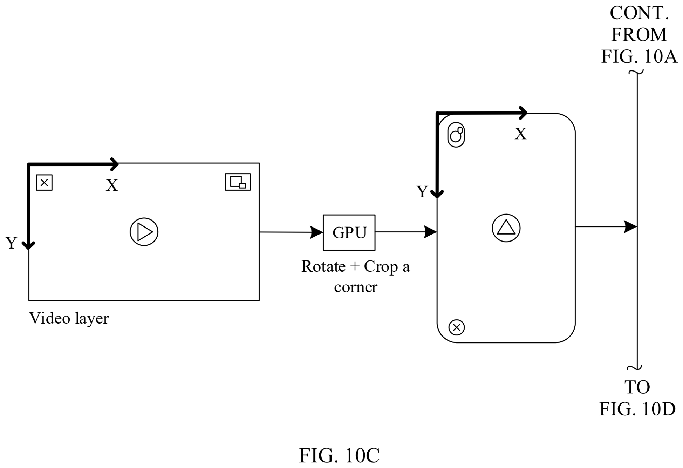

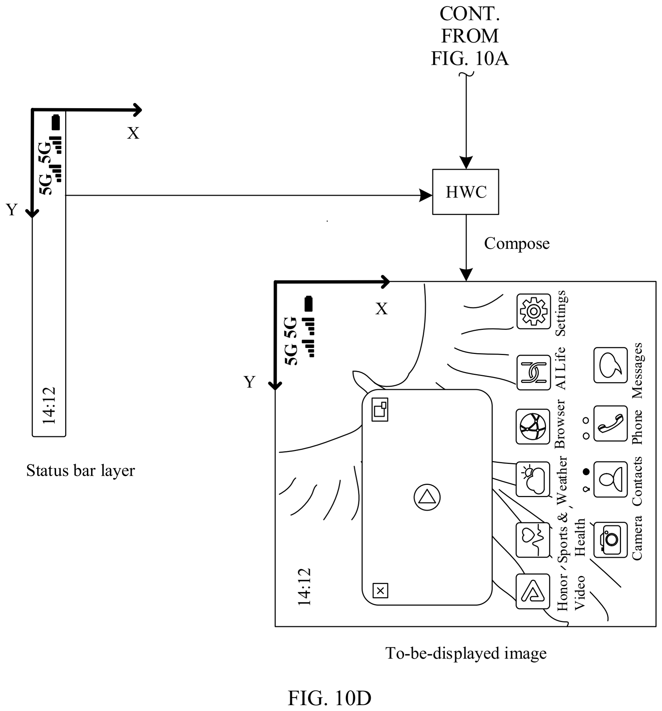

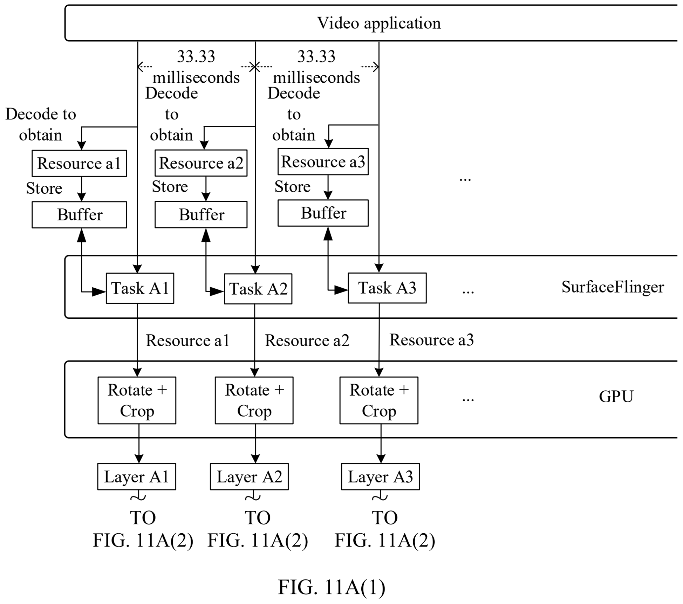

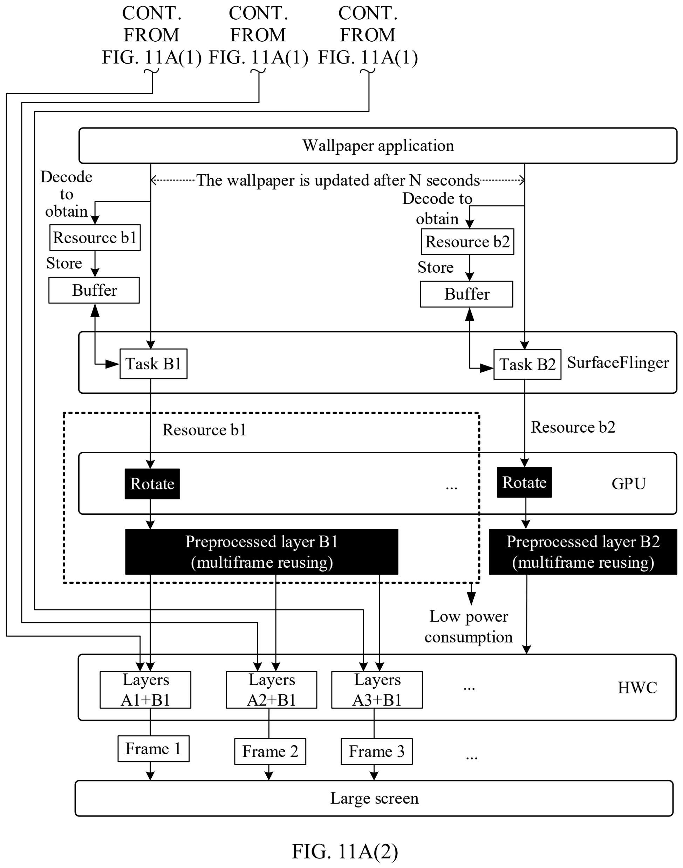

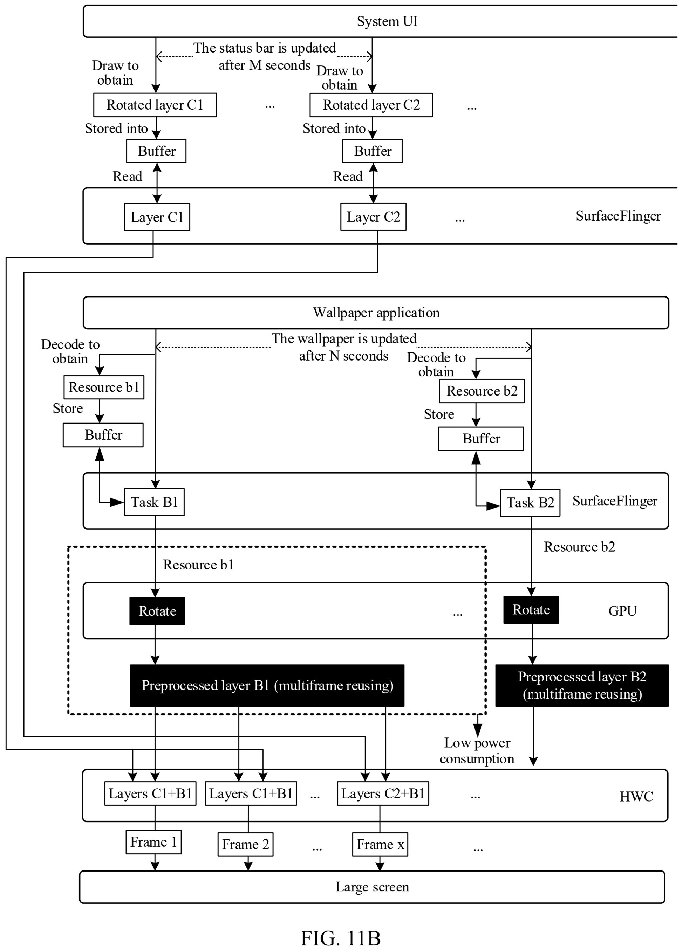

In the foregoing embodiment, one layer is used as an example to describe a specific procedure of whether to preprocess the layer. For ease of understanding, the following describes a layer composition method based on intelligent scene recognition with reference to FIG. 10A to FIG. 10D, FIG. 11A(1) and FIG. 11A(2), and FIG. 11B.

FIG. 10A to FIG. 10D show a schematic diagram of composing a plurality of layers into one frame of image based on a preprocessed layer.

When the large screen is in the portrait state, the SurfaceFlinger first executes a composition task of an Nth frame, and then executes a composition task of an (N+i)th frame. Both the Nth frame and the (N+i)th frame are formed by a wallpaper layer, a home screen layer, a video layer, and a status bar layer. Stacking orders of these layers are successively: the wallpaper layer, the home screen layer, the video layer, and the status bar layer. It should be understood that, in actual implementation, the Nth frame and the (N+i)th frame may alternatively include more or fewer layers, for example, the video layer is replaced with a browser layer, which is not limited in this embodiment of this application.

For the composition task of the Nth frame, the height of the wallpaper resource (for example, 2300 pixels) exceeds the maximum rotation height (for example, 2176 pixels) supported by the HWC hardware module. Therefore, the SurfaceFlinger allocates the composition task of the wallpaper layer to the GPU. The GPU rotates the wallpaper layer by 90° counterclockwise to obtain a preprocessed layer, and places the preprocessed layer into a buffer.

For the composition task of the (N+i)th frame, if the wallpaper layer of the (N+i)th frame and the wallpaper layer of the Nth frame are a same wallpaper resource, the SurfaceFlinger reads the preprocessed layer from the buffer, and then sends the preprocessed layer to the HWC. In addition, the SurfaceFlinger sends the home screen layer and the status bar layer to the HWC. With reference to the description in the foregoing embodiment, the video layer is read by using a video codec, and the video codec does not have a rotation capability. The video layer is a layer that has not been rotated. In addition, the HWC does not support corner clipping. Therefore, the SurfaceFlinger may allocate the composition task of the video layer to the GPU. The GPU rotates the video layer by 90° counterclockwise and clips a corner, and then sends the processed video layer to the HWC. The HWC successively stacks the wallpaper layer, the home screen layer, the video layer, and the status bar layer to obtain one frame of video image, and sends the video image to the large screen for display. When the large screen is in the portrait state, the phoenix displayed on the large screen flies towards the upper right (as shown in FIG. 5B(1) to FIG. 5B(3)), which is consistent with the flying direction of the phoenix displayed on the small screen (as shown in FIG. 4D). In this way, although the installation directions of the large screen and the small screen are inconsistent, the wallpaper directions displayed on the large screen and the small screen that the user finally sees are consistent, which is more consistent with use habits of the user.

As an example, FIG. 11A(1) and FIG. 11A(2) show a schematic diagram of composing a video layer and a wallpaper layer into a plurality of frames of images based on a preprocessed layer.

As shown in FIG. 11A(1) and FIG. 11A(2), a frequency at which a video application updates a window is far greater than a frequency at which a wallpaper application updates a window. To maintain a same refresh frequency between the wallpaper layer and the video layer, before the wallpaper application updates the window, the SurfaceFlinger may perform wallpaper layer composition based on a same wallpaper resource.

A composition process of a frame 1 is as follows: The video application delivers a task A1 to the SurfaceFlinger. Because rotation and corner clipping need to be performed on the video layer, the SurfaceFlinger delivers the task A1 to the GPU. The GPU rotates a video resource a1 obtained from the buffer by 90° counterclockwise and clips a corner to obtain a layer A1, and then sends the layer A1 to the HWC. Meanwhile, the wallpaper application delivers a task B1 to the SurfaceFlinger. Because the wallpaper layer needs to be rotated, and the height of the wallpaper layer exceeds the maximum rotation height (for example, 2176 pixels) supported by the HWC hardware module, the SurfaceFlinger delivers the task B1 to the GPU. The GPU rotates a video resource b1 obtained from the buffer by 90° counterclockwise to obtain a layer B1, and then sends the layer B1 to the HWC. The HWC stacks the layer A1 on the layer B1 to form the frame 1.

A composition process of a frame 2 is as follows: The video application delivers a task A2 to the SurfaceFlinger. Because rotation and corner clipping need to be performed on the video layer, the SurfaceFlinger delivers the task A2 to the GPU. The GPU rotates a video resource a2 obtained from the buffer by 90° counterclockwise and clips a corner to obtain a layer A2, and then sends the layer A2 to the HWC. Meanwhile, because the wallpaper application does not deliver a new task to the SurfaceFlinger, the SurfaceFlinger may read a preprocessed layer B1 from the buffer, and then send the preprocessed layer B1 to the HWC. The HWC stacks the layer A2 on the layer B1 to form the frame 2.

As another example, FIG. 11B shows a schematic diagram of composing a status bar layer and a wallpaper layer into a plurality of frames of images based on a preprocessed layer.

During device operating, the system UI and the wallpaper application may update windows at different frequencies. For example, when a battery level changes, a cellular network changes, or a wireless network changes, the system UI notifies the SurfaceFlinger to update the status bar layer. For another example, when the wallpaper of the wallpaper application changes, the wallpaper application notifies the SurfaceFlinger to update the wallpaper layer.

It is assumed that at a moment, the system UI invokes a render thread for drawing to obtain a rotated layer C1, and stores the layer C1 into the buffer. The SurfaceFlinger reads the rotated layer C1 from the buffer, and directly sends the rotated layer C1 to the HWC. Meanwhile, the wallpaper application delivers a task B1 to the SurfaceFlinger. Because the wallpaper layer needs to be rotated, and the height of the wallpaper layer exceeds the maximum rotation height supported by the HWC hardware module, the SurfaceFlinger delivers the task B1 to the GPU. The GPU rotates a video resource b1 obtained from the buffer by 90° counterclockwise to obtain a processed layer B1, and sends the processed layer B1 to the HWC. The HWC stacks the layer C1 on the preprocessed layer B1 to form the frame 1.

The status bar is updated at an Mth second after this moment, and the wallpaper is updated at an Nth second after this moment, where N is greater than M. Before the Mth second, neither the wallpaper layer nor the status bar layer is updated, and the HWC continues to stack the layer C1 on the preprocessed layer B1 to form the frame 2. After the Mth second, the status bar is updated. The system UI invokes the render thread for drawing to obtain a rotated layer C2, and stores the layer C2 into the buffer. The SurfaceFlinger reads the rotated layer C2 from the buffer, and directly sends the rotated layer C2 to the HWC. The HWC stacks the layer C2 on the preprocessed layer B1 to form a frame x. After the Nth second, the wallpaper layer is updated, and the wallpaper application delivers a task B2 to the SurfaceFlinger. Because the wallpaper layer needs to be rotated, and the height of the wallpaper layer exceeds the maximum rotation height supported by the HWC hardware module, the SurfaceFlinger delivers the task B1 to the GPU. The GPU rotates a video resource b2 obtained from the buffer by 90° counterclockwise to obtain a preprocessed layer B2, and sends the preprocessed layer B2 to the HWC.

With reference to the descriptions of FIG. 5A(1) to FIG. 5B(3), FIG. 6A, and FIG. 6B in the foregoing embodiments, if the layer composition solution shown in FIG. 5A(1) to FIG. 5B(3), FIG. 6A, and FIG. 6B is used, a plurality of wallpaper layers are based on a same wallpaper resource, and the GPU may need to perform a plurality of rotation operations on the same wallpaper resource. However, GPU composition has a disadvantage of high power consumption, and frequently rotating the wallpaper layer causes overall high power consumption, poor performance, and severe heating. In the composition solution provided in FIG. 11A(1) to FIG. 11B, the GPU may use a preprocessed layer stored during composition of the frame 1. For a plurality of frames located after the frame 1, if wallpaper layers of the plurality of frames and the wallpaper layer of the frame 1 are based on a same wallpaper resource, a rotation operation does not need to be performed on the wallpaper layer frequently, but the preprocessed layer is used, thereby reducing overall power consumption and load and improving overall performance.

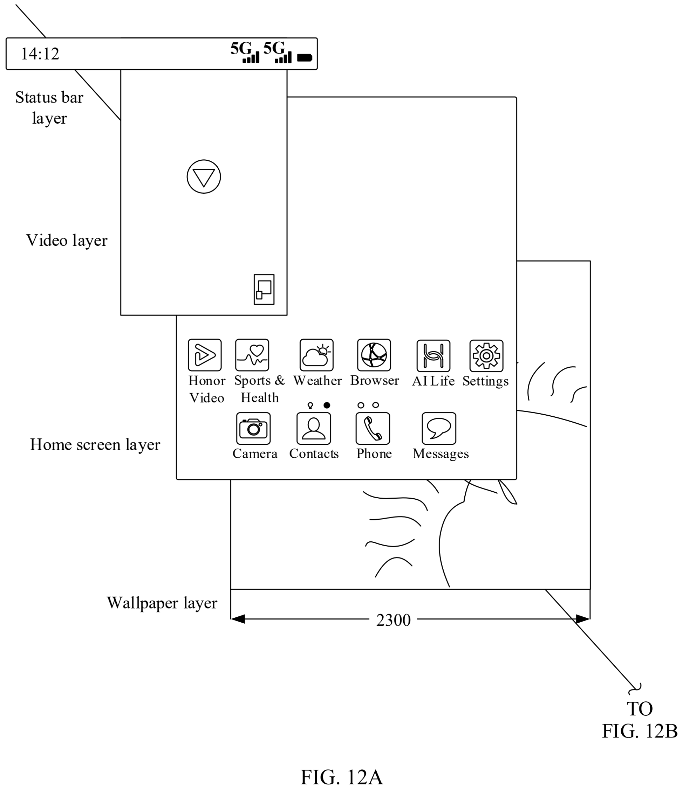

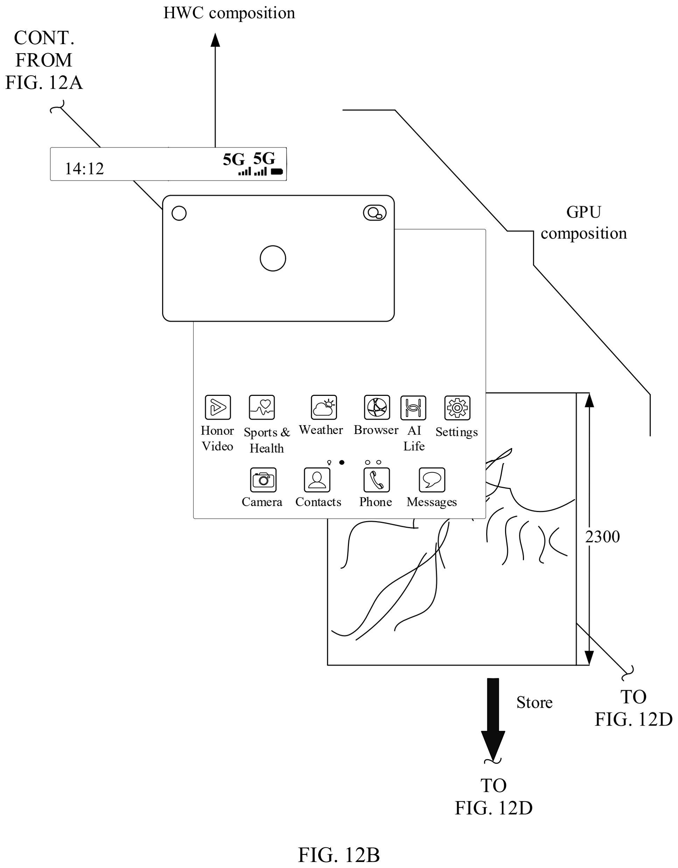

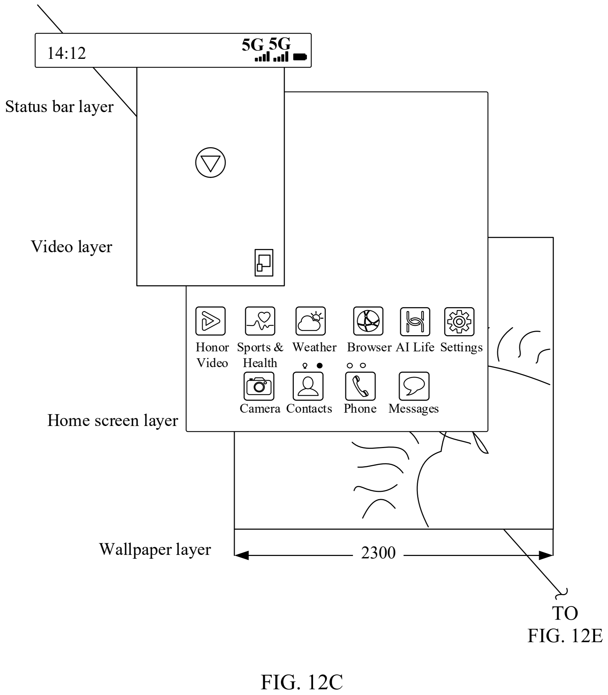

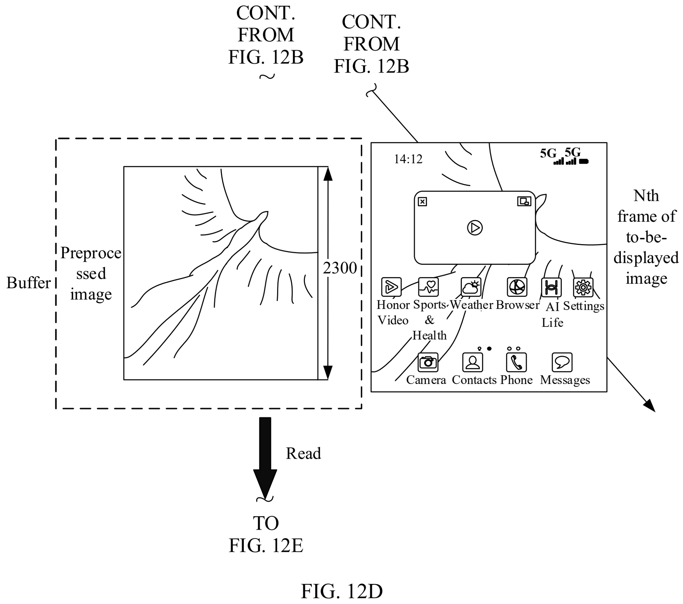

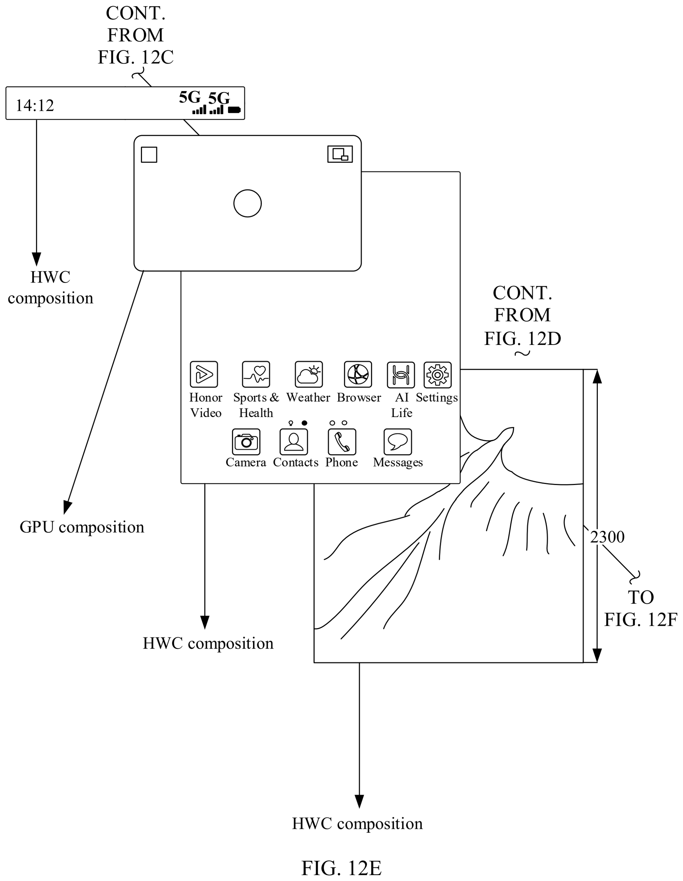

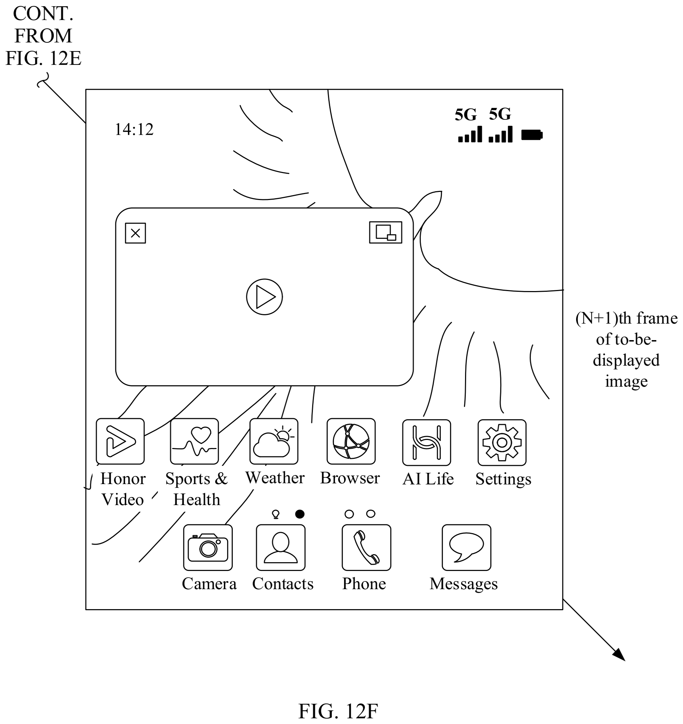

Based on FIG. 10A to FIG. 10D, FIG. 11A(1) and FIG. 11A(2), and FIG. 11B, FIG. 12A to FIG. 12F show a schematic diagram of composing an Nth frame of image and an (N+1)th frame of image. As shown in FIG. 12A to FIG. 12F, in a composition process of the Nth frame of image, the GPU rotates a wallpaper layer, and sends a rotated wallpaper layer (a preprocessed layer) to a buffer. In a composition process of the (N+1)th frame of image, a wallpaper resource of the (N+1)th frame of image is the same as a wallpaper resource of the Nth frame of image, and a preprocessed layer may be directly used for composition.

The following separately describes specific method procedures for composing the Nth frame of image and the (N+1)th frame of image with reference to the following examples 1 and 2 by using the functional module in the foldable-screen device shown in FIG. 7 as an execution body.

### Example 1

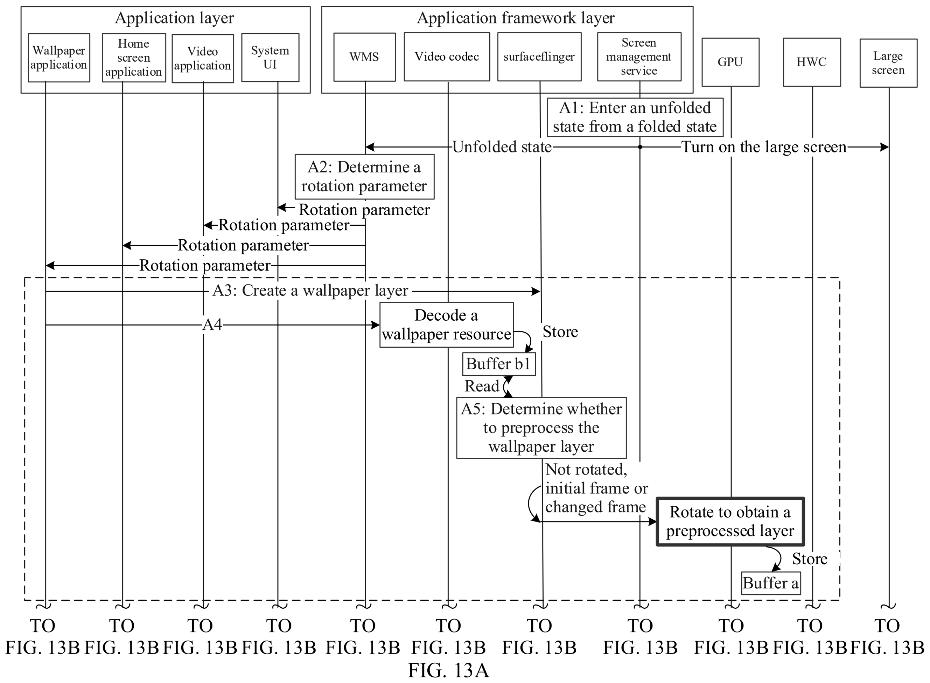

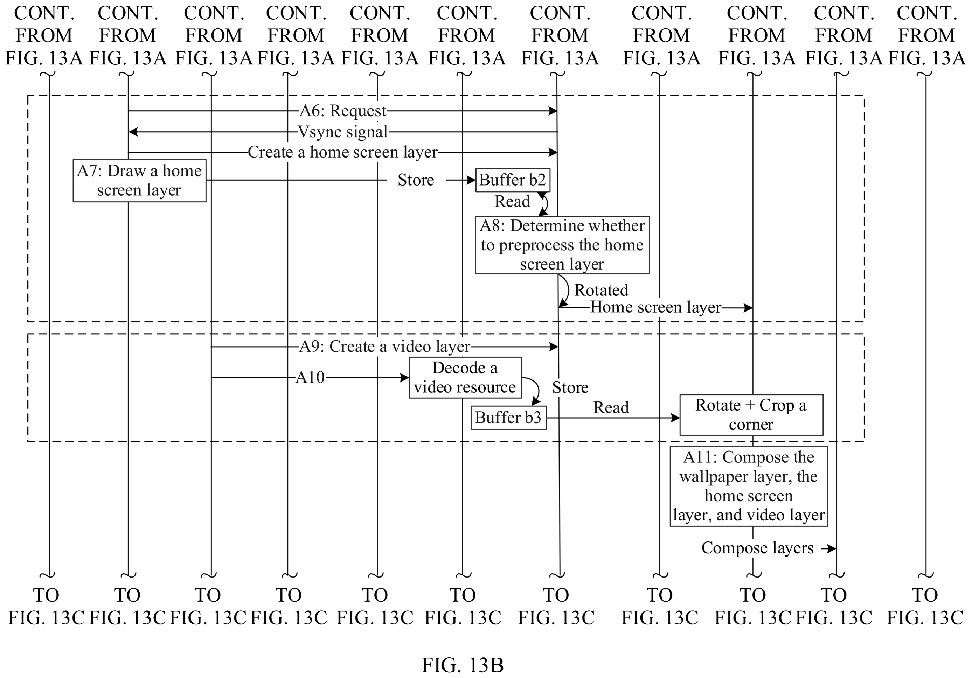

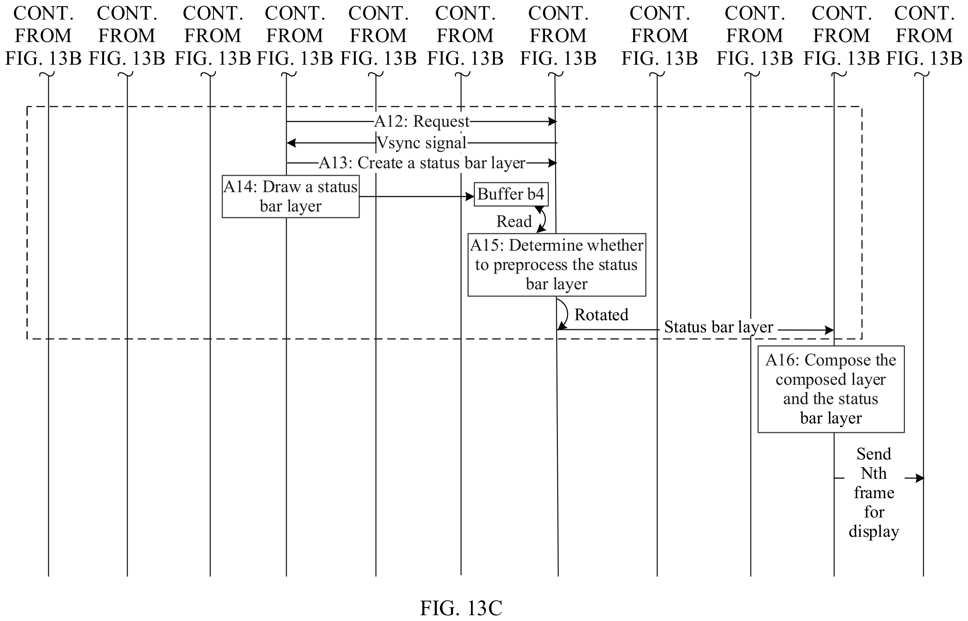

FIG. 13A to FIG. 13C show a schematic flowchart of a method for composing an Nth frame of image based on a preprocessed layer. The method may be applied to a foldable-screen device in an unfolded state. As shown in FIG. 13A to FIG. 13C, the method may include the following A1 to A16.

A1: A screen management service determines that the foldable-screen device switches from a folded state to the unfolded state.

In some embodiments, a sensor disposed on the foldable-screen device may collect data such as a folding angle and an acceleration of the foldable-screen device in real time, and send the data to a hardware configuration module of the foldable-screen device. The screen management service may obtain information such as a screen direction, a window direction, and a folding status from the hardware configuration module, and determine a current screen status according to the information, for example, the foldable-screen device enters the unfolded state from the folded state. The screen management service may then notify a WMS of the current screen status.

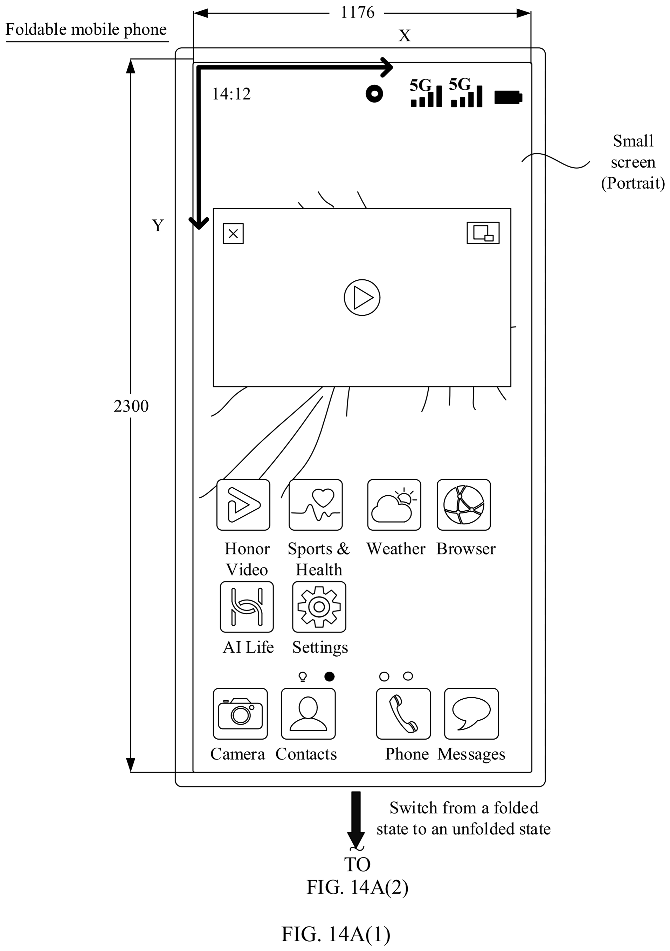

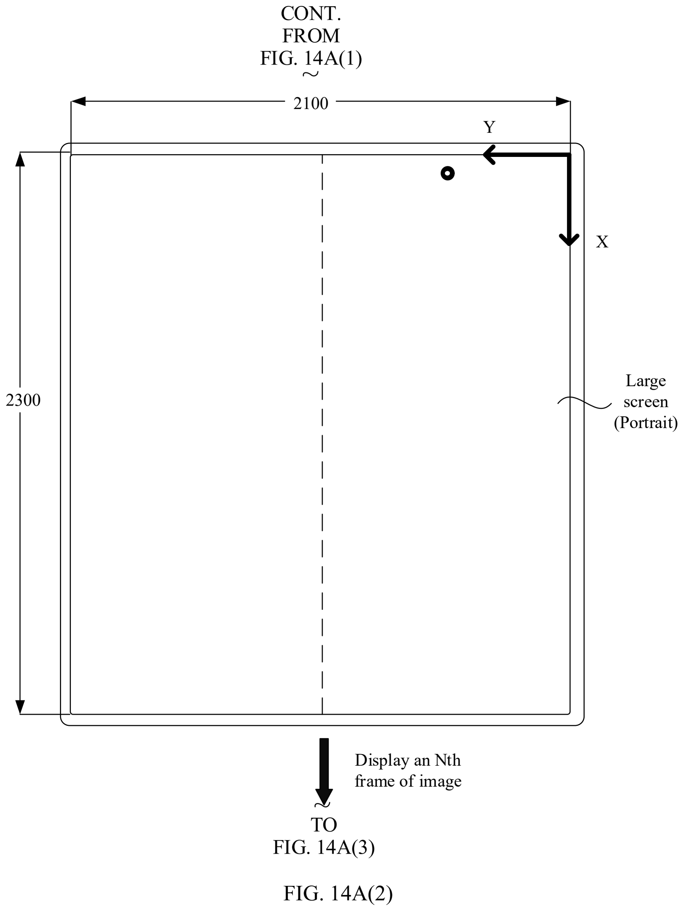

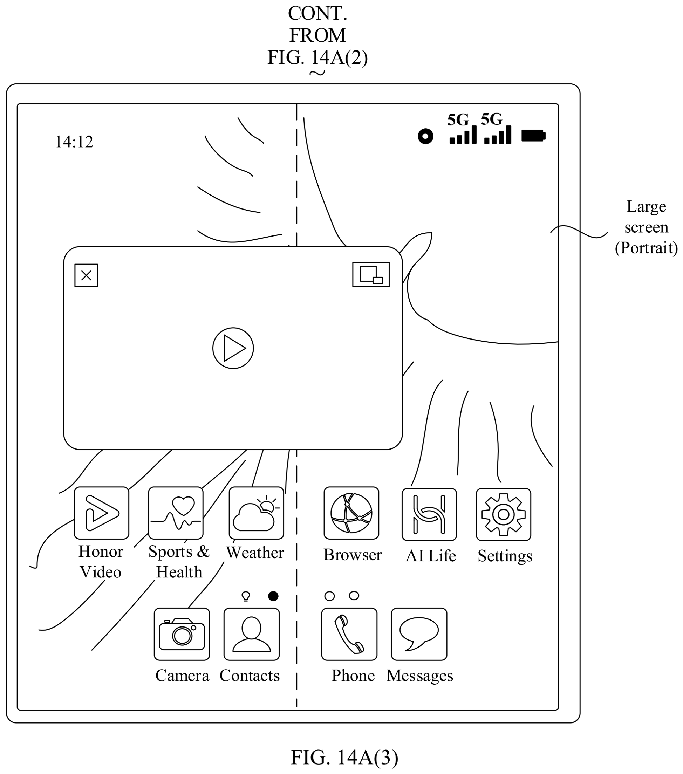

For example, as shown in FIG. 14A(1) to FIG. 14A(3), at an initial moment, the foldable-screen device is in the folded state, and a wallpaper, a home screen, a video window, a status bar, and the like are displayed on a small screen. When a user wants to use a large screen, the foldable-screen device may be bent outwards with both hands, so that the foldable-screen device switches from the folded state to the unfolded state. The sensor disposed on the foldable-screen device may collect data such as the folding angle and the acceleration in real time, and send the data to the hardware configuration module of the foldable-screen device. In this way, the screen management service may obtain information such as the screen direction, the window direction, and the folding status from the hardware configuration module. After determining, according to the information, that the foldable-screen device switches from the folded state to the unfolded state, the screen management service may turn on the large screen and notify the WMS. It should be noted that in the scene example shown in FIG. 14A(1) to FIG. 14A(3), after it is determined that the foldable-screen device switches to the unfolded state, regardless of whether the large screen is in a portrait state or a landscape state, the foldable-screen device is in the portrait state by default, and a wallpaper resource needs to be rotated.

It should be noted that FIG. 14A(1) to FIG. 14A(3) are described by using an example in which the foldable-screen device is an inward foldable-screen mobile phone. This application is not limited thereto. The foldable-screen device may alternatively be an outward foldable-screen mobile phone. Specifically, when the outward foldable-screen mobile phone is in the folded state, the small screen displays the wallpaper, and the wallpaper resource does not need to be rotated at this moment. After the mobile phone switches from the folded state to the unfolded state, the large screen displays the wallpaper, and the wallpaper resource needs to be rotated at this moment. The large screen and the small screen may use a same wallpaper resource.

In addition, the foregoing A1 is described by using a scene example of switching from the folded state to the unfolded state, and this application is not limited thereto. In another scene example, the image composition method provided in this embodiment of this application may also be performed.

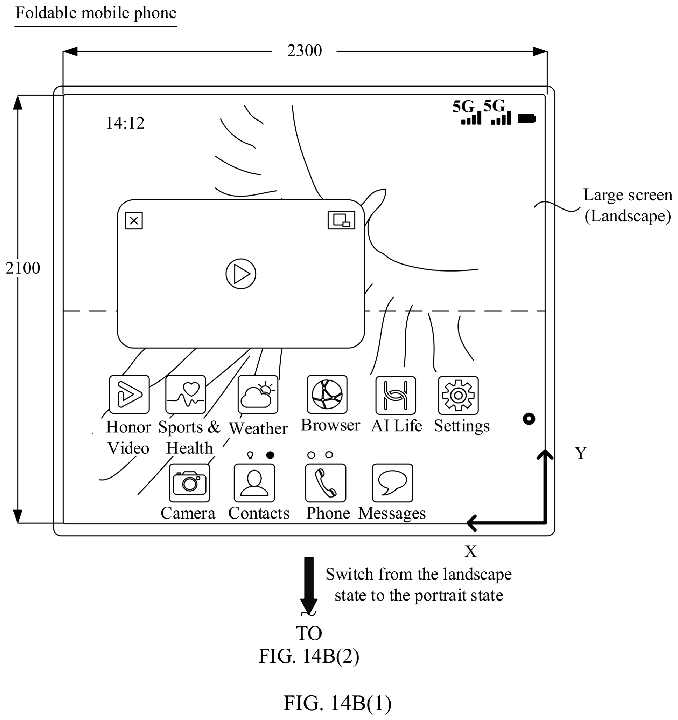

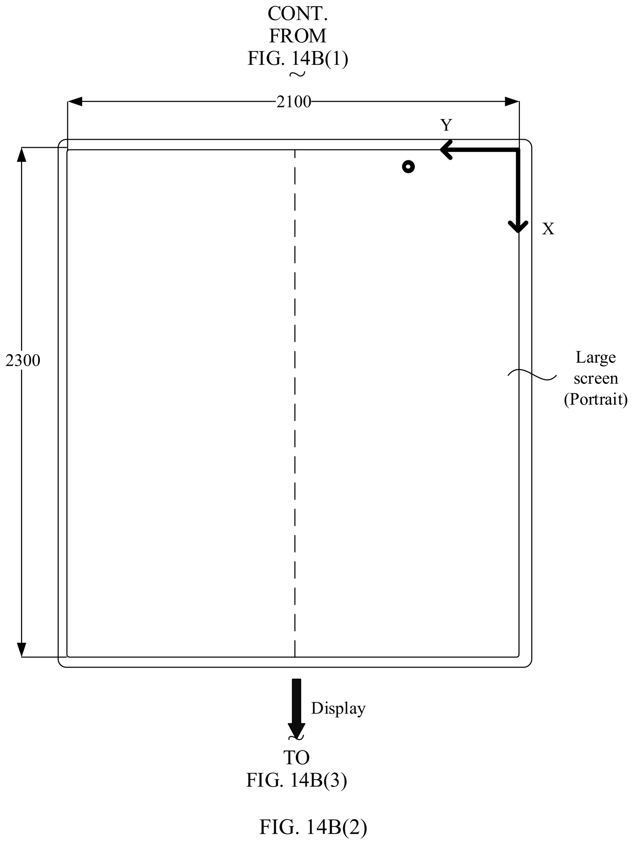

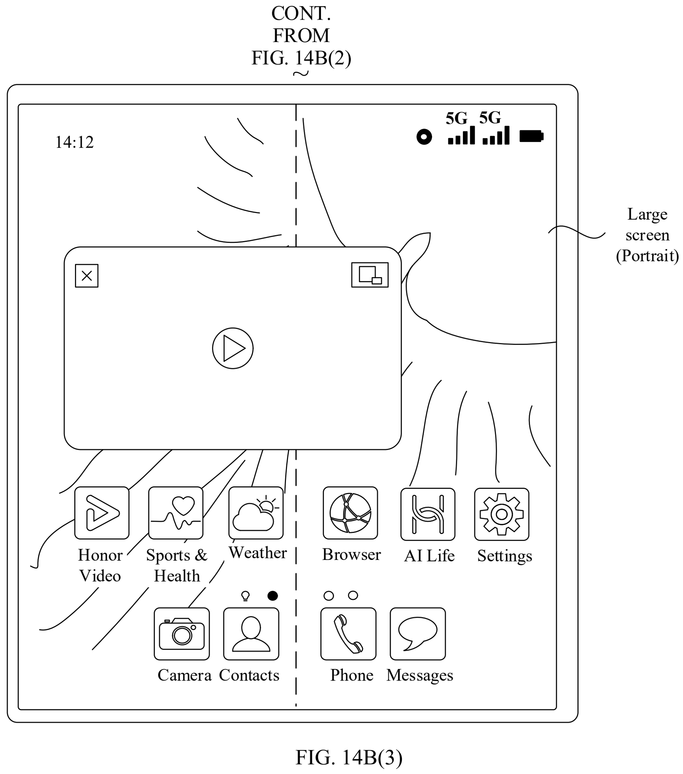

As another scene example, as shown in FIG. 14B(1) to FIG. 14B(3), at an initial moment, the foldable-screen device is in the unfolded state, and a wallpaper, a home screen, a video window, a status bar, and the like are displayed on the large screen in the landscape state. If the user rotates the large screen clockwise or counterclockwise, the sensor disposed on the foldable-screen device may collect data such as the folding angle and the acceleration in real time, and send the data to the hardware configuration module of the foldable-screen device. In this way, the screen management service may obtain the screen direction from the hardware configuration module, for example, switching from a large-screen landscape state to a large-screen portrait state, and notify the WMS, so that the WMS determines a rotation parameter (for example, rotation by 90° counterclockwise) of the layer according to the screen direction, the folding status, and the installation direction of the large screen, and performs the following A2-A16. It should be noted that before the user rotates the large screen clockwise or counterclockwise, the user may further trigger the foldable-screen device to enable a landscape/portrait function by operating a setting application or a control center. The landscape/portrait function allows display in a first direction when the large screen is in the landscape state, and display in a second direction when the large screen is in the portrait state, for example, the first direction is different from the second direction by 90° or 270° clockwise.

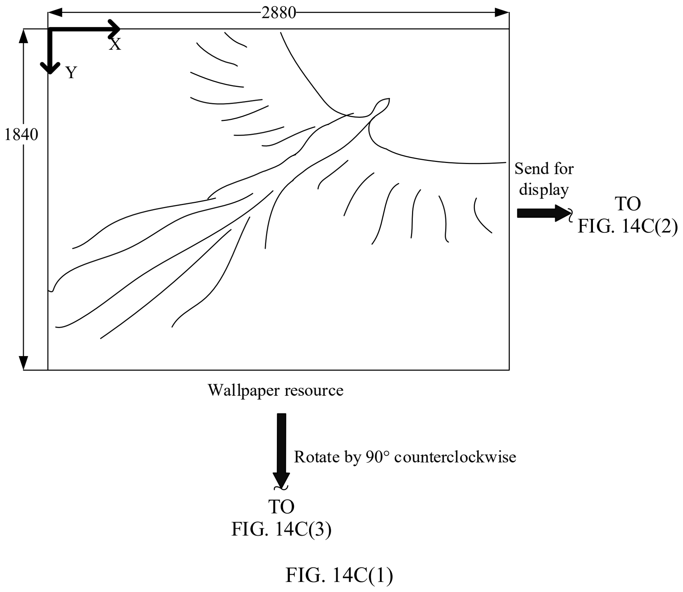

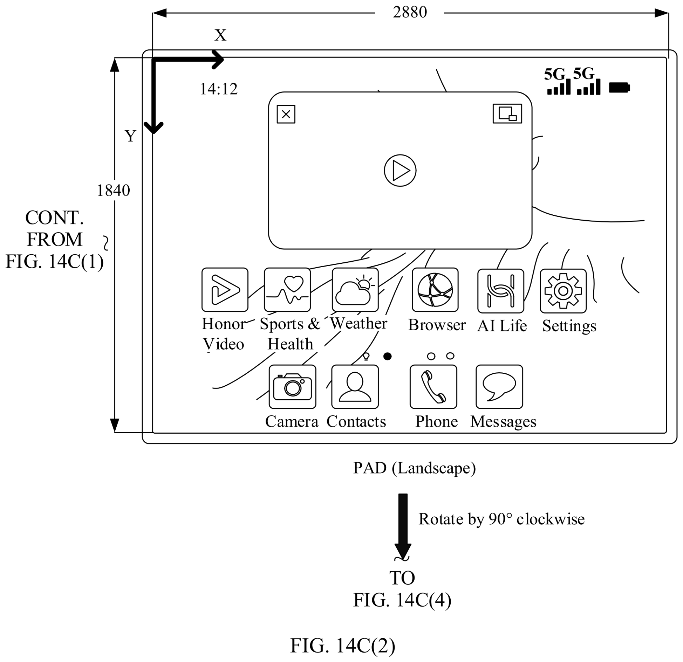

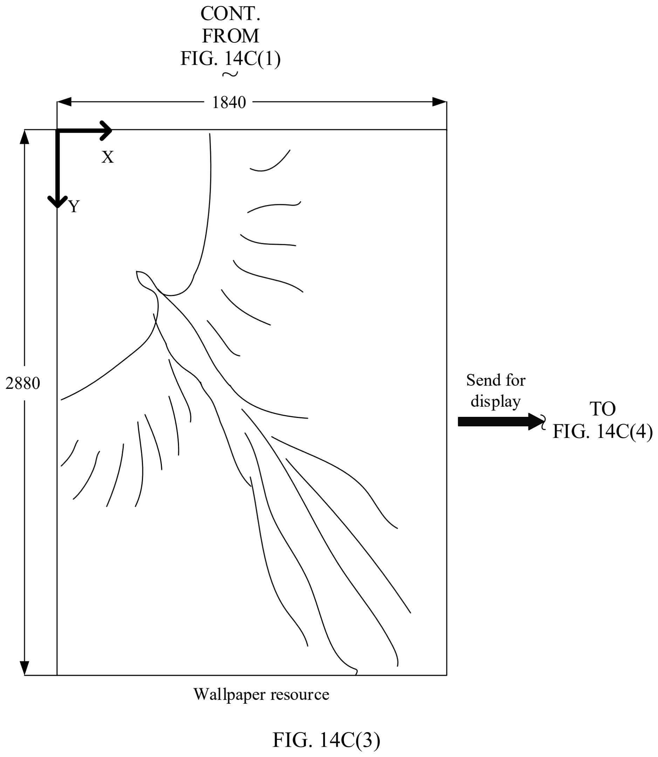

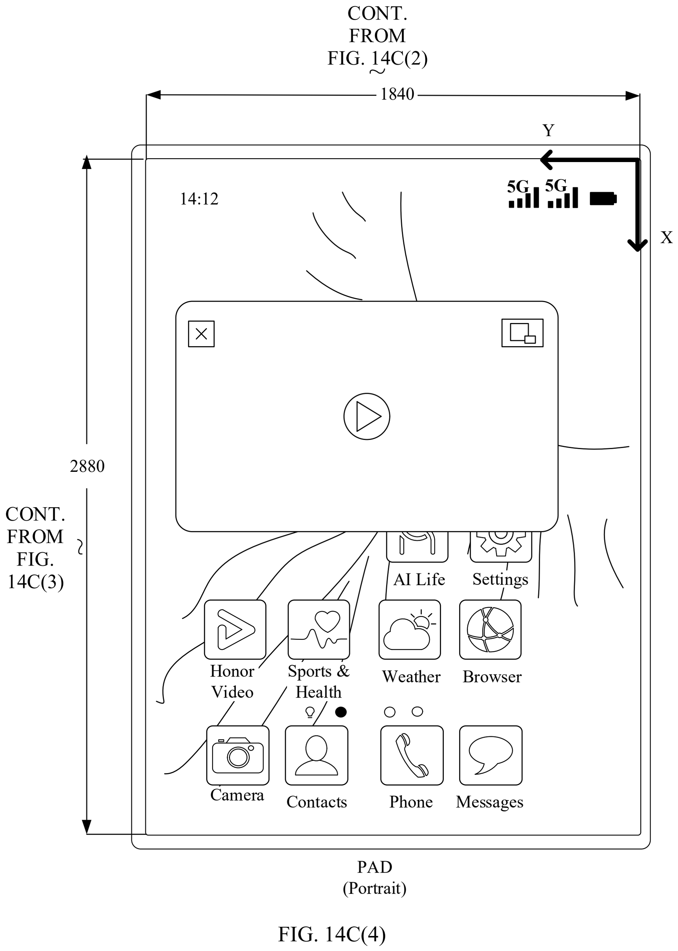

As another scene example, as shown in FIG. 14C(1) to FIG. 14C(4), a large screen is disposed on a PAD, and the large screen uses a horizontal installation manner. When the large screen is in the landscape state, the wallpaper direction is consistent with a direction of the large screen. In this case, there is no need to rotate the wallpaper. When the user rotates the large screen by 90° clockwise, the large screen switches from the landscape state to the portrait state. To make the wallpaper direction consistent with the direction of the large screen from a visual angle of the user, a screen management service of the PAD may calculate that a rotation parameter is rotation by 90° counterclockwise, and perform the following A2-A16. A horizontal installation manner of the large screen of the PAD is similar to the horizontal installation manner of the large screen of the foldable-screen device. References may be made to the descriptions of FIG. 4A-FIG. 4G in the foregoing embodiments, and details are not described herein again.

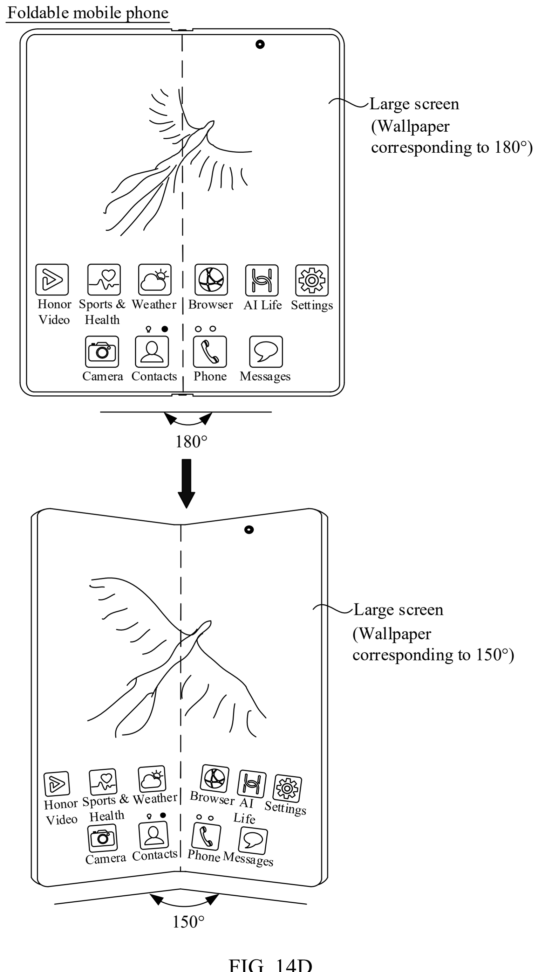

As another scene example, as shown in FIG. 14D, at an initial moment, the foldable-screen device is in the unfolded state, and a wallpaper, a home screen, a video window, a status bar, and the like are displayed on the large screen in the portrait state. The user may bend the foldable-screen device inwards with both hands. For example, the folding angle is reduced from 180° to 150°. The sensor disposed on the foldable-screen device may collect data such as the folding angle and the acceleration in real time, and send the data to the hardware configuration module of the foldable-screen device. In this way, the screen management service may obtain a folding angle change and the screen direction from the hardware configuration module, and notify the WMS. An embodiment of this application further provides a method for changing a dynamic wallpaper based on a folding angle. Each folding angle corresponds to one frame of wallpaper resource. When it is detected that a first folding angle D(A) changes to a second folding angle D(B), one frame of wallpaper resource corresponding to the second folding angle D(B) is determined. In this way, when the folding angle is changed in the portrait state of the large screen, the WMS still calculates the rotation parameter of the layer (for example, rotation by 90° counterclockwise), and performs the following A2-A16.

The following uses an example in which the foldable-screen device switches from the folded state to the unfolded state, to describe a method for composing an Nth frame of image with reference to A2-A16. The Nth frame of image may be one static wallpaper, or may be a last frame of a wallpaper video resource.

A2: The WMS determines a rotation parameter of a layer according to a screen direction, a folding status, and an installation direction of a large screen.

If the large screen is installed on a mobile phone body in the manner shown in FIG. 4B, the direction of the wallpaper resource is different from the installation direction of the large screen on the mobile phone body by 90° clockwise. The WMS determines that the large screen is in the portrait state according to the screen direction and the folded state. The WMS calculates that the rotation parameter of the layer is rotation by 90° counterclockwise. The WMS then notifies the wallpaper application, the home screen application, the video application, and the system UI of the rotation parameter.

When a window of any one of the wallpaper application, the home screen application, the video application, and the system UI changes, a changed application may create a layer, and send a composition task of the layer to the SurfaceFlinger. The following separately describes rendering and composition processes of the wallpaper layer, the home screen layer, the video layer, and the status bar layer by using A3-A5, A6-A8, A9-A10, and A12-A15. It should be noted that a sequence of performing these steps is not specifically limited in this embodiment of this application.

A3: The wallpaper application notifies the SurfaceFlinger to create a blank wallpaper layer/canvas.

A4: The wallpaper application notifies the video codec to decode the video resource. The video resource stores a decoded resource into a buffer (such as a buffer b1), and invokes a function to send the buffer b1 to the SurfaceFlinger.

The buffer b1 may include a layer name of the wallpaper layer, a status bit of the wallpaper layer, a layer stacking order of the wallpaper layer, and/or rotation parameter layer information of the wallpaper layer.

A5: The SurfaceFlinger determines whether to preprocess the wallpaper layer.

Each time the application sends a new buffer to the SurfaceFlinger, a layer recognition module may determine that a new frame is received. In an example in which a received buffer b1 stores the initial frame of the wallpaper resource, and the status bit of the wallpaper layer is "not rotated", the SurfaceFlinger may determine that preprocessing needs to be performed on the wallpaper layer. The SurfaceFlinger sends a composition request of the wallpaper layer to the GPU. The GPU rotates the wallpaper layer according to the rotation parameter, for example, rotates by 90° counterclockwise, and renders a rotated wallpaper layer on the canvas in a row-based scanning manner, to obtain a preprocessed layer. In one aspect, the GPU may store the preprocessed layer into a buffer (such as a buffer a), so as to be used for wallpaper layer composition in the (N+1)th frame. In another aspect, the GPU may perform the following A11, and use the preprocessed layer in wallpaper layer composition in the Nth frame.

It should be noted that example 1 involves two types of buffers: A first type of buffer is used to store to-be-composed layer data, for example, a buffer b1 stores metadata of a wallpaper layer, a buffer b2 stores metadata of a home screen layer, a buffer b3 stores metadata of a video layer, and a buffer b4 stores metadata of a status bar layer. A second type of buffer is used to store a preprocessed layer that has been processed. For example, the buffer a stores a wallpaper layer that is rotated by 90° counterclockwise. It should be understood that, when preprocessing needs to be performed on layers of a plurality of applications, preprocessed layers of the applications may be stored into different buffers.

A6: When a home screen element (for example, an icon) of the home screen application changes, the home screen application sends a registration request to the SurfaceFlinger. After the registration succeeds, the SurfaceFlinger starts to return a Vsync-APP signal to the home screen application. The wallpaper application notifies the SurfaceFlinger to create a blank home screen layer.

A7: The home screen application invokes a render thread to draw a home screen layer, and stores a drawn home screen layer into a buffer (for example, a buffer b2). That is, the home screen layer is a layer that is drawn according to the rotation parameter and that has been rotated (for example, rotated by 90° counterclockwise).

Then, the home screen application invokes a function to send the buffer b2 to the SurfaceFlinger. The buffer b2 may include layer information such as the layer name of the home screen layer, the status bit (rotated) of the home screen layer, and the stacking order of the home screen layer.

A8: The SurfaceFlinger determines, according to the layer information of the home screen layer, whether to preprocess the home screen layer.

Each time the application sends a new buffer to the SurfaceFlinger, the layer recognition module may determine that a new frame is received. Because the home screen layer in the buffer b2 is a rotated layer, the SurfaceFlinger may determine that the wallpaper layer does not need to be preprocessed.

Referring to the description in the foregoing embodiment, in a drawing process, the home screen application has rotated the home screen layer by 90° counterclockwise, and no further rotation is required. In principle, the SurfaceFlinger may allocate a composition task of the home screen layer to the HWC. However, because the wallpaper layer located on a lower layer of the home screen layer and the video layer located on an upper layer of the home screen layer are read by using the video codec, and the video codec does not have a rotation capability, both the wallpaper layer and the video layer are layers that have not been rotated, and the SurfaceFlinger may allocate composition tasks of the wallpaper layer, the home screen layer, and the video layer to the GPU instead of the HWC.

A9: The video application notifies the SurfaceFlinger to create a blank video layer/canvas.

A10: The video application notifies the video codec to decode the video resource. The video resource stores a decoded resource into a buffer (such as a buffer b3), and invokes a function to send the buffer b3 to the SurfaceFlinger.

The buffer b3 may include a layer name of the video layer, a status bit of the video layer, a layer stacking order of the video layer, and/or rotation parameter layer information of the video layer.

It should be noted that, because each frame of image of the video application is updated, the SurfaceFlinger may determine, according to the layer name of the video layer, that it is not necessary to determine whether preprocessing needs to be performed on the video layer, but directly compose a video frame.

For example, the SurfaceFlinger requests video composition from the GPU, and the GPU rotates the video layer according to the rotation parameter, for example, rotates by 90° counterclockwise, and clips a corner for the video layer to obtain a processed video layer. Then, the GPU may perform the following A11, and use the processed video layer for layer composition in the Nth frame.

A11: The GPU composes the wallpaper layer, the home screen layer, and the video layer, and then sends a composed layer to the HWC.

A12: When a status bar element (such as a signal strength identifier or a remaining power identifier) of the system UI changes, the system UI sends a registration request to the SurfaceFlinger. After the registration succeeds, the SurfaceFlinger starts to return a Vsync-APP signal to the system UI.

A13: The system UI notifies the SurfaceFlinger to create a blank status bar layer.

A14: The system UI invokes the render thread to draw a status bar layer, and stores a drawn status bar layer into a buffer (such as a buffer b4). That is, the status bar layer is a layer that is drawn according to the rotation parameter and that has been rotated (for example, rotated by 90° counterclockwise).

Then, the system UI invokes a function to send the buffer b4 to the SurfaceFlinger. The buffer b4 may include layer information such as a layer name of the status bar layer, a status bit (rotated) of the status bar layer, and a stacking order of the status bar layer.

A15: The SurfaceFlinger determines, according to the layer information of the status bar layer, whether to preprocess the status bar layer.

Each time the application sends a new buffer to the SurfaceFlinger, the layer recognition module may determine that a new frame is received. Because the status bar layer in the buffer b4 is a rotated layer, the SurfaceFlinger may determine that it is not necessary to preprocess the status bar layer, and send the status bar layer to the HWC.

Different from the home screen layer, the status bar layer in A15 is located on the upper layer of the wallpaper layer, the status bar layer, and the video layer. Therefore, the SurfaceFlinger can directly allocate the composition task of the status bar layer to the HWC.

A16: The HWC composes the composed layer and the status bar layer to obtain an Nth frame of image, and sends the Nth frame of image to the large screen for display.

It should be understood that when a to-be-composed wallpaper layer is an initial frame or a changed frame, the SurfaceFlinger may notify the GPU to render the rotated wallpaper layer, and send the rotated wallpaper layer to the buffer. In this way, when a same layer processing task exists subsequently, the rotated wallpaper layer in the buffer can be directly used, and the GPU does not need to rotate each wallpaper layer, thereby reducing overall power consumption and load.

### Example 2

When a folded state of a foldable-screen device changes, or a landscape/portrait state of a large screen changes, a WMS may notify a wallpaper application, a home screen application, and a video application of an updated rotation parameter. On a basis of example 1, when a window of an application changes, if the application does not obtain the updated rotation parameter, the application may still process a layer according to the rotation parameter obtained by using example 1.

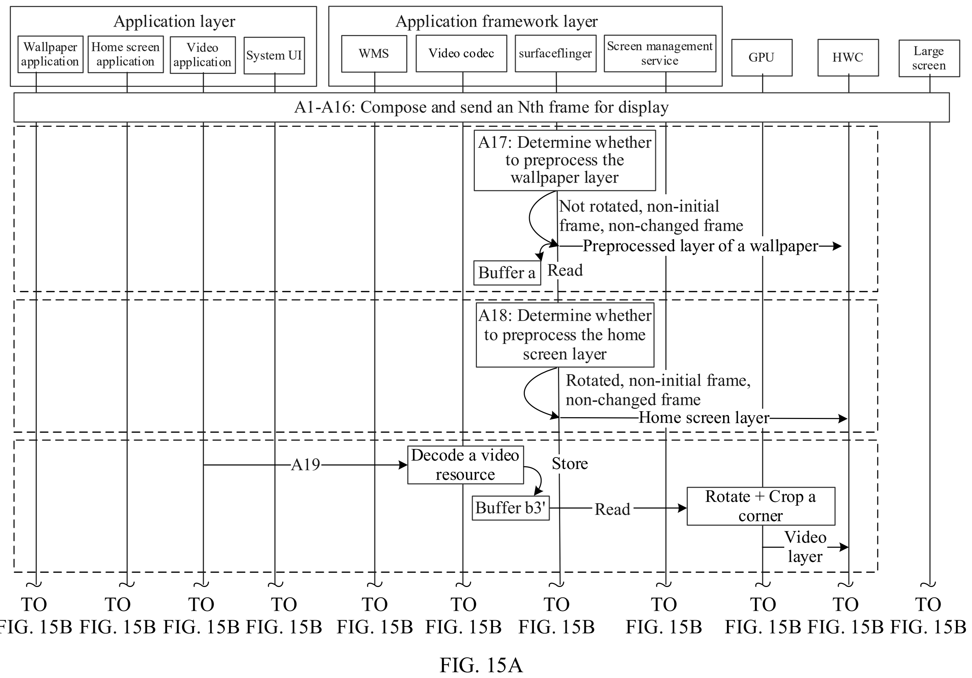

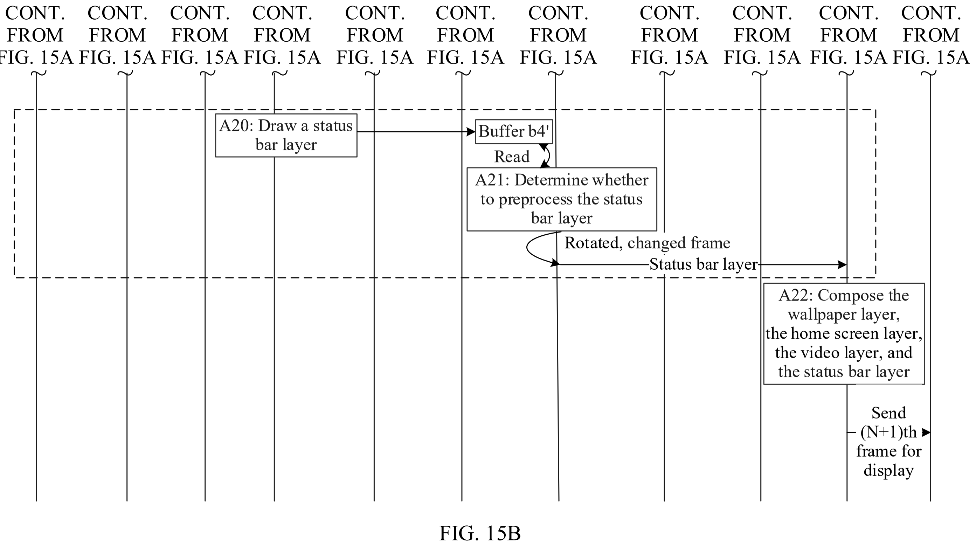

The following uses an example in which, after an Nth frame of image is composed, before an (N+1)th frame of image is composed, windows of the wallpaper application and the home screen application are not changed, and windows of the video application and a status bar application are changed, to describe a process of a method for composing an (N+1)th frame of image based on a preprocessed layer with reference to FIG. 15A and FIG. 15B.

As shown in FIG. 15A and FIG. 15B, after A1-A16, the method may further include the following A17 to A22.

A17: The SurfaceFlinger determines whether to preprocess the wallpaper layer.

Each time the application sends a new buffer to the SurfaceFlinger, the layer recognition module may determine that a new frame is received. If the SurfaceFlinger does not receive a composition task of a next wallpaper layer within preset duration after receiving a composition task of a wallpaper layer in an ith frame of image, the SurfaceFlinger may send a wallpaper layer obtained last time from the buffer b1 to a scene recognition module. Because both the buffer of the wallpaper layer in A17 and the buffer of the wallpaper layer in A5 are the buffer b1, the wallpaper resource is not the initial frame or the changed frame. In addition, a status bit of the wallpaper layer is "not rotated". Therefore, the scene recognition module recognizes that the (N+1)th frame may use the preprocessed layer, and GPU composition is not required, so that a preprocessed layer (that is, a rotated wallpaper layer) is obtained from the buffer a, and then the preprocessed layer is sent to the HWC.

A18: The home screen application determines whether to preprocess the home screen layer.

Each time the application sends a new buffer to the SurfaceFlinger, the layer recognition module may determine that a new frame is received. If the SurfaceFlinger does not receive a composition task of a next home screen layer within preset duration after receiving a composition task of a home screen layer in an ith frame of image, the SurfaceFlinger may send a home screen layer obtained last time from the buffer b2 to a scene recognition module. Because a status bit of the home screen layer is "rotated", the SurfaceFlinger may determine that the home screen layer does not need to be preprocessed, and send the home screen layer to the HWC.

It should be noted that, different from A8 in which the SurfaceFlinger sends the home screen layer to the GPU, because the preprocessed layer of the wallpaper is used in A17, the GPU does not need to process the wallpaper layer. In this way, in A18, the home screen layer located between the wallpaper layer and the video layer does not need to use GPU composition, and the SurfaceFlinger may directly send the home screen layer to the HWC.

A19: The video application notifies the video codec to decode the video resource. The video resource stores a decoded resource into a buffer (such as a buffer b3'), and invokes a function to send the buffer b3' to the SurfaceFlinger. The SurfaceFlinger requests video composition from the GPU, and the GPU rotates the video layer according to the rotation parameter, for example, rotates by 90° counterclockwise, and clips a corner for the video layer to obtain a processed video layer. The GPU sends the video layer to the HWC.

It should be noted that the buffer b3' and the buffer b3 in A10 are different buffers. For example, the buffer b3 is used to store the first frame of the video, and the buffer b3' is used to store the second frame of the video.

For a specific implementation of A19, refer to the descriptions of A10. Details are not described herein again.

A20: When the status bar element of the system UI changes again, the system UI invokes the render thread again to draw the status bar layer, and stores the drawn status bar layer into a buffer (for example, a buffer b4'). That is, the status bar layer is a layer that is drawn according to the rotation parameter and that has been rotated (for example, rotated by 90° counterclockwise).

Then, the system UI invokes a function to send the buffer b4' to the SurfaceFlinger.

It should be noted that the buffer b4' and the buffer b4 in A14 are different buffers.

A21: The SurfaceFlinger determines, according to the layer information of the status bar layer, whether to preprocess the status bar layer.

Each time the application sends a new buffer to the SurfaceFlinger, the layer recognition module may determine that a new frame is received. Because the status bar layer in the buffer b4' is a rotated layer, the SurfaceFlinger may determine that it is not necessary to preprocess the status bar layer, and send the status bar layer to the HWC.

A22: The HWC composes the preprocessed layer (that is, the wallpaper layer), the home screen layer, the video layer, and the status bar layer to obtain an (N+1)th frame of image, and sends the (N+1)th frame of image to the large screen for display.

It should be understood that, because the GPU sends the rotated wallpaper layer to the buffer a in advance, when a same layer processing task exists subsequently, the rotated wallpaper layer in the buffer a may be directly used to finally generate the (N+1)th frame of image, thereby reducing overall power consumption and improving overall performance.

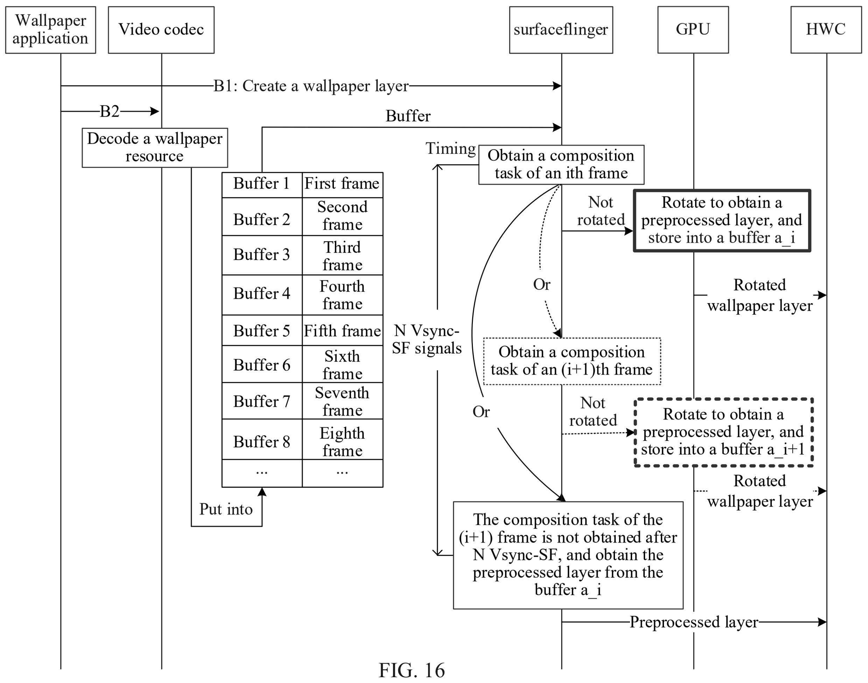

In the foregoing examples 1 and 2, a wallpaper image obtained from the buffer b1 may be a last frame of a video resource. Generally, after the large screen is turned on, the large screen starts to play from the first frame of the video resource until the last frame of the video resource, and then the large screen keeps displaying the last frame of the video resource. It should be understood that during playback from the first frame of the video resource to the last frame of the video resource, the wallpaper is updated frequently, and the preprocessed layer may not need to be used in a next frame of each frame of wallpaper. After the last frame of the video resource is played to, the wallpaper basically remains unchanged, and the preprocessed layer may need to be used subsequently. For this reason, with reference to FIG. 16, an embodiment of this application provides another layer composition method.

B1: A wallpaper application notifies the SurfaceFlinger to create a wallpaper layer.

B2: The wallpaper application notifies a video codec to decode a video resource.

It is assumed that a video resource of a wallpaper includes M frames. When a large screen is turned on, the wallpaper application may notify the video codec to decode the video resource. The video codec first stores a decoded first frame into a Buffer 1, stores a decoded second frame into a Buffer 2, stores a decoded third frame into a Buffer 3, ..., and by analogy, directly store a last frame into a Buffer M. The video codec then sends each Buffer in sequence to the SurfaceFlinger. Each Buffer may include a layer name of the wallpaper layer, a status bit of the wallpaper layer, a layer stacking order of the wallpaper layer, and/or rotation parameter layer information of the wallpaper layer. Each time obtaining one Buffer (one Buffer is equivalent to one composition task), the SurfaceFlinger may perform the following determining step:

The SurfaceFlinger obtains an ith composition task and starts timing. Because a status identifier of a wallpaper resource of the ith composition task is "not rotated", the SurfaceFlinger determines that the wallpaper layer needs to be preprocessed. The SurfaceFlinger sends a composition request of the wallpaper layer to the GPU. The GPU rotates the wallpaper layer according to the rotation parameter, for example, rotates by 90° counterclockwise, to obtain a preprocessed layer of the ith composition task. The GPU stores the preprocessed layer into a buffer a_i, and sends the preprocessed layer of the ith composition task to the HWC.

If the SurfaceFlinger obtains an (i+1)th composition task before timing duration reaches maximum timing duration (for example, N Vsync-SF signal periods, where N is a positive integer), it may be determined that the wallpaper is updated frequently, and the preprocessed layer in the buffer a_i does not need to be used. In one aspect, the preprocessed layer in the buffer a_i may be cleared. In another aspect, the SurfaceFlinger starts re-timing. Because a status identifier of a wallpaper resource of the (i+1)th composition task is "not rotated", the SurfaceFlinger determines that the wallpaper layer needs to be preprocessed. The SurfaceFlinger sends a composition request of the wallpaper layer to the GPU. The GPU rotates the wallpaper layer according to the rotation parameter, for example, rotates by 90° counterclockwise, to obtain a preprocessed layer of the (i+1)th composition task. Then, the GPU stores the preprocessed layer of the (i+1)th composition task into a buffer a_i+1, and in addition, sends the preprocessed layer of the (i+1)th composition task to the HWC.

If the SurfaceFlinger does not obtain the (i+1)th composition task before the timing duration reaches the maximum timing duration (for example, N Vsync-SF signal periods), it may be determined that the wallpaper layer is not updated, and the preprocessed layer in the buffer a_i needs to be used. The SurfaceFlinger reads the preprocessed layer of the ith composition task from the buffer a_i, and sends the preprocessed layer to the HWC.

It should be understood that when the wallpaper resource is a video resource, during playback from a first frame of the video resource to a last frame of the video resource, the wallpaper is updated frequently, and after rotating each frame of wallpaper, the GPU may temporarily store the wallpaper into a buffer. If no new task is received within N Vsync-SF signal periods after playing to a frame, it indicates that a last frame of the video resource has been played to, and the preprocessed layer in the buffer may be used.

In the foregoing embodiments, the preprocessing operation performed by the GPU is rotating the wallpaper. The wallpaper application may not refresh the wallpaper in dozens of seconds, several minutes, or even several hours. Therefore, after one time of preprocessing is performed on the wallpaper, the preprocessed wallpaper can be reused for a long time, and a power consumption gain is relatively high. Based on a preprocessing principle, this application further provides a generalized layer composition method. When a plurality of applications send images to the SurfaceFlinger, and refresh rates of the plurality of applications are different, the SurfaceFlinger determines a maximum refresh rate as a system frame rate. In a process of sending an image by a first application, if a composition requirement of a first application layer exceeds a capability range of the HWC hardware module (for example, corner clipping, a quantity of layers, a conversion format, a layer size, a zoom ratio, and window blur), the GPU is used to preprocess the first application layer. A refresh rate of the first application is less than the system frame rate.

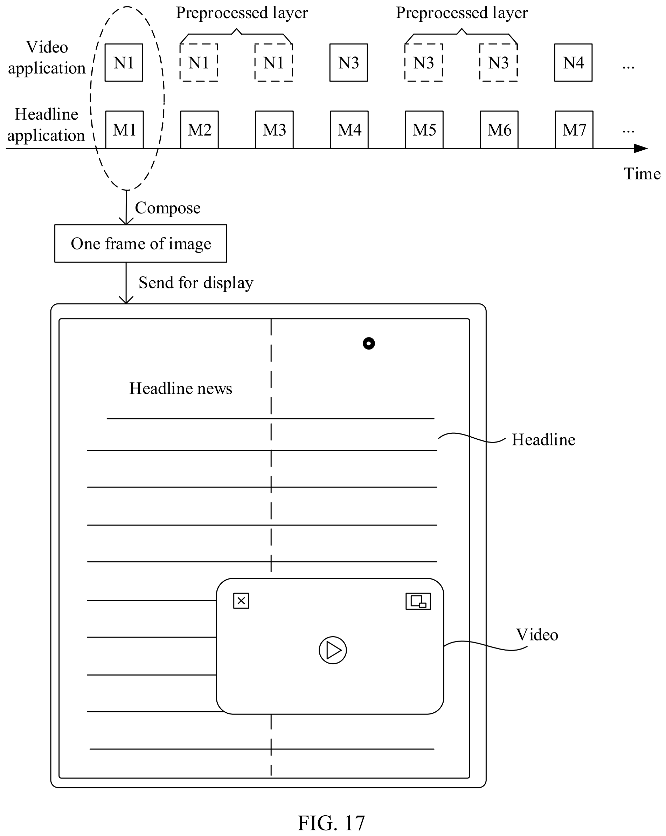

For example, FIG. 17 is a schematic diagram of a scene of applying a preprocessed layer according to an embodiment of this application. A refresh rate of a video application is 30 fps, and a refresh rate of a headline application is 120 fps. To keep the refresh rate of each application consistent, the SurfaceFlinger determines 120 fps as a system frame rate. In this way, both the video application and the headline application send an image to the SurfaceFlinger according to the refresh rate of 120 fps. In this case, each time the headline application refreshes three frames, such as a frame M1, a frame M2, and a frame M3, the video application also needs to refresh three frames N1. With reference to the description in the foregoing embodiment, because a video layer requires being rotated by an angle and having a corner clipped by the GPU, if all three frames N1 require being rotated by an angle and having a corner clipped by the GPU, overall power consumption is relatively high. Therefore, the first frame N1 may be preprocessed to obtain a preprocessed layer by using the layer composition method provided in this embodiment of this application, and then the second frame N1 and the third frame N1 reuse the preprocessed layer, thereby reducing overall power consumption of a foldable-screen device and improving overall performance.

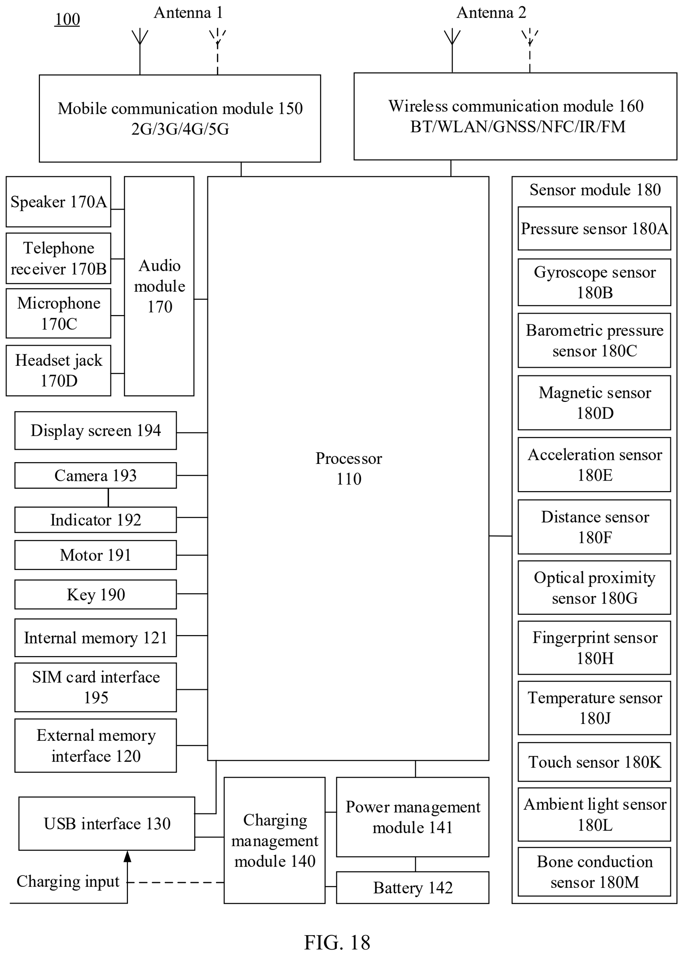

For example, FIG. 18 is a schematic diagram of a hardware structure of a foldable-screen device 100 according to an embodiment of this application.

As shown in FIG. 18, the foldable-screen device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a SIM card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include a central processing unit (central processing unit, CPU), a graphics processing unit (graphics processing unit, GPU), an application processor (application processor, AP), an image signal processor (image signal processor, ISP), a neural-network processing unit (neural-network processing unit, NPU), a modem (modem), a data processing unit (data processing unit, DPU), and/or a baseband processor (baseband processor).

The CPU is a unit for final execution of information processing and program running, and mainly works for processing instructions, performing operations, controlling time, processing data, and the like. The CPU may include a controller, an arithmetic unit, a cache memory, and a bus for connecting these components. The controller is a nerve center and a command center of the foldable-screen device 100. The controller may generate an operation control signal based on instruction operation code and a timing signal, to complete control of instruction fetching and instruction execution. The arithmetic unit is a component that performs various arithmetic and logical operations. The cache may store instructions or data just used or cyclically used by the processor 110.

The GPU is also referred to as a display core, a visual processor, or a display chip, and is a microprocessor for graphics and image processing. The GPU is connected to the display screen 194, the AP, and the CPU. The GPU may be configured to perform complex mathematical and geometric calculation, floating-point operation, and parallel calculation, and may be further configured to perform graphics rendering. The GPU reduces the graphics card's dependence on the CPU, especially when processing 3D graphics. The GPU uses core technologies such as cubic environment material mapping and vertex blending. Therefore, the GPU performs some of the work originally done by the CPU.

The internal memory 121 may be configured to store computer-executable program code, and the executable program code includes instructions. The processor 110 runs the instructions stored in the internal memory 121, to perform various function applications and data processing of the foldable-screen device 100. The internal memory 121 may include a program storage area and a data storage area. The program storage area may store an operating system and an application required by at least one function. The data storage area may store a configuration file of each application and data created in a use process of the foldable-screen device 100.

The foldable-screen device 100 may implement an audio function by using the audio module 170, the speaker 170A, the receiver 170B, the microphone 170C, the headset jack 170D, the AP, and the like.

The display screen 194 includes the large screen and the small screen shown in FIG. 2A-FIG. 2C or FIG. 3A-FIG. 3C.

It may be understood that the hardware structure shown in this embodiment of this application does not constitute a specific limitation on the foldable-screen device 100. In some other embodiments, the foldable-screen device 100 may include more or fewer components than those shown in the figure, combine some components, split some components, or have different component arrangements. The components shown in FIG. 18 may be implemented by hardware, software, or a combination of software and hardware.

An embodiment of this application further provides a terminal device, for example, a foldable-screen device, including a processor, and the processor is coupled to a memory. The processor is configured to execute a computer program or instructions stored in the memory, so as to implement the method in the foregoing embodiments.

An embodiment of this application further provides a computer-readable storage medium. The computer-readable storage medium stores computer instructions, and when the computer-readable storage medium is run on a computer, the computer is enabled to perform the method described above. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any usable medium that can be accessed by a computer, or a data storage device, for example, a server or a data center, integrating one or more usable media. The available medium may be a magnetic medium (for example, a floppy disk, a hard disk, or a magnetic tape), an optical medium, a semiconductor medium (for example, a solid state disk (solid state disk, SSD)), or the like.

An embodiment of this application further provides a computer program product. The computer program product includes computer program code, and when the computer program code is run on a computer, the computer is enabled to perform the method in the foregoing embodiments.

An embodiment of this application further provides a chip. The chip is coupled to a memory. The chip is configured to read and execute a computer program or instructions stored in the memory, to perform the method in the foregoing embodiments. The chip may be a general-purpose processor or may be a dedicated processor. It should be noted that the chip may be implemented by using the following circuits or devices: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

The foldable-screen device, the computer-readable storage medium, the computer program product, and the chip provided in the embodiments of this application are all configured to perform the method provided above. Therefore, for beneficial effects that can be achieved by the foldable-screen device, the computer-readable storage medium, the computer program product, and the chip, refer to the beneficial effects corresponding to the method provided above. Details are not described herein again.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A layer composition method, wherein the method is applied to a terminal device, the terminal device comprises a graphics processing unit GPU, a hardware composer HWC, a large screen, and a small screen, and the method comprises:
obtaining a first wallpaper layer when the terminal device is at a first folding angle;
composing the first wallpaper layer, a first home screen layer, and a first status bar layer into a first image;
displaying the first image on the small screen;
obtaining the first wallpaper layer in response to an operation of adjusting the terminal device from the first folding angle to a second folding angle by a user, wherein the second folding angle is greater than the first folding angle;
rotating the first wallpaper layer by using the GPU, to obtain a first preprocessed layer, wherein a height of the first wallpaper layer is greater than a maximum rotation height supported by the HWC;
storing the first preprocessed layer into a first buffer;
composing the first preprocessed layer, a second home screen layer, and a second status bar layer into a second image;
displaying the second image on the large screen;
obtaining the first preprocessed layer from the first buffer;
composing the first preprocessed layer, a third home screen layer, and a third status bar layer into a third image; and
displaying the third image on the large screen.

2. The method according to claim 1, wherein
the obtaining a first wallpaper layer comprises:
obtaining a first Vsync-SF signal; and
if a second buffer has been obtained before the first Vsync-SF signal is obtained, obtaining the first wallpaper layer from the second buffer; and
the obtaining the first preprocessed layer from the first buffer comprises:
obtaining a second Vsync-SF signal; and
if no other buffer is obtained before the second Vsync-SF signal is obtained, obtaining the first preprocessed layer from the first buffer.

3. The method according to claim 2, wherein after the obtaining a second Vsync-SF signal, the method further comprises:
if a third buffer is obtained before the second Vsync-SF signal is obtained, obtaining a second wallpaper layer from the third buffer;
rotating the second wallpaper layer by using the GPU to obtain a second preprocessed layer, wherein a height of the second wallpaper layer is greater than the maximum rotation height supported by the HWC;
storing the second preprocessed layer into a fourth buffer;
composing the second preprocessed layer, a fourth home screen layer, and a fourth status bar layer into a fourth image; and
displaying the fourth image on the large screen.

4. The method according to any one of claims 1 to 3, wherein
a row scanning direction of the small screen is parallel to a first border, and a column scanning direction of the small screen is parallel to a second border; and
a row scanning direction of the large screen is parallel to the second border, and a column scanning direction of the large screen is parallel to the first border;
wherein the first border and the second border are two adjacent borders on a body of the terminal device, and a length of the first border is less than a length of the second border.

5. A layer composition method, wherein the method is applied to a terminal device, the terminal device comprises a GPU, an HWC, and a display screen, and the method comprises:
obtaining a first wallpaper layer, wherein a height of the first wallpaper layer is greater than a maximum rotation height supported by the HWC;
rotating the first wallpaper layer by using the GPU to obtain a first preprocessed layer;
composing the first preprocessed layer, a first home screen layer, and a first status bar layer into a first image;
storing the first preprocessed layer into a first buffer;
displaying the first image on the display screen;
obtaining the first preprocessed layer from the first buffer;
composing the first preprocessed layer, a second home screen layer, and a second status bar layer into a second image; and
displaying the second image on the display screen.

6. The method according to claim 5, wherein
the obtaining a first wallpaper layer comprises:
obtaining a first Vsync-SF signal; and
if a second buffer has been obtained before the first Vsync-SF signal is obtained, obtaining the first wallpaper layer from the second buffer; and
the obtaining the first preprocessed layer from the first buffer comprises:
obtaining a second Vsync-SF signal; and
if no other buffer is obtained before the second Vsync-SF signal is obtained, obtaining the first preprocessed layer from the first buffer.

7. The method according to claim 6, wherein after the obtaining a second Vsync-SF signal, the method further comprises:
if a third buffer is obtained before the second Vsync-SF signal is obtained, obtaining a second wallpaper layer from the third buffer;
rotating the second wallpaper layer by using the GPU to obtain a second preprocessed layer, wherein a height of the second wallpaper layer is greater than the maximum rotation height supported by the HWC;
storing the second preprocessed layer into a fourth buffer;
composing the second preprocessed layer, a third home screen layer, and a third status bar layer into a third image; and
displaying the third image on the display screen.

8. The method according to any one of claims 5 to 7, wherein
a row scanning direction of the display screen is parallel to a second border, and a column scanning direction of the display screen is parallel to a first border;
wherein the first border and the second border are two adjacent borders on a body of the terminal device, and a length of the first border is less than a length of the second border.

9. The method according to claim 6, wherein
the obtaining the first wallpaper layer from the second buffer comprises:
obtaining the first wallpaper layer and layer information of the first wallpaper layer from the second buffer; wherein the layer information of the first wallpaper layer comprises a status bit and a rotation parameter, the status bit is used to indicate that a rotation operation has not been performed on the first wallpaper layer, and the rotation parameter is used to indicate a rotation direction and a rotation angle of the first wallpaper layer; and
the rotating the first wallpaper layer by using the GPU to obtain a first preprocessed layer comprises:
rotating the first wallpaper layer by using the GPU based on the status bit and the rotation parameter, to obtain the first preprocessed layer.

10. The method according to claim 9, wherein before the obtaining a first wallpaper layer, the method further comprises:
determining the rotation parameter when a preset condition is met;
sending the rotation parameter to a wallpaper application of the terminal device; and
generating the status bit by using the wallpaper application, and storing the status bit, the rotation parameter, and the first wallpaper layer into the second buffer;
wherein the preset condition comprises any one of the following:
the display screen switches from a landscape state to a portrait state; and
the terminal device switches from a folded state to an unfolded state.

11. The method according to claim 10, wherein the method further comprises:
enabling a landscape/portrait function in response to a user operation; wherein the landscape/portrait function allows display in a first direction when the terminal device is in the landscape state, and display in a second direction when the terminal device is in the portrait state; and a difference between the first direction and the second direction is 90° or 270° clockwise.

12. The method according to claim 11, wherein when the terminal device is in the landscape state, an included angle between a first border of a body of the terminal device and a ground plane is greater than an included angle between a second border of the body of the terminal device and the ground plane; and when the terminal device is in the portrait state, the included angle between the first border and the ground plane is less than or equal to the included angle between the second border and the ground plane;
wherein a length of the first border is less than a length of the second border.

13. The method according to claim 9, wherein the layer information of the first wallpaper layer further comprises a layer stacking order of the first wallpaper layer;
the composing the first preprocessed layer, a first home screen layer, and a first status bar layer into a first image comprises: stacking the first preprocessed layer, the first home screen layer, and the first status bar layer into the first image according to the layer stacking order of the first wallpaper layer, a layer stacking order of the first home screen layer, and a layer stacking order of the first status bar layer; and
the composing the first preprocessed layer, a second home screen layer, and a second status bar layer into a second image comprises: stacking the first preprocessed layer, the second home screen layer, and the second status bar layer into the second image according to the layer stacking order of the first wallpaper layer, a layer stacking order of the second home screen layer, and a layer stacking order of the second status bar layer.

14. A terminal device, comprising a processor and a memory coupled to the processor;
wherein the memory stores instructions, and when the processor invokes the instructions, the terminal device is enabled to perform the layer composition method according to any one of claims 1 to 13.

15. A computer-readable storage medium, wherein the computer-readable storage medium stores a computer program, and when the computer program runs on a terminal device, the terminal device is enabled to perform the layer composition method according to any one of claims 1 to 13.
